# EUROPEAN PATENT APPLICATION

(11) **EP 3 287 963 A1**
(43) Date of publication of application: **28.02.2018**
(21) Application number: 17197184.9
(22) Date of filing: 26.11.2008
(51) Int. Cl.: G06Q 10/06, B64F 5/00, G06F 8/65, G06Q 10/00

(54) **METHOD AND APPARATUS FOR LOADABLE SOFTWARE AIRPLANE PARTS (LSAP) DISTRIBUTION**

(30) Priority: 27.11.2007 US 990434 P; 27.11.2007 US 990492 P; 27.11.2007 US 990471 P; 27.11.2007 US 990421 P; 27.11.2007 US 990442 P; 27.11.2007 US 990531 P; 27.11.2007 US 990525 P; 21.11.2008 US 275651; 24.11.2008 US 276516; 24.11.2008 US 276728; 24.11.2008 US 277182; 24.11.2008 US 276587; 24.11.2008 US 277174; 24.11.2008 US 276549
(62) Divisional of application: 08865578.2
(71) Applicant: The Boeing Company, Chicago, IL 60606-1596 (US)
(72) Inventor: BECK, Walter, R., Salkum, WA Washington 98582 (US); RODGERS, Michael, K., Kirkland, WA Washington 98033 (US); WALKER, Olga, C., Mercer Island, WA Washington 98040 (US); FUCHS, Ludwin, Seattle, WA Washington 98109 (US); ENGDAHL, Stanley, W., Everett, WA Washington 98205 (US); PARKER, James, M., Arlington, WA Washington 98223 (US); XUE, Ping, Redmond, WA Washington 98052 (US); KIMBERLY, Greg, A., Seattle, WA Washington 98103 (US); GOULD, Todd, W., Marysville, WA Washington 98271 (US); MCLAIN, Fred, J., Bothell, WA Washington 98021 (US); HARNISH, Marshall, W., Mercer Island, WA Washington 98040 (US); HENDRICKSON, Terrill, W., Bothell, WA Washington 98021 (US); SCHIFTER, Leonard, H., Snohomish, WA Washington 98296 (US); MORGAN, Christopher, J., Shoreline, WA Washington 98177 (US); LANE, Kristine, K., Duvall, WA Washington 98019 (US); YOUNG, Dawnray, H., Camas, WA Washington 98607 (US)
(74) Representative: Morrall, Jonathan Ian McLachlan

(57) **Abstract**

A computer implemented method and apparatus for managing software aircraft parts. A software aircraft part management apparatus comprises a library, a receiving module, a proxy server, an on board electronic distribution system on an aircraft, and a portable software maintenance tool. The library on the ground data processing system stores and manages software aircraft parts for aircraft. The receiving module is capable of receiving the software aircraft parts from suppliers and sending the software aircraft parts to the library. The proxy server is in communication with the library and is capable of distributing software to a plurality of aircraft clients. The onboard electronic distribution system is an aircraft client and is capable of receiving software aircraft parts for the aircraft from the library through the proxy server. A computer implemented method is used for transferring information with the aircraft. A connection is established between an onboard electronic distribution system executing in an aircraft data processing system in the aircraft and an on ground component. The on ground component may be located in a ground network in a software application, such as a software maintenance tool or a proxy server application.

## Description

### BACKGROUND INFORMATION

### 1. Field:

The present disclosure relates generally to an improved data processing system and in particular to a method and apparatus for managing software for aircraft. Still more particularly, the present disclosure relates to a computer implemented method, apparatus, and computer usable program product for managing loadable software airplane parts, as well as other documents related to the parts known as part usage assets or simply as assets.

### 2. Background:

Modern aircraft are extremely complex. For example, an aircraft may have many types of electronic systems on board. A particular electronic system on an aircraft may also be referred to as a line replaceable unit (LRU). Each line replaceable unit may further take on various forms. A line replaceable unit may be, for example, without limitation, a flight management system, an autopilot, an in flight entertainment system, a communications system, a navigation system, a flight controller, a flight recorder, and a collision avoidance system. Line replaceable units may use software or programming to provide the logic or control for various operations and functions. The software used in these line replaceable units is commonly treated as parts in the airline industry. In particular, a software application for use in a line replaceable unit on an aircraft may also be tracked separately and referred to as a loadable software aircraft part (LSAP) or software aircraft parts. This software application also may be considered part of an airplane's configuration as defined by the Federal Aviation Agency (FAA).

When an entity (i.e. an airline, maintenance, repair and overhaul service provider ("MRO"), or military squadron) receives an aircraft, software aircraft parts are typically already installed in the line replaceable units in the aircraft. An airline, for example, may also receive copies of these software aircraft parts in case the parts need to be reinstalled or reloaded into the line replaceable units in the aircraft that have failed and have been replaced. Further, the airline also may receive updates to the loadable software aircraft parts from time to time. These updates may include additional features not present in the currently installed software aircraft parts, and may be considered upgrades to one or more line replaceable units.

The current system for managing, handling, and distributing loadable software aircraft parts is cumbersome and time consuming. Currently, software aircraft parts are stored on physical media, such as diskettes, compact discs, or digital versatile discs (DVD). An airline receives a delivery of the physical media and stores that physical media in a location, such as, for example, filing cabinets. The media also may be kept on board the aircraft in many cases.

Maintenance operations may be performed on the aircraft to install or reinstall software aircraft parts from time to time. When a software aircraft part is needed, the media containing that part must be located and retrieved for use by maintenance personnel. This type of storage and retrieval system and process takes up both space and time.

Thus, it would be advantageous to have an improved method and apparatus for distributing software aircraft parts that solves the above described problems.

### SUMMARY

The different advantageous embodiments provide a computer implemented method and apparatus for managing software aircraft parts. In one advantageous embodiment, a software aircraft part management apparatus comprises a library, a receiving module, a proxy server, an onboard electronic distribution system on an aircraft, and a portable software maintenance tool. The library on the ground data processing system stores and manages a plurality of software aircraft parts for a plurality of aircraft. The receiving module is capable of receiving the plurality of software aircraft parts from suppliers and sending the plurality of software aircraft parts to the library for storage. The proxy server is in communication with the library and is capable of distributing software to a plurality of aircraft clients. The onboard electronic distribution system is an aircraft client and is capable of receiving software aircraft parts for the aircraft from the library through the proxy server. The portable software maintenance tool provides an alternate route to send the software aircraft part to the onboard electronic distribution system for the aircraft.

In another advantageous embodiment, an apparatus comprises a library, a proxy server, and an onboard electronic distribution system. The library is on a data processing system and stores and manages aircraft parts. The proxy server is capable of receiving a software aircraft part from the library for distribution to a set of aircraft. The onboard electronic distribution system for an aircraft is capable of distributing the software aircraft part received from the proxy server to a line replaceable unit in the aircraft.

In yet another advantageous embodiment, a computer implemented method is used to managing a plurality of software aircraft parts. A software aircraft part is stored in a library. An aircraft is identified for the software aircraft part to form an identified aircraft. The software aircraft part is sent to a proxy server. The software aircraft part is sent from the proxy server to an onboard electronic distribution system on the identified aircraft.

The advantageous embodiments provide a computer implemented method, apparatus, and computer program product for processing software aircraft parts. In one advantageous embodiment, a method is used for processing software aircraft parts. An incoming crate containing a software aircraft part is received from a source outside of the software aircraft part management apparatus. A set of signatures is validated for the incoming crate and the software aircraft part. Responsive to the set of signatures being valid, the incoming crate is unpacked. The contents of the incoming crate are displayed. The software aircraft part is unpacked to obtain the software aircraft part. Responsive to a request to upload the stored software aircraft part to a library in a software aircraft part management apparatus, a determination is made as to whether the stored software aircraft part meets a policy. If the stored software aircraft part meets the policy, the stored software aircraft part is signed to form a signed software aircraft part. The signed software aircraft part is placed in a crate. The crate containing the signed software aircraft part is signed to form a signed crate wherein signatures for the signed software aircraft part and the signed crate are different from the set of signatures in the incoming crate. The signed crate is sent to the library in the software aircraft part management apparatus.

In another advantageous embodiment, a computer implemented method is used for processing configuration items. A crate containing a configuration item is received to form a received crate. A determination is made as to whether a set of signatures for the crate and the configuration item are valid. Responsive to a determination that the set of signatures are valid, the configuration item is stored.

In still another advantageous embodiment, a data processing system comprises a bus, a storage device, and a processor unit. The storage device is connected to the bus and includes program code. The processor unit is connected to the bus and is capable of executing the program code to receive an incoming crate containing a software aircraft part from a source outside of a software aircraft part management apparatus, validate a set of signatures for the incoming crate and the software aircraft part, unpack the incoming crate in response to the set of signatures being valid, display contents of the incoming crate, storing the software aircraft part, determine whether the software aircraft part meets a policy in response to a request to upload the software aircraft part to a library in the software aircraft part management apparatus, sign the software aircraft part to form a signed software aircraft part in response to the software aircraft part meeting the policy, place the signed software aircraft part in a crate, sign the crate containing the signed software aircraft part to form a signed crate wherein signatures for the signed software aircraft part and the signed crate are different from the set of signatures in the incoming crate, and send the signed crate to the library in the software aircraft part management apparatus.

The different advantageous embodiments provide a computer implemented method, apparatus, and computer program product for managing software aircraft parts. In one advantageous embodiment, a method includes retrieving a set of software aircraft parts and metadata about the set of software aircraft parts from a library in an aircraft network data processing system to form a set of retrieved software aircraft parts. The set of software aircraft parts is stored in a file system. Metadata is stored in a database. The set of software aircraft parts and the metadata is sent to an onboard electronic distribution system, a communications link between an on ground component interface, and the onboard electronic distribution system. Status information about activity on the communications link is maintained.

In another advantageous embodiment, an apparatus comprises, a file system, a database, a set of software aircraft parts stored in the file system, a set of commands stored in the database, an on ground component, a control process, and a data processing system. The on ground component is capable of exchanging information with a plurality of onboard electronic distribution systems on a plurality of aircraft. The control process, is capable of receiving the set of commands and the set of software aircraft parts from a library and sending the set of commands and the set of software aircraft parts to a plurality of aircraft. The file system, the database, the set of software aircraft parts, the set of commands, the on ground component, and the control process are software components on the data processing system.

In yet another advantageous embodiment, a computer program product comprises a computer readable media and program code stored on the computer readable media. Program code is present for retrieving a set of software aircraft parts and metadata about the set of software aircraft parts from a library in an aircraft network data processing system to form a set of retrieved software aircraft parts. Program code is stored on the computer readable media for storing the set of software aircraft parts in a file system. Program code also is present for storing the metadata in a database. Program code is stored on the computer readable media for sending the set of software aircraft parts and the metadata to an onboard electronic distribution system, a communications link between an on ground component interface, and the onboard electronic distribution system. Program code is present for maintaining status information about activity on the communications link.

The different advantageous embodiments provide a computer implemented method, apparatus, and computer program code for processing commands in a network data processing system. In one advantageous embodiment, a process creates a set of commands for an aircraft in a plurality of aircrafts. The set of commands is stored in a set of queues in a library in the network data processing system to form a stored set of commands. Responsive to an event, the stored set of commands is sent to a proxy server application executing on the network data processing system to form a distributed set of commands. A connection is established between the proxy server application and an onboard electronic distribution system executing on an aircraft data processing system on the aircraft. The distributed set of commands is requested from the proxy server application by the onboard electronic distribution system. The distributed set of commands is received from the proxy server application by the onboard electronic distribution system to form a received set of commands. The received set of commands is processed by the onboard electronic distribution system to form a processed set of commands. A set of software aircraft parts is forwarded to a set of target data processing systems on the aircraft using the processed set of commands if the set processed of commands are a set of uplink commands.

In another advantageous embodiment, a computer implemented method identifies a set of commands in a library in a network data processing system to form an identified set of commands. The identified set of commands is sent to a proxy server application executing on the network data processing system to form a distributed set of commands. A connection is established between the proxy server application and an onboard electronic distribution system executing on an aircraft data processing system on an aircraft. The distributed set of commands is sent from the proxy server application to the onboard electronic distribution system to form a received set of commands over the connection. The received set of commands is processed by the onboard electronic distribution system to form a processed set of commands. A stored set of software aircraft parts located on the aircraft data processing system is sent to a set of target data processing systems on the aircraft using the processed set of commands if the processed set of commands is a set of uplink commands.

In yet another advantageous embodiment, a computer program product comprises a computer readable media and program code stored on the computer readable media. The program code includes program code for creating a set of commands for an aircraft in a plurality of aircrafts and program code for storing the set of commands in a set of queues in a library in the network data processing system to form a stored set of commands. The program code also includes program code responsive to an event, for sending the stored set of commands to a proxy server application executing on the network data processing system to form a distributed set of commands. The program code also includes program code for establishing a connection between the proxy server application and an onboard electronic distribution system executing on an aircraft data processing system on the aircraft and program code for requesting distributed set of commands from the proxy server application by the onboard electronic distribution system. The program code includes program code for receiving the distributed set of commands from the proxy server application by the onboard electronic distribution system to form a received set of commands and program code for processing the received set of commands by the onboard electronic distribution system to form a processed set of commands. The program code also includes program code for forwarding a set of software aircraft parts to a set of target data processing systems on the aircraft using the processed set of commands if the set processed of commands are a set of uplink commands.

The different advantageous embodiments provide a computer implemented method, apparatus, and computer program product for managing software aircraft parts. In one advantageous embodiment, a method is used to establish a connection between a portable data processing system and a source through a ground network to form an established connection. A set of uplink commands are retrieved from the source through the established connection. A set of software aircraft parts corresponding to the set of uplink commands are retrieved from the source through the established connection to form a set of retrieved software aircraft parts. The set of retrieved software aircraft parts are stored in a portable data processing system to form a set of stored software aircraft parts. The portable data processing system with the set of stored software aircraft parts is disconnected from the ground network. The portable data processing system with the set of stored software aircraft parts is connected to an aircraft network in an aircraft. An uplink command is issued from the set of uplink commands to the aircraft network through an on ground component in the portable data processing system. A stored software aircraft part corresponding to the uplink command is sent to the aircraft network through the on ground component.

In another advantageous embodiment, an apparatus comprises a database, a file system, a library service, a manager, and a portable data processing system. The database is capable of storing a set of commands an the file system is capable of storing a set of software aircraft parts. The library service is capable of communicating with a source selected from one of a library and a proxy server application, an on ground component capable of a direct connection with an aircraft data processing system in an aircraft network. The manager is capable of receiving the set of commands and the set of software aircraft parts from the source in a ground network through the library service, disconnecting from the source, and sending the set of commands and the set of software aircraft parts to the aircraft data processing system in the aircraft network through the on ground component. The portable data processing system is capable of establishing a communications link to the ground network and the aircraft network, wherein the library service, the on ground component, the database, and the file system are located on the portable data processing system.

In still another advantageous embodiment, a computer program product comprises computer recordable storage media and program code stored on the computer recordable storage media. the program code includes code for establishing a connection between a portable data processing system and a source through a ground network to form an established connection. The program code also includes code for retrieving a set of uplink commands from the source through the established connection and for retrieving a set of software aircraft parts corresponding to the set of uplink commands from the source through the established connection to form a set of retrieved software aircraft parts. The program code includes code for storing the set of retrieved software aircraft parts in a portable data processing system to form a set of stored software aircraft parts. The program code has code for disconnecting the portable data processing system with the set of stored software aircraft parts from the ground network and for connecting the portable data processing system with the set of stored software aircraft parts to an aircraft network in an aircraft. The program code has for issuing an uplink command from the set of uplink to the aircraft network through an on ground component in the portable data processing system and for sending a stored software aircraft part corresponding to the uplink command to the aircraft network through the on ground component.

The different advantageous embodiments provide a computer implemented method, apparatus, and computer program product for transferring information with an aircraft. In one advantageous embodiment, a computer implemented method is used for transferring information with the aircraft. A connection is established between an onboard electronic distribution system executing in an aircraft data processing system in the aircraft and an on ground component. Responsive to a request for a command from the on ground component made through the connection, the command for execution by the onboard electronic distribution system is identified to form an identified command. The identified command is sent to the onboard electronic distribution system from the on ground component. A transaction identifier is assigned to the command. A status of a transaction associated with the command is maintained on the onboard electronic distribution system and the on ground component using the transaction identifier. An uplink is initiated by the on ground component. A software aircraft part is sent to the onboard electronic distribution system from the on ground component to perform the uplink. A status of a transfer of the software aircraft part on ground component is stored.

In another advantageous embodiment, a computer implemented method is used for transferring information with an aircraft. A command is requested from an on ground component. Responsive to receiving an uplink command from the on ground component, a software aircraft part corresponding to an uplink command is requested. The software aircraft part is received from the on ground component in response to sending a request for the software aircraft part to form a received software aircraft part. The software aircraft part is stored.

In yet another advantageous embodiment, an apparatus comprises an on ground component, an onboard electronic distribution system, a data processing system, and an aircraft data processing system. The onboard electronic distribution system is capable of receiving a command from the on ground component; requesting a software aircraft part corresponding to an uplink command in response to receiving the uplink command from the on ground component; receiving the software aircraft part from the on ground component in response to sending the request for the software aircraft part to form a received software aircraft part; and storing the software aircraft part. The on ground component executes on a data processing system. The onboard electronic distribution system executes on the aircraft data processing system.

The different advantageous embodiments provide a computer implemented method, apparatus, and computer program product for managing software aircraft parts. In one advantageous embodiment, a software aircraft part is received at a library to form a received software aircraft part. The received software aircraft part is stored in a storage in the library with a plurality of software aircraft parts. A user interface system is provided to manipulate the plurality of software aircraft parts in the library. Responsive to receiving a user input from the user interface system to uplink a selected software aircraft part from the plurality of software aircraft parts in the library to a target aircraft data processing system, a command is created to send the selected software aircraft part to an aircraft in which the target aircraft data processing system is located to form an uplink command. The uplink command is stored in a queue in the storage in the library to form a stored uplink command. The stored uplink command is distributed to a proxy server application in response to a request for commands from a proxy server application. Responsive to receiving a request for the selected software aircraft part from the proxy server application processing the stored uplink command, the selected software aircraft part is sent to the proxy server application.

In another advantageous embodiment, an apparatus comprises a file system located on a storage device, a database located on the storage device, a manage component, and a user interface. The file system stores a plurality of software aircraft parts, and the database stores a plurality of commands used to manage the plurality of software aircraft parts. The management component is capable of generating the plurality of commands. The user interface system is capable of receiving user input to operate the management component.

In yet another advantageous embodiment, a computer comprises a bus, a communications adapter connected to the bus, a memory connected to the bus, wherein computer usable program code is stored on the bus, and a processor unit connected to the bus. The processor unit executes the computer usable program code to receive a software aircraft part at a library to form a received software aircraft part; store the received software aircraft part in a storage in the library with a plurality of software aircraft parts; provide a user interface system to manipulate the plurality of software aircraft parts in the library; create a command to send the selected software aircraft part to an aircraft in which the target aircraft data processing system is located to form an uplink command in response to receiving a user input from the user interface system to uplink a selected software aircraft part from the plurality of software aircraft parts in the library to a target aircraft data processing system; store the uplink command in a queue in the storage in the library to form a stored uplink command; distribute the stored uplink command to a proxy server application in response to a request for commands from a proxy server application; and send the selected software aircraft part to the proxy server application in response to receiving a request for the selected software aircraft part from the proxy server application processing the stored uplink command.

In still another advantageous embodiment, a computer program product comprises a computer recordable storage media and program code. The program code includes code for receiving a software aircraft part at a library to form a received software aircraft part. The program code also includes code for storing the received software aircraft part in a storage in the library with a plurality of software aircraft parts and for providing a user interface system to manipulate the plurality of software aircraft parts in the library. The program code includes code, responsive to receiving a user input from the user interface system to uplink a selected software aircraft part from the plurality of software aircraft parts in the library to a target aircraft data processing system, for creating a command to send the selected software aircraft part to an aircraft in which the target aircraft data processing system is located to form an uplink command. Code is also present for storing the uplink command in a queue in the storage in the library to form a stored uplink command. The program code includes code for distributing the stored uplink command to a proxy server application in response to a request for commands from a proxy server application and code, responsive to receiving a request for the selected software aircraft part from the proxy server application processing the stored uplink command, for sending the selected software aircraft part to the proxy server application.

The features, functions, and advantages can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the advantageous embodiments are set forth in the appended claims. The advantageous embodiments, however, as well as a preferred mode of use, further objectives and advantages thereof, will best be understood by reference to the following detailed description of an advantageous embodiment of the present disclosure when read in conjunction with the accompanying drawings, wherein:
**Figure 1** is an exemplary diagram of a data processing environment in accordance with an illustrative embodiment;
**Figure 2** is a diagram of a data processing system in accordance with an illustrative embodiment;
**Figure 3** is a diagram illustrating a software aircraft part management apparatus in accordance with an advantageous embodiment;
**Figure 4** is a block diagram of a software part management environment in
   accordance with an advantageous embodiment;
**Figure 5** is a table illustrating modes of operation for a software part management environment in accordance with an advantageous embodiment;
**Figure 6** is a diagram illustrating command types in accordance with an advantageous embodiment;
**Figure 7** is a format for commands in accordance with an advantageous embodiment;
**Figure 8** is a message flow diagram illustrating processing of uplink commands in accordance with an advantageous embodiment;
**Figure 9** is a messaging diagram illustrating processing of a downlink command in accordance with an advantageous embodiment;
**Figure 10** is a message flow diagram illustrating processing of a delete command in accordance with an advantageous embodiment;
**Figure 11** is a high level flowchart of a process used to distribute a software aircraft part in accordance with an advantageous embodiment;
**Figure 12** is a flowchart for receiving and storing software aircraft parts in accordance with an advantageous embodiment;
**Figure 13** is a flowchart of a process for distributing commands through a proxy server in accordance with an advantageous embodiment;
**Figure 14** is a flowchart of a process for receiving and distributing downlink data through a proxy server application in accordance with an advantageous embodiment;
**Figure 15** is a flowchart of a process for distributing software aircraft parts using a software maintenance tool in accordance with an advantageous embodiment;
**Figure 16** is a flowchart of a process for receiving data using a software maintenance tool in accordance with an advantageous embodiment;
**Figure 17** is a functional block diagram of a library in accordance with an advantageous embodiment;
**Figure 18** is a diagram illustrating a file system directory layout in accordance with an advantageous embodiment;
**Figure 19** is a block diagram illustrating an organization of commands in queues in accordance with an advantageous embodiment;
**Figure 20** is a block diagram of a software aircraft part in accordance with an advantageous embodiment;
**Figure 21** is a command data structure for a delete command in accordance with an advantageous embodiment;
**Figure 22** is a diagram illustrating a command data structure for an uplink command in accordance with an advantageous embodiment;
**Figure 23** is a diagram illustrating a data structure for a downlink command in accordance with an advantageous embodiment;
**Figure 24** is a diagram of a user interface for dispatching commands in accordance with an advantageous embodiment;
**Figure 25** is a diagram illustrating and user interface for viewing commands in accordance with an advantageous embodiment;
**Figure 26** is a diagram of a user interface for viewing parts in accordance with an advantageous embodiment;
**Figure 27** is a flowchart of a process for receiving software aircraft parts in a library in accordance with an advantageous embodiment;
**Figure 28** is a flowchart of a process for creating a command in accordance with an advantageous embodiment;
**Figure 29** is a high level flowchart of a process for managing software aircraft parts in accordance with an advantageous embodiment;
**Figure 30** is a flowchart of a process for dispatching command structures in accordance with an advantageous embodiment;
**Figure 31** is a flowchart of a process for dispatching command files in accordance with an advantageous embodiment;
**Figure 32** is a flowchart of a process for dispatching parts in accordance with an advantageous embodiment;
**Figure 33** is a flowchart of a process for dequeuing commands in accordance with an advantageous embodiment;
**Figure 34** is a diagram illustrating data flow in a proxy server application in accordance with an advantageous embodiment;
**Figure 35** is a diagram illustrating a proxy server application in accordance with an advantageous embodiment;
**Figures 36-39** are diagrams illustrating data structures in accordance with an advantageous embodiment;
**Figure 40** is a diagram of a proxy server file system directory structure in accordance with an advantageous embodiment;
**Figure 41** is a flowchart of a process for receiving information from a library in accordance with an advantageous embodiment;
**Figure 42** is a flowchart of a process for sending downlink files to a library in accordance with an advantageous embodiment;
**Figure 43** is a flowchart of a process for sending event files to a library in accordance with an advantageous embodiment;
**Figure 44** is a flowchart of a process for sending information to an aircraft in accordance with an advantageous embodiment;
**Figure 45** is a flowchart of a process for receiving software aircraft parts in accordance with an advantageous embodiment;
**Figure 46** is a flowchart of a process for receiving command status information from an aircraft in accordance with an advantageous embodiment;
**Figure 47** is a flowchart of a process for receiving downlink files in accordance with an advantageous embodiment;
**Figure 48** is a flowchart of a process for receiving status information from a software maintenance tool in accordance with an advantageous embodiment;
**Figure 49** is a flowchart of a process for sending information to a software maintenance tool in accordance with an advantageous embodiment;
**Figure 50** is a flowchart of a process for sending lists of software aircraft parts to a software maintenance tool in accordance with an advantageous embodiment;
**Figure 51** is a flowchart of a process for receiving downlink files from a software maintenance tool in accordance with an advantageous embodiment;
**Figure 52** is a flowchart of a process for receiving event log files from a software maintenance tool in accordance with an advantageous embodiment;
**Figure 53** is a diagram illustrating data flow and a software maintenance tool in accordance with an advantageous embodiment;
**Figure 54** is a block diagram of a software maintenance tool in accordance with an advantageous embodiment;
**Figure 55** is a diagram of commands and command resource tables are depicted in accordance with an advantageous embodiment;
**Figure 56** is a diagram of partial downlink data in accordance with an advantageous embodiment;
**Figure 57** is a diagram of a downlinks table in accordance with an advantageous embodiment;
**Figure 58** is a diagram of a software maintenance tool file system directory structure in accordance with an advantageous embodiment;
**Figure 59** is a diagram illustrating interface components implemented in a software maintenance tool in accordance with an advantageous embodiment;
**Figures 60-65** are example implementations of user interfaces for user interface components in accordance with an advantageous embodiment;
**Figure 66** is a diagram illustrating data flow through a software maintenance tool in sending commands and software aircraft parts to an aircraft in accordance with an advantageous embodiment;
**Figure 67** is a diagram illustrating data flow in a software maintenance tool processing downlinked files in accordance with an advantageous embodiment;
**Figure 68** is a diagram illustrating data flow and logging importing events by a software maintenance tool in accordance with an advantageous embodiment;
**Figure 69** is a diagram illustrating data flow in a software maintenance tool retrieving parts from a library in accordance with an advantageous embodiment;
**Figure 70** is a diagram illustrating data flow in a software maintenance tool during retrieving and creating of commands in accordance with an advantageous embodiment;
**Figure 71** is a diagram illustrating uploading of software aircraft parts from alternative sources in accordance with an advantageous embodiment;
**Figure 72** is a high level flowchart of a process for managing software aircraft parts in accordance with an advantageous embodiment;
**Figure 73** is a more detailed flowchart of a process for managing software aircraft parts in accordance with an advantageous embodiment;
**Figure 74** is a flowchart of a process for sending software aircraft parts from a software maintenance tool to an onboard electronic distribution system in accordance with an advantageous embodiment;
**Figure 75** is a flowchart of the process for receiving downlink data in accordance with an advantageous embodiment;
**Figure 76** is a diagram of components used to transfer information with an aircraft in accordance with an advantageous embodiment;
**Figure 77** is a message flow diagram illustrating message flow used to poll for a command in accordance with an advantageous embodiment;
**Figures 78-79** are message flow diagrams illustrating the sending of status information in accordance with an advantageous embodiment;
**Figure 80** is a message flow diagram for downlinking data in accordance with an advantageous embodiment;
**Figure 81** is a diagram illustrating message flow when the file is only partially delivered in accordance with an advantageous embodiment;
**Figure 82** is a message flow diagram illustrating an uplink process in accordance with an advantageous embodiment;
**Figure 83** is a diagram illustrating message flow in an uplink process in accordance with an advantageous embodiment;
**Figure 84** is a flowchart of a process for uplinking data in accordance with an advantageous embodiment;
**Figure 85** is a flowchart of a process for downlinking data in accordance with an advantageous embodiment;
**Figure 86** is a diagram illustrating a crate tool in accordance with an advantageous embodiment;
**Figure 87** is a diagram illustrating a crate tool in accordance with an advantageous embodiment;
**Figure 88** is a message flow diagram illustrating the processing of a crate in accordance with an advantageous embodiment;
**Figure 89** is a diagram illustrating one implementation of a user interface for a crate tool in accordance with an advantageous embodiment;
**Figure 90** is a diagram illustrating data flow in inspecting and unpacking crates in accordance with an advantageous embodiment;
**Figure 91** is a diagram illustrating the data flow in creating a crate in accordance with an advantageous embodiment; and
**Figure 92** is a flowchart of a process for processing a received crate in accordance with an advantageous embodiment.

### DETAILED DESCRIPTION

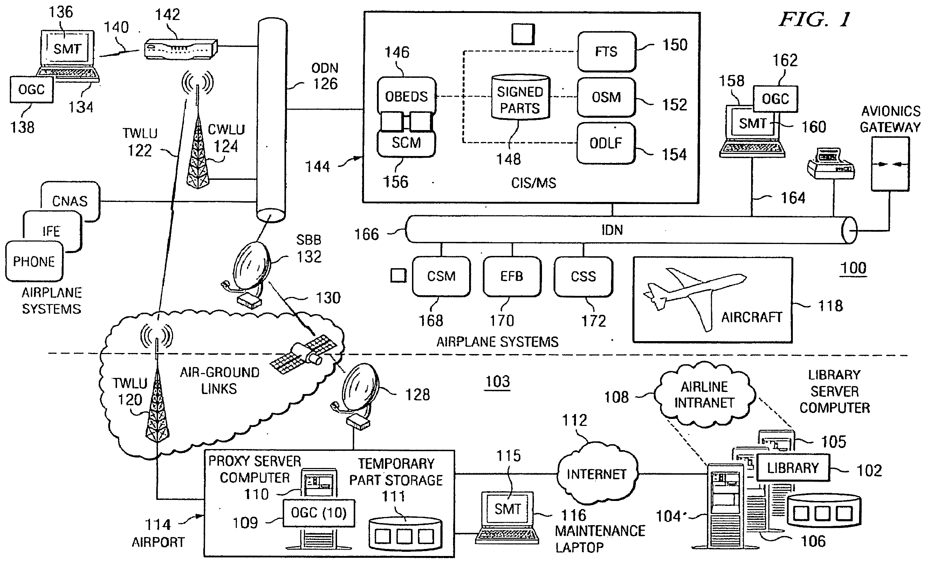

With reference now to the figures and in particular with reference to **Figure 1****,** an exemplary diagram of a data processing environment is provided in which the advantageous embodiments. It should be appreciated that **Figure 1** is only exemplary and is not intended to assert or imply any limitation with regard to the environments in which different embodiments may be implemented. As used herein, the term exemplary refers to an example and not necessarily an ideal implementation. Many modifications to the depicted environments may be made.

Turning now to **Figure 1****,** a diagram illustrating a network data processing system in which a software part management environment may be implemented is depicted in accordance with an advantageous embodiment. In this example, network data processing system **100** is a network data processing system in which information may be transferred between aircraft network **101** and ground network **103.** This information may include, for example, without limitation, commands, software aircraft parts, downlink data, error logs, usage history, flight date, status information, and manuals. Ground network **103** includes networks and computers located on the ground. Aircraft network system **101** is a network and computers located on an aircraft.

In these examples, commands may be generated on library **102** located on library server computer **104.** Library server computer **104** and other data processing systems, such as server computers **105** and **106,** connect to intranet **108.**

These commands may be distributed to on ground component (OGC) **109** on proxy server computer **110** through a network, such as Internet **112.** Intranet **108** and Internet **112** may include connections, such as, for example, wires, fiber optic cables, or wireless communications links. Proxy server computer **110** may be located in a facility, such as airport **114.** Proxy servers, such as proxy server computer **110,** may be located at other airports and other locations, such as maintenance locations. Proxy server computer **110** provides for temporary part storage **111** for commands and parts received from library **102.**

The commands and software aircraft parts also may be sent to software maintenance tools on portable computers, such as software maintenance tool **115** on maintenance laptop **116.** Proxy server computer **110** and maintenance laptop **116** are referred to collectively as ground tools. A ground tool may be any data processing system that is configured with an appropriate application to transfer information, such as commands, software aircraft parts, and downlink data.

Proxy server computer **110** may connect to aircraft **118** through various types of connections or links. For example, wireless unit **120** may establish wireless connection **122** with wireless unit **124** on aircraft **118.** Wireless unit **124** connects to open data network **126** in aircraft **118.** Maintenance laptop **134** has software maintenance tool **136** and on ground component (OGC) **138** and may communicate with aircraft **118** establishing communications link **140** with cabin wireless access unit **142.** Communications link **140** is a wireless virtual private network tunnel. Cabin wireless access unit **142** connects to open data network **126,** in these examples. Open data network **126** provides an interface for various communications links, such as wireless link **122.** Additionally, satellite unit **128** connected to proxy server computer **110** at airport **114** may establish satellite link **130** with satellite unit **132,** which is also connected to open data network **126.**

Open data network **126** connects to aircraft data processing system **144,** which contains onboard electronic distribution system (OBEDS) **146.** Storage device **148** also is located in aircraft data processing system **144.** Storage device **148** provides a location to store information, such as aircraft parts. Aircraft data processing system **144** also includes file transfer system (FTS) **150,** onboard storage manager (OSM) **152,** onboard data load function (ODLF) **154,** and signer-crater module(SCM) **156.** In these examples, signer-crater module **156** may be implemented as a Java® library compiled into onboard electronic distribution system **146.** Also, aircraft data processing system **144** may take the form of a crew information systems/maintenance system computer.

File transfer system **150** is used to transfer files from storage device **148** to a line replaceable units. Onboard storage manager **152** manages information stored in storage device **148.** Onboard data load function **154** is a software component used to load software aircraft parts onto line replaceable units. Signer-crater module **156** is used to process incoming crates and store the contents of those crates in storage device **148.** Additionally, signer-crater module **156** may crate download data for downloading to proxy server computer **110.**

All command processing, in these examples, is initiated by onboard electronic distribution system **146** located in aircraft data processing system **144.** Onboard electronic distribution system **146** monitors the air-to-ground link status and determines whether a communications link has been established. If a link becomes available, onboard electronic distribution system **146** connects to a ground data processing system via the link.

In other advantageous embodiments, maintenance laptop **158** may establish communications link **164** with isolated data network **166.** Maintenance laptop **158** has software maintenance tool **160** and on ground component **162.** Communications link **164** may be a wired connection. The line replaceable units may be, for example, central server module (CSM) **168,** electronic flight bag (EFB) **170,** and cabin services system (CSS) **172.** Central server module **168** provides common networking functions for the different networks in aircraft **118.** These services include, for example, packet routing, firewall, and wireless access. Cabin services system **172** provides applications to control systems in the aircraft, such as lighting, cabin doors, and address system.

If onboard electronic distribution system **146** establishes a connection to a ground device, onboard electronic distribution system **146** requests a list of commands queued or stored for aircraft **118.** Onboard ground components **109, 138,** or **162,** on data processing systems, such as proxy server computer **110,** maintenance laptop **134,** and/or maintenance laptop **162,** communicate with onboard electronic distribution system **136** on aircraft data processing system **144,** in these examples. This type of software component provides an application program interface to the ground tool to uplink commands and software aircraft parts to aircraft **118** as well as downlinking data or files.

The illustration of particular components and configurations in network data processing system **100** are not meant to imply architectural limitations on the manner in which different embodiments may be implemented. For example, although only a single aircraft is shown in aircraft network **101,** multiple aircraft may be present within aircraft network **101.** As another example, airline network **108** in ground network **103** may connect to computers, such as proxy server computer **110** at airports, such as airport **114,** through other types of networks other than Internet **112.** For example, a wide area network (WAN) may be used in place of or in conjunction with Internet **112**

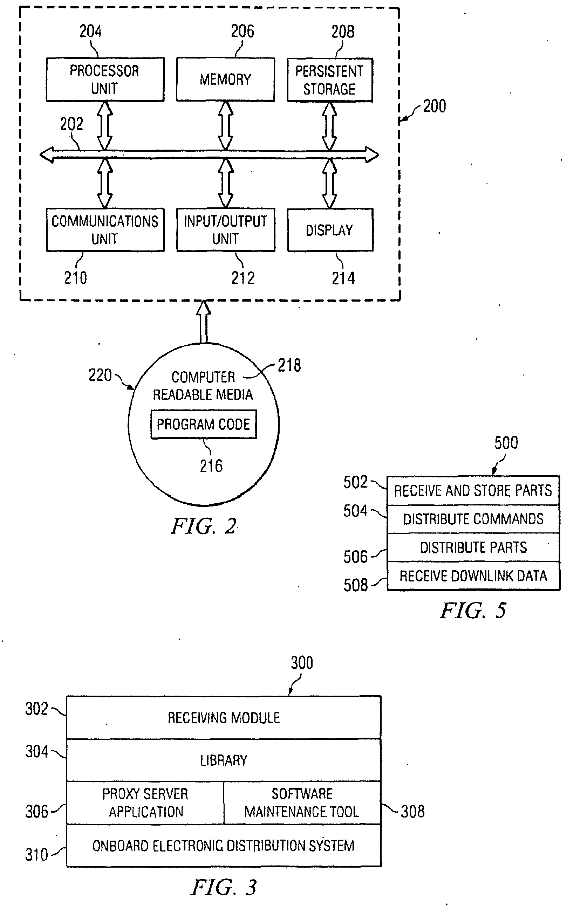

Turning now to **Figure 2****,** a diagram of a data processing system is depicted in accordance with an illustrative embodiment. In these examples, data processing system **200** is an example of a data processing system that may be used to implement data processing systems, such as library server computer **104,** maintenance laptop **116,** proxy server computer **110,** maintenance laptop **134,** maintenance laptop **158,** and aircraft data processing system **144** in **Figure 1****.**

In this illustrative example, data processing system **200** includes communications fabric **202,** which provides communications between processor unit **204,** memory **206,** persistent storage **208,** communications unit **210,** input/output (I/O) unit **212,** and display **214**.

Processor unit **204** serves to execute instructions for software that may be loaded into memory **206.** Processor unit **204** may be a set of one or more processors or may be a multi-processor core, depending on the particular implementation. Further, processor unit **204** may be implemented using one or more heterogeneous processor systems in which a main processor is present with secondary processors on a single chip. As another illustrative example, processor unit **204** may be a symmetric multi-processor system containing multiple processors of the same type.

Memory **206,** in these examples, may be, for example, a random access memory or any other suitable volatile or non-volatile storage device. Persistent storage **208** may take various forms depending on the particular implementation. For example, persistent storage **208** may contain one or more components or devices. For example, persistent storage **208** may be a hard drive, a flash memory, a rewritable optical disk, a rewritable magnetic tape, or some combination of the above. The media used by persistent storage **208** also may be removable. For example, a removable hard drive may be used for persistent storage **208.**

Communications unit **210,** in these examples, provides for communications with other data processing systems or devices. In these examples, communications unit **210** is a network interface card. Communications unit **210** may provide communications through the use of either or both physical and wireless communications links. Input/output unit **212** allows for input and output of data with other devices that may be connected to data processing system **200.** For example, input/output unit **212** may provide a connection for user input through a keyboard and mouse. Further, input/output unit **212** may send output to a printer. Display **214** provides a mechanism to display information to a user.

Instructions for the operating system and applications or programs are located on persistent storage **208.** These instructions may be loaded into memory **206** for execution by processor unit **204.** The processes of the different embodiments may be performed by processor unit **204** using computer implemented instructions, which may be located in a memory, such as memory **206.** These instructions are referred to as, program code, computer usable program code, or computer readable program code that may be read and executed by a processor in processor unit **204.** The program code in the different embodiments may be embodied on different physical or tangible computer readable media, such as memory **206** or persistent storage **208.**

Program code **216** is located in a functional form on computer readable media **218** and may be loaded onto or transferred to data processing system **200** for execution by processor unit **204.** Program code **216** and computer readable media **218** form computer program product **220** in these examples. In one example, computer readable media **218** may be in a tangible form, such as, for example, an optical or magnetic disc that is inserted or placed into a drive or other device that is part of persistent storage **208** for transfer onto a storage device, such as a hard drive that is part of persistent storage **208.** In a tangible form, computer readable media **218** also may take the form of a persistent storage, such as a hard drive or a flash memory that is connected to data processing system **200.** The tangible form of computer readable media **218** is also referred to as computer recordable storage media.

Alternatively, program code **216** may be transferred to data processing system **200** from computer readable media **218** through a communications link to communications unit **210** and/or through a connection to input/output unit **212.** The communications link and/or the connection may be physical or wireless in the illustrative examples. The computer readable media also may take the form of non-tangible media, such as communications links or wireless transmissions containing the program code.

The different components illustrated for data processing system **200** are not meant to provide architectural limitations to the manner in which different embodiments may be implemented. The different illustrative embodiments may be implemented in a data processing system including components in addition to or in place of those illustrated for data processing system **200.** Other components shown in **Figure 2** can be varied from the illustrative examples shown.

For example, a bus system may be used to implement communications fabric **202** and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory **206** or a cache such as found in an interface and memory controller hub that may be present in communications fabric **202.**

The different advantageous embodiments provide a computer implemented method, apparatus, and computer usable program product for managing software aircraft parts.

With reference now to **Figure 3****,** a diagram illustrating a software aircraft part management apparatus is depicted in accordance with an advantageous embodiment. In this example, software aircraft part management apparatus **300** includes receiving module **302,** library **304,** proxy server application **306,** software maintenance tool **308,** and onboard electronic distribution system **310.**

Receiving module **302** is capable of receiving a software aircraft part from a source and sending the software aircraft part to library **304** for storage. The source may include, for example, an aircraft manufacturer, a software vendor, a library supplier, or an airline.

In these examples, library **304** is located on a data processing system, such as library server computer **102** in **Figure 1****.** Library **304** provides a storage system for the software aircraft part. Also, library **304** may be used to manage the software aircraft parts. The management of the parts may include, for example, without limitation, organizing software aircraft parts, deleting software aircraft parts, and distributing software aircraft parts. Security and versioning control processes may be used to manage the software aircraft parts.

Proxy server application **306** may be located on the same data processing system or a different data processing system, depending on the particular implementation. Proxy server application **306** is in communication with library **304** and is capable of serving different aircraft clients.

Software maintenance tool **308** may be a software maintenance tool located on a portable computer that provides an alternate route to send the software aircraft part to onboard electronic distribution system **310** from library **304.** Software maintenance tool **308** may receive the software aircraft part directly from library **304** or through proxy server application **306,** depending on the particular implementation.

Onboard electronic distribution system **310** is an example of an aircraft client located on an aircraft. Onboard electronic distribution system **310** is a software client that executes on a data processing system on the aircraft. Onboard electronic distribution system **310** may receive a software aircraft part for the aircraft from library **304** through proxy server application **306.** After the software aircraft part has been received by onboard electronic distribution system **310,** the software aircraft part may be installed in a line replaceable unit for use.

In addition to using software aircraft part management apparatus **300** to distribute software aircraft parts to an aircraft, this apparatus also may be used to receive data generated by the aircraft. This data also is referred to as downlink data. For example, a flight recorder may generate data describing different events occurring during a flight. This data may be downlinked through onboard electronic distribution system **310** through proxy server application **306** and/or software maintenance tool **308** back to library **304** for later use and analysis. This data also may include configuration data about the software aircraft part, the line replaceable unit, or the airplane configuration.

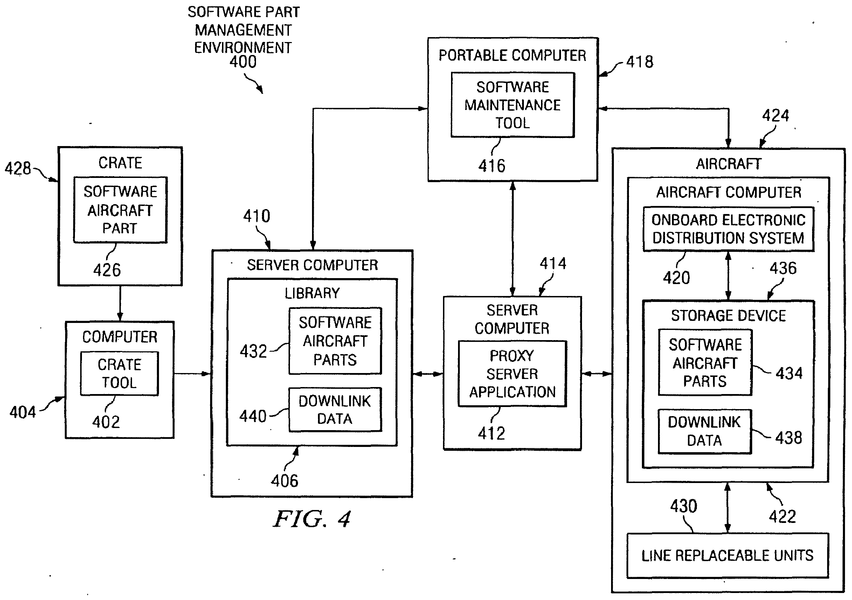

With reference now to **Figure 4****,** a block diagram of a software part management environment is depicted in accordance with an advantageous embodiment. Software part management environment **400** is an example of one implementation for software aircraft part management apparatus **300** in **Figure 3****.**

In this example, crate tool **402** executes on computer **404.** Crate tool **402** is an example of one implementation of receiving module **302** in **Figure 3****.** Library **406** is located on server computer **410.** Library **406** is an example of one implementation of library **304** in **Figure 3****.** Proxy server application **412** executes on server computer **414** and is an example of an implementation of proxy server application **306** in **Figure 3****.** Software maintenance tool **416** executes on portable computer **418.** Software maintenance tool **416** is an example of software maintenance tool **308** in **Figure 3****.** Onboard electronic distribution system **420** runs on aircraft computer **422** on aircraft **424.** Onboard electronic distribution system **420** is an example of one implementation for onboard electronic distribution system **310** in **Figure 3****.**

In these examples, crate tool **402** may receive and process software parts, such as software aircraft part **426** in crate **428.** Crate **428** is a packaging system for software aircraft part **426** and is not a physical object. Crate **428,** in these examples, is a file that contains software aircraft part **426.** Crate **428** may be, for example, a zip file using a zip file format.

A zip file format is a data compression and archival format in which the zip file may contain one of more files that have been compressed. Other examples of packaging system for files include, for example, JAVA® archive (JAR) files. These files also may be encrypted or digitally signed, depending on the particular implementation. Of course, any type of mechanism that provides a wrapper for software aircraft part **426** may be used. In these examples, the wrapper is a security wrapper that is designed to meet various security requirements that may be set or required for software aircraft part **426.**

Software aircraft part **426** may be a software application for use on a data processing system in the aircraft, in these examples. The data processing system may be one located within line replaceable units **430** in aircraft **424.** The application may include a set of files. The set of files may include, for example, one or more programs, data files, libraries, configuration files, or other information or code. As used herein, "a set" refers to one or more items. As an example, a set of software aircraft parts is one or more software aircraft parts and a set of commands is one or more commands, in these examples.

Crate tool **402** receives crate **428** and processes crate **428** to store software aircraft part **426** in software aircraft parts **432** in library **406.** This processing may include, for example, validating signatures for crate **428** and software aircraft part **426.** This validation may be performed to ensure that no corruption or errors has occurred in crate **428** or software aircraft part **426.** The different parts stored within library **406** may be distributed to an aircraft, such as aircraft **424** through the proxy server application.

Library **406** provides a component within software part management environment **400** to perform various management operations on software aircraft parts **432.** These management operations may include, for example, without limitation, distributing software aircraft parts to an aircraft, organizing software aircraft parts, deleting software aircraft parts, receiving data from aircraft on which software aircraft parts are present, and receiving new software aircraft parts.

Proxy server application **412** may obtain a set of software aircraft parts from software aircraft parts **432** and send those parts to onboard electronic distribution system **420.** Proxy server application **412** is in communication with onboard electronic distribution system **420** through a communications link. This communications link may take various forms. For example, a wireless communications link may be used. In this manner, aircraft parts and data may be exchanged while the aircraft is on ground or even in flight. In other examples, server computer **414** may be connected to aircraft computer **422** through a wired link in a network.

Onboard electronic distribution system **420** processes the set of aircraft parts and stores these parts as software aircraft parts **434** within storage device **436** on aircraft computer **422.** As needed, a software aircraft part from software aircraft parts **434** may be installed in line replaceable units **430.** Data, such as a software aircraft part, manuals, documentation, and commands, sent to the aircraft are referred to as uplink data.

Additionally, data may flow the other direction from aircraft **424** through proxy server application **412** back to library **406.** This type of data is referred to as downlink data. In these examples, line replaceable units **430** may generate downlink data **438,** which is temporarily stored in storage device **436.** Onboard electronic distribution system **420** may send downlink data **438** to proxy server application **412.** In turn, proxy server application **412** sends downlink data **438** to library **406** for storage. This data may then be processed and analyzed. This data also may include, for example, the status of software on an aircraft. This status information may be used to send an operator to the aircraft to initiate loading and installation of the line replaceable unit on the aircraft.

Additionally, software maintenance tool **416** on portable computer **418** provides an alternative route for transferring software aircraft parts and downlink data. Portable computer **418** may be, for example, a laptop computer. Portable computer **418** may obtain a software aircraft part from software aircraft parts **432** through proxy server application **412** or directly from library **406,** depending on the particular implementation. Thereafter, portable computer **418** may be transported to aircraft **424** and establish communications link with onboard electronic distribution system **420** on aircraft computer **422** to send the software aircraft part to onboard electronic distribution system **420.**

This type of distribution of software aircraft parts is especially useful when network connections or communications links cannot be established between server computer **414** and aircraft computer **422** on aircraft **424.** This type of situation may occur depending on the type of equipment available at an airport or maintenance facility. Further, in some cases, the network or communications systems providing communications links may be temporarily unavailable or require repair. In this manner, software maintenance tool **416** may transfer a software aircraft part to onboard electronic distribution system **420.** Further, software maintenance tool **416** may also receive downlink data **438** while in communication with onboard electronic distribution system **420.**

In this manner, the different advantageous embodiments provide a computer implemented method, apparatus, and computer usable program code for managing software aircraft parts. Further, the different advantageous embodiments also may provide for the transfer of data from an aircraft to a facility or location for later analysis or review.
Turning now to **Figure 5****,** a table illustrating modes of operation for a software part management environment is depicted in accordance with an advantageous embodiment. In this example, table **500** illustrates some of the different modes of operation that may occur within software part management environment **400** in **Figure 4****.** In these examples, the different modes of operation include receive and store parts mode **502,** distribute commands mode **504,** distribute parts mode **506,** and receive downlink data mode **508.** These different modes of operations illustrated in table **500** are ones that may occur in one or more components within software parts management environment **400** in **Figure 4****.**

In receive and store parts mode **502,** software aircraft parts may be received and stored within library **406** in **Figure 4****.** Distribute commands mode **504** is used to send commands to the aircraft. These commands may be, for example, to uplink data. This data may include, for example, sending software aircraft parts to an aircraft. The uplink data also may include commands to send documentation or other information to an aircraft. Distribute parts mode **506** is the mode of operation in which software aircraft parts are actually sent to the aircraft. Receive downlink data mode **508** is a mode of operation in which data is sent from various components in an aircraft to the library in the software part management environment.

### COMMAND PROTOCOL PROCESSING DETAILS

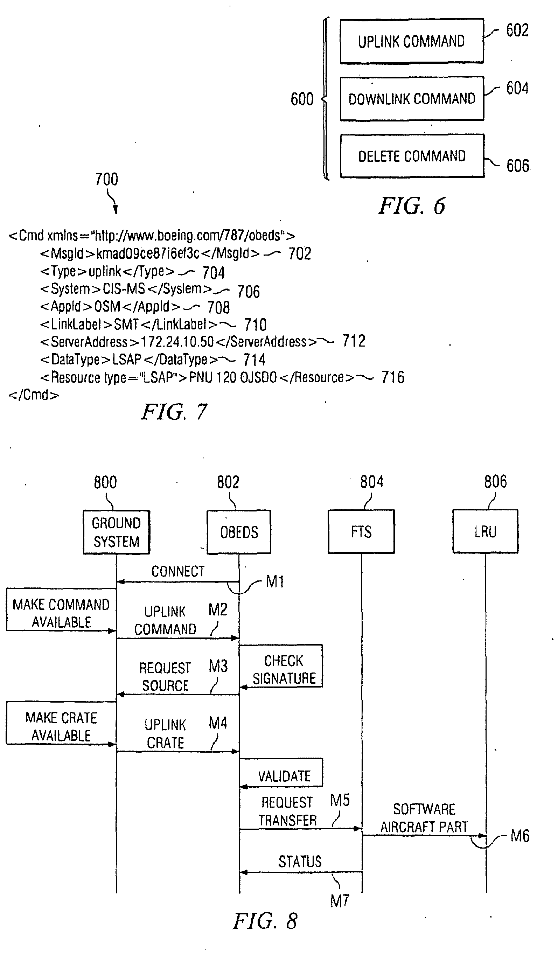

With reference now to **Figure 6****,** a diagram illustrating command types is depicted in accordance with an advantageous embodiment. In this example, command types **600** includes uplink command **602,** downlink command **604,** and delete command **606.** Uplink command **602** is used to send information from a library to an aircraft. This information may include, for example, software aircraft parts, configuration information, and other data. Downlink command **604** is used to initiate the transfer of data from an aircraft to a library. This information may include, for example, status information on the uplinking of software aircraft parts, and reports of configuration of line replaceable units on the aircraft. Delete command **606** is employed to delete information on the aircraft. For example, delete command **606** may be used to delete a selected software aircraft part on an aircraft. In these examples, these different commands are sent to the aircraft in a crate.

Turning now to **Figure 7****,** a format for commands is depicted in accordance with an advantageous embodiment. In this example, command **700** takes the form of an extensible markup language (XML) data structure. Command **700,** in this example, is an uplink command.

Message identifier element **702** in command **700** provides a unique identifier for the command. Type element **704** indicates the type of command. In this example, the type of command is identified as an uplink command. System element **706** identifies the target system for the command. Application identifier element **708** identifies the application on the target system to receive the command.

Link label element **710** identifies the type of network link used to transfer the command from the library to the aircraft. For example, the link may be a wired link or a wireless link. Server address element **712** identifies the address of the identified device. Data type element **714** provides an identification of the type of information that is subject to the command. Resource type element **716** identifies the particular file that is subject to the command.

Turning now to **Figure 8****,** a message flow diagram illustrating processing of uplink commands is depicted in accordance with an advantageous embodiment. In this example, processing of an uplink command involves ground system **800,** onboard electronic distribution system (OBEDS) **802,** file transfer system (FTS) **804,** and line replaceable unit (LRU) **806.** In these examples, ground system **800** is, for example, a proxy server application on a computer or a software maintenance tool located on a laptop computer.

The process begins by onboard electronic distribution system **802** establishing a connection with ground system **800** (message **M1**). In response to the connection, ground system **800** makes the next command available. In this example, the next command is an uplink command. Ground system **800** sends the uplink command to onboard electronic distribution system **802** (message **M2**). Onboard electronic distribution system **802** checks the signature for the uplink command.

Thereafter, onboard electronic distribution system **802** sends a request for the resource to ground system **800** (message **M3**). Ground system **800** makes the crate corresponding to the request available for transfer. The request in message **M3** is identified from the uplink command received in message **M2.**
Onboard electronic distribution system **802** uplinks the crate from ground system **800** (message **M4**). After receiving the crate, onboard electronic distribution system **802** validates the signatures on the crate. This validation includes validating the signature on the crate as well as the signatures for the software aircraft part.

Thereafter, onboard electronic distribution system **802** sends a transfer request to file transfer system **804** (message **M5**). In response, file transfer system **804** transfers the software aircraft part to line replaceable unit **806** (message **M6**).

The status is then transferred from file transfer system **804** to onboard electronic distribution system **802** (message **M7**).

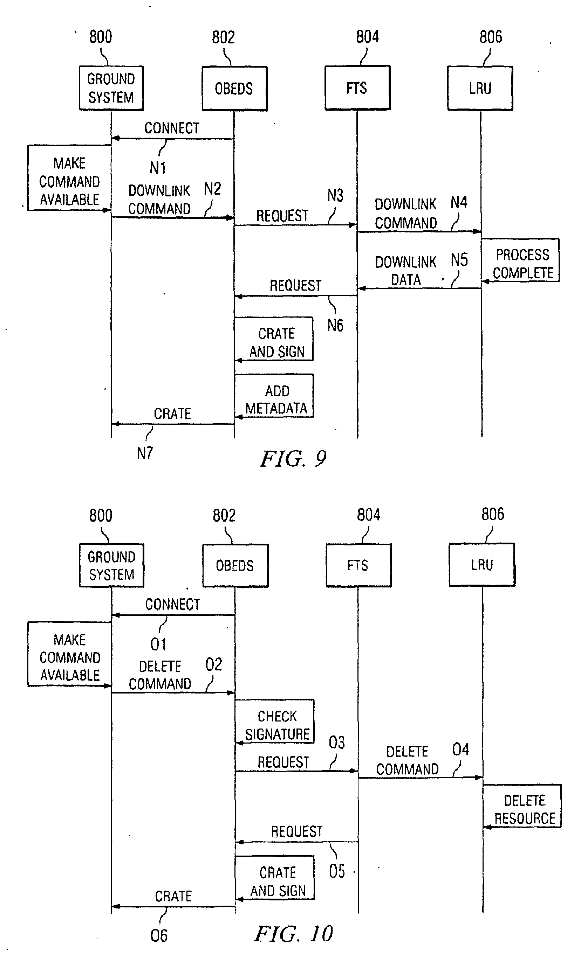

Turning now to **Figure 9****,** a messaging diagram illustrating processing of a downlink command is depicted in accordance with an advantageous embodiment. In this example, the same components as in **Figure 8** are present for processing a downlink command. In this example, onboard electronic distribution system **802** connects to ground system **800** (message **N1**). Ground system **800** makes the next command available for processing.

A downlink command is sent to onboard electronic distribution system 802 (message **N2**). Onboard electronic distribution system **802** sends a request to file transfer system **804** to send the downlink command to line replaceable unit **806** (message **N3**). In turn, file transfer system **804** sends the downlink command to line replaceable unit **806** (message **N4**). Line replaceable unit **806** processes the command and then sends downlink data to file transfer system **804** (message **N5**). File transfer system **804** sends a request to onboard electronic distribution system **802** to send downlink data to ground system **800** (message **N6**). In response, onboard electronic distribution system **802** crates and signs the downlink data. Additionally, onboard electronic distribution system **802** also adds metadata to the crate. Thereafter, onboard electronic distribution system **802** sends the crate to ground system **800** (message **N7**).

Turning now to **Figure 10****,** a message flow diagram illustrating processing of a delete command is depicted in accordance with an advantageous embodiment. The same components as depicted in **Figures 8** and **9** are used to process a delete command. The process begins with onboard electronic distribution system **802** connecting to ground system **800** (message **O1**). In response, ground system **800** makes the next command for onboard electronic distribution system **802** available. Onboard electronic distribution system **802** receives the delete command (message **O2**).

Thereafter, onboard electronic distribution system **802** checks the signature for the command. If the signature is valid, onboard electronic distribution system **802** sends a request to file transfer system **804** to send the delete command to line replaceable unit **806** (message **O3**). In these examples, the only time the signature on the command is checked is if the command is issued from the proxy server. The same occurs for the downlink command. Thereafter, file transfer system **804** sends the delete command to line replaceable unit **806** (message **O4**).

In response to receiving the delete command, line replaceable unit **806** deletes the resource identified by the delete command.

File transfer system **804** sends a request to onboard electronic distribution system **802** to send the status to ground system **800** (message **O5**). This status indicates whether the resource was successfully deleted by line replaceable unit **806.** In response, onboard electronic distribution system **802** sends the system to ground system **800** (message **O6**). In response to receiving this request, onboard electronic distribution system **802** crates and signs the status. Thereafter, the crate is sent to ground system **800** (message **O7**).

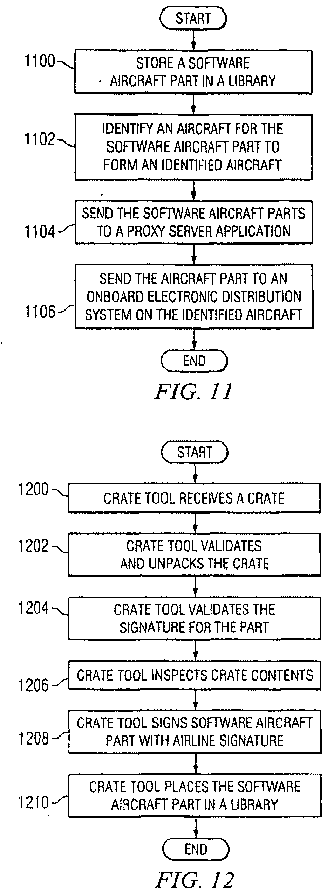

Turning now to **Figure 11****,** a high level flowchart of a process used to distribute a software aircraft part is depicted in accordance with an advantageous embodiment.

The process illustrated in **Figure 11** is an example of a process that may be found in software part management environment **400** in **Figure 4** to install a software aircraft part on an aircraft.

The process begins by storing a software aircraft part in a library (operation **1100**). In these examples, the library is a software aircraft management component, such as library **406** in **Figure 4****.** The process then identifies an aircraft to receive the software aircraft part to form an identified aircraft (operation **1102**). In operation **1102,** an operator of the library may select software aircraft parts for distribution to a set of aircraft. In other embodiments, the target aircraft for software aircraft parts may be preselected through a communication or file received from another system.

Thereafter, the software aircraft part is sent to a proxy server application (operation **1104**) in the form of and uplink command. The proxy server application sends the uplink command and the software aircraft part to an onboard electronic distribution system on the identified aircraft (operation **1106**), with the process terminating thereafter.

Turning now to **Figure 12****,** a flowchart for receiving and storing software aircraft parts is depicted in accordance with an advantageous embodiment. The process illustrated in **Figure 12** may be implemented in software part management environment **400** in **Figure 4****.** This process is an example of steps that may be performed in receive and store parts mode **502** in **Figure 5****.**

The process begins with a crate tool receiving a crate (operation **1200**). This tool may be, for example, crate tool **402** in **Figure 4****.** In this example, the crate contains a software aircraft part that may be requested from a point of origin, such as a manufacturer of the aircraft or line replaceable units in the aircraft. The software aircraft part may be received in response to a notification of the availability of the software aircraft part and delivered through some transport mechanism. The crate may be received on a physical or tangible media, such as a compact disc, flash memory, or digital versatile disc. In other embodiments, the crate may be received through a transmission media, such as a communications link over a network.

The crate tool validates and unpacks the crate (operation **1202**). In this operation, a notification is generated if the signature is invalid or the digest does not match the one calculated by the crate tool. If no problems are detected, the crate is unpacked into various locations for additional processing. Next, the crate tool validates the signature for the software aircraft part (operation **1204**). If the signature is invalid or the digest for the software aircraft part does not match the one calculated, a notification is generated. If no problems are detected, the part is now ready to be signed after the contents of the crate have been validated or verified.

The crate tool then inspects the crate contents (operation **1206**). In this operation, the contents of the crate may be displayed for an inspector to verify the contents. In other embodiments, this operation may be performed automatically for a comparison of the contents with a file or configuration information identifying the expected contents of the crate.

Once the contents have been verified, the crate tool signs the software aircraft part with the airline's signature (operation **1208**). Depending on the implementation, another entity's signature may be used. For example, the signature may be that of a customer or other party that manages the library. If no errors occur in signing the software aircraft part, the part is ready for storage.

Thereafter, the crate tool places the software aircraft part into a library (operation **1210**) with the process terminating thereafter. This operation involves moving the software aircraft part from its current location on the file system to the storage area for the library containing the different software aircraft parts. In these examples, this library may be, for example, library **406** in **Figure 4****.**

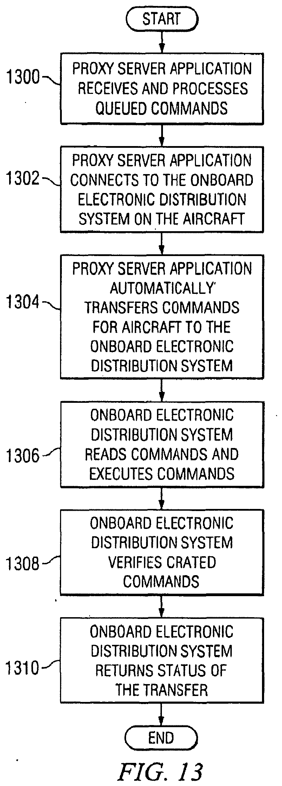

Referring to **Figure 13****,** a flowchart of a process for distributing commands through a proxy server is depicted in accordance with an advantageous embodiment. The process illustrated in **Figure 13** may be implemented in software part management environment **400** in **Figure 4****.** In particular, this process is an example of one executed during distribute commands mode **504** in **Figure 5****.**

The process begins by the proxy server application receiving and processing queued commands (operation **1300**). In these examples, queued commands are sent in crates, referred to as command packages. The crates are processed and sent to appropriate aircraft command queues in the library. The proxy server application may access and retrieve the queued commands from queues in the library. If these commands include uplink commands, crated software aircraft parts also are placed into local inventory of the proxy server. In these examples, the commands are placed into crates for distribution to the proxy server.
Thereafter, the proxy server application connects to the onboard electronic distribution system on the aircraft (operation **1302**). The proxy server application may connect to multiple aircraft at the same time. In these examples, the aircraft connects to the proxy server application through a wireless connection or communications link. Once the communications link is established, information may flow between the proxy server application and the onboard electronic distribution system. This information may include, for example, commands, data, software aircraft parts, configuration files, manuals, and status information.

The proxy server application then automatically transfers the crate commands for the aircraft to the onboard electronic distribution system (operation **1304**). In these examples, the crate commands designated for the aircraft are available for retrieval by the onboard electronic distribution system.

The onboard electronic distribution system reads the commands and executes the commands (operation **1306**). In these examples, the onboard electronic distribution system polls the command queue on the proxy server application and retrieves each command for the aircraft one command at a time. The onboard electronic distribution system then verifies the crated commands (operation **1308**). If the crate is verified, the command is passed on to the designated system and application. Thereafter, the onboard electronic distribution system returns the status of the transfer for the commands (operation **1310**), with the process terminating thereafter.

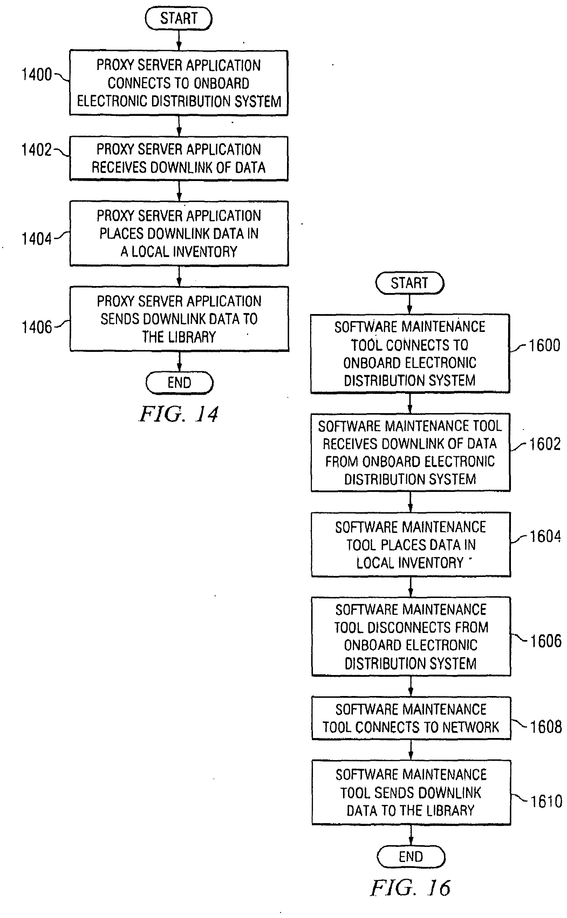

Turning next to **Figure 14****,** a flowchart of a process for receiving and distributing downlink data through a proxy server application is depicted in accordance with an advantageous embodiment. The process illustrated in **Figure 14** may be implemented in a software part management environment **400** in **Figure 4****.** In particular, the process illustrated in **Figure 14** is an example of operations that occur during receive downlink data mode **508** in **Figure 5****.**

The process begins with the proxy server application connecting to the onboard electronic distribution system on an aircraft (operation **1400**). Thereafter, the proxy server application receives the downlink of the data (operation **1402**). In these examples, the onboard electronic distribution system generates a downlink for each item in the queue containing downlink data.

Thereafter, the proxy server application places the downlink data in a local inventory (operation **1404**). This downlink data is stored for transfer back to the library based on some event. In these examples, the event may be a period event, such as the expiration of a timer. In other examples, the event may be a non-period event, such as a request generated by a user. Afterwards, the proxy server application sends the downlink data to the library (operation **1406**), with the process terminating thereafter. In operation **1406** the downlink data is placed in a directory for a later use or analysis.

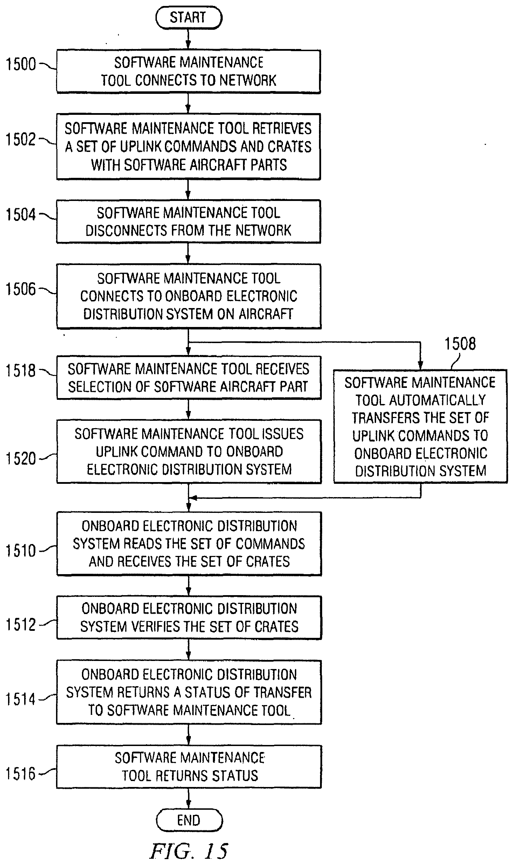

Turning now to **Figure 15****,** a flowchart of a process for distributing software aircraft parts using a software maintenance tool is depicted in accordance with an advantageous embodiment. The process illustrated in **Figure 15** may be implemented in software part management environment **400** in **Figure 4****.** The different operations in this process are examples of operations that occur during distribute parts mode **506** in **Figure 5****.**

The process begins with the software maintenance tool connecting to the network (operation **1500**). This is the network in which the library is present. In this example, parts are not present and located on the software maintenance tool. Next, the software maintenance tool retrieves a set of uplink commands and crates with software aircraft parts (operation **1502**).

Thereafter, the software maintenance tool disconnects from the network (operation **1504**). The software maintenance tool is then moved and connected to the onboard electronic distribution system on the aircraft (operation **1506**). In these examples, the connection requires a human operator to initiate the connection. The software maintenance tool automatically transfers the set of uplink commands to the onboard electronic distribution system (operation **1508**). In these examples, the commands are sent to the onboard electronic distribution system one command at a time. Each time a command is sent within operation **1508,** a check is made as to whether the onboard electronic distribution system is done uplinking the command or other information before sending the next command.

The onboard electronic distribution system reads the set of commands and receives the set of crates containing the software aircraft part (operation **1510**). In these examples, each command in the set of commands is retrieved one at a time by the onboard electronic distribution system from the software maintenance tool. The onboard electronic distribution system verifies the set of crates (operation **1512**). If the crates are verified, the software aircraft parts are then passed on for storage and distribution in the aircraft.

Then, the onboard electronic distribution system returns a status of the transfer to the software maintenance tool (operation **1514**). The software maintenance tool then returns the status of the transfer (operation **1516**) with the process terminating thereafter. In this example, the software maintenance tool returns the status to a source of the software aircraft part, such as a library or proxy server application.

In these examples, the uplink commands may be manually added rather than automatically received from the library. For example, an operator of the software maintenance tool may select software aircraft parts for transfer to an aircraft. This selection results in the software maintenance tool generating the appropriate commands to transfer the software aircraft parts. The process still receives crates for the software aircraft parts.

In this type of implementation, however, the process proceeds from operation **1508** to receive a selection of the software aircraft part (operation **1518**). This selection is based on user input, in these examples. Thereafter, the software maintenance tool issues an uplink command to the onboard electronic distribution system (operation **1520**). This command may be placed in a command queue for the onboard electronic distribution system to retrieve.

Turning now to **Figure 16****,** a flowchart of a process for receiving data using a software maintenance tool is depicted in accordance with an advantageous embodiment. The process illustrated in **Figure 16** may be implemented using software part management environment **400** in **Figure 4****.** The operations illustrated in **Figure 16** are examples of operations that may occur during receive downlink data mode **508** in **Figure 5****.**

The process begins with the software maintenance tool connecting to the onboard electronic distribution system (operation **1600**). The software maintenance tool receives a downlink of data from the onboard electronic distribution system (operation **1602**). The onboard electronic distribution system initiates a downlink for each item within its queue of downlink data.

Thereafter, the software maintenance tool places the data in the local inventory (operation **1604**). In this operation, the software maintenance tool accepts the downlink and places the data in its inventory. Other data associated with the downlink data may be displayed in a user interface. This user interface may allow a user to sort downlink data into filtered downlink data using various parameters. These parameters may include, for example, without limitation, by aircraft identification, system identification, application identification, or data type.

Next, the software maintenance tool disconnects from the onboard electronic distribution system (operation **1606**). The software maintenance tool is moved from the aircraft to another location to transfer the downlink data. The software maintenance tool connects to the network (operation **1608**). The software maintenance tool then sends the downlink data to the library (operation **1610**), with the process terminating thereafter.

### LIBRARY

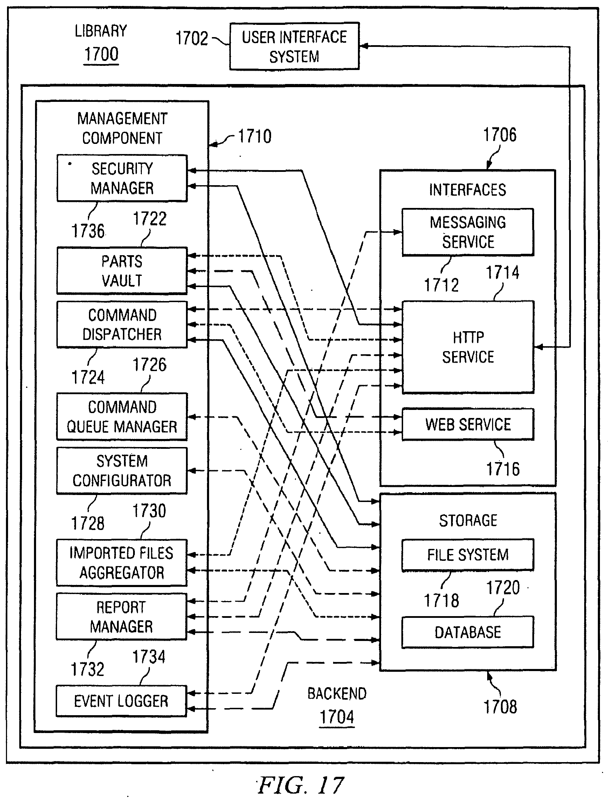

**Figures 17-33** describe a library in a software part management environment. In particular, these figures illustrate one example of an implementation of library **406** in software part management environment **400** in **Figure 4****.**

With reference to **Figure 17****,** a functional block diagram of a library is depicted in accordance with an advantageous embodiment. Library **1700** is a more detailed example of library **406** in **Figure 4****.** Library **1700** includes user interface system **1702** and backend **1704.** Backend **1704** includes interfaces **1706,** storage **1708,** and management components **1710.**

Interfaces **1706** includes messaging service **1712,** hypertext transport protocol (HTTP) service **1714,** and web service **1716.** Storage **1708** contains file system **1718** and database **1720.** In these examples, management components **1710** includes parts vault **1722,** command dispatcher **1724,** command queue manager **1726,** system configurator **1728,** imported files aggregator **1730,** report manager **1732,** event logger **1734,** and security manager **1736.**

User interface system **1702** provides an operator access to backend **1704** to perform different tasks and operations. User interface system **1702** may be a graphical user interface. More specifically, user interface system **1702** may be a web based application that allows a user to access library **1700** from a remote location. Interfaces **1706** contains a number of different interfaces that may be used to transfer information into and out of library **1700.** Within interfaces **1706,** messaging service **1712** allows various components within management component **1710** to communicate with other applications. In these examples, report manager **1732** uses messaging service **1712** to distribute reports in response to requests. Messaging service **1712** may be implemented using various types of messaging services. For example, messaging service **1712** may be implemented using Java® Messaging Service, which is part of the Java® 2 Enterprise Edition Suite. This product is available from Sun Microsystems, Inc.

Web service **1716** may be implemented using any web service system. Web service **1716** is designed to provide interaction between library **1700** and other devices over a network. Web service **1716** in interfaces **1706** may be implemented using application programming interfaces accessed over a network, such as the Internet. Web service **1716** may be implemented using various protocols, such as, for example, simple object access protocol (SOAP) or web surface description language (WSDL). Hypertext transport protocol (HTTP) service **1714** may be implemented to provide a request and response system to manage responses made by clients. These requests are typically referred to as HTTP requests.

In these examples, hypertext transport protocol service **1714** may be used to send and receive information, such as files. These files may be, for example, files containing software aircraft parts, commands, downlink data, and other suitable information. In these examples, hypertext transport protocol service **1714** is used by parts vault **1722,** command dispatcher **1724,** imported files aggregator **1730,** report manager **1732, and** event logger **1734**.

As depicted, the different components from components within management component **1710** may access storage **1708** for various reasons. Storage **1708** contains the different storage systems used to store information within backend **1704** of library **1700,** such as file system **1718** and database **1720.** Storage **1708** is a functional component that stores information and may be located on one or more storage device, such as a hard drive or a random access memory. Storage **1708** may be, for example, located on a single storage device, such as a hard drive.

In other embodiments, storage **1708** may be located on multiple storage devices, which may be located in the same physical location or in different physical locations. Within storage **1708,** file system **1718** provides a structure or architecture for storing data. This data may include, for example, software aircraft parts, documentation, downlink data, and other files. Database **1720,** in these examples, may contain, for example, metadata and commands related to files located within file system **1718.** Additionally, database **1720** may include other commands for performing other functions, such as, for example, deleting files on an aircraft of downloading downlink data.

Parts vault **1722** provides processes to manage the storage and distribution of software aircraft parts to different aircraft. In particular, parts vault **1722** provides for a secure distribution of parts. These processes may receive new software aircraft parts, as well as package or crate software aircraft parts for distribution to an aircraft.

Command queue manager **1726** is a component that manages aircraft commands. Command queue manager **1726** may allow a user or operator, through user interface system **1702,** to inspect, reorder, and change the status of commands within database **1720.** The inspection of commands may allow a user to see different commands or filter commands based on different criteria.

Command dispatcher **1724** is a component that manages creation and dispatching of commands. This component may allow a user or operator, through user interface system **1702,** to create uplink, delete and downlink commands. Command dispatcher **1724** also provides validations of input parameters when creating these various types of commands. This component provides a mechanism to group, crate and dispatch commands when external devices request by various criteria.

In these examples, system configurator **1728** manages the configuration of data to support operations performed by command dispatcher **1724.** System configurator **1728** allows a user to define, select, or import information to define external devices that may be connected to library **1700.** Additionally, this component may allow defining of aircraft models, particular aircrafts, and destination systems for the software aircraft parts. These destination systems, in these examples, may include line replaceable units located in the aircraft.

Imported files aggregator **1730** performs concurrent importing of large files sent from external devices to library **1700.** Report manager **1732** allows an operator to define reports that may be generated by library **1700.** These reports may be ones that include information from the event logs that may be aggregated from various sources pertinent to the operation of the software part management environment. For example, report manager **1732** may allow a user to define a report that identifies successful uplinking of a specific type of software aircraft part to a specific model of aircraft being managed within the software part management environment.

Event logger **1734** logs events with respect to the operation of library **1700.** Additionally, event logger **1734** may aggregate logs from different devices connected to library **1700.** These events may include, for example, without limitation, software aircraft parts received from outside sources, successful transfers of software aircraft parts to aircrafts, commands generated for uplinking data, commands generated for downlinking data, and commands generated to delete software aircraft parts.

Next, security manager **1736** provides a mechanism to manage access to library **1700** by operators using user interface system **1702.** Security manager **1736** may be implemented using roles and responsibilities that may be configured for particular users. This type of access may provide users privileges to access different features or functionalities within library **1700.** Further, security manager **1736** also may provide for secure communications between external devices and library **1700.** As an example, security manager **1736** may ensure that communications through interfaces **1706** occur through mechanisms, such as encryption or virtual private networks.

In operation, library **1700** may receive software aircraft parts from an external program, such as, for example, crate tool **402** in **Figure 4****.** In this type of operation, the external program connects a service, such as hypertext transport protocol service **1714** and interfaces **1706.** Security manager **1736** performs authentication of the connection and determines whether software aircraft parts can be imported. If the connection is allowed, hypertext transport protocol service **1714** may then send a request to parts vault **1722** to handle the input process. In this process, parts vault **1722** writes metadata about the software aircraft parts into database **1720** while storing the actual software aircraft parts within file system **1718** in some selected file directory.

When managing parts in library **1700,** software aircraft parts may be retrieved from file system **1718** through parts vault **1722** and sent to a user for inspection or review. Further, software aircraft parts may be archived in file system **1718.** This type of archiving saves the part in some designated directory or other storage device. Further, parts vault **1722** also may scan certificates for parts within file system **1718** to identify whether any certificates signing the part have expired. A notification of expiration may be generated in advance through user interface system **1702.** Further, expiration of a certificate also causes parts vault **1722** to disable any commands that contain the part.

Library **1700** also may be used to create and distribute commands to outside devices. These commands may be created by an operator through user interface system **1702.** User interface system **1702** allows a user to enter information for commands. Once the commands are generated, these commands are stored within database **1720.**

When these commands are needed by external devices, the commands may be crated and sent via interfaces **1706.** In particular, web service **1716** may be used to send these commands to an outside component, such as a proxy server application or software maintenance tool. If software aircraft parts are specified by a command, these parts may be sent in a separate transfer through hypertext transport protocol service **1714,** in these examples. These software aircraft parts may be sent when requested or sent as part of the transfer, depending on the particular implementation.

Additionally, reports are examples of other data that may be stored in file system **1718.** These reports may be, for example, spreadsheets, parts lists, and live reports.

Information obtained from downlinking data, such as files and device logs, may be stored within file system **1718.** These files may be aggregated using imported files aggregator **1730.** This component may accept files and create metadata entries in database **1720,** in addition to saving the files within file system **1718.**

The different components illustrated for library **1700** are presented as one example of communication for different functions. The presentation and organization of these different components is not intended to imply architectural limitations on the manner in which the components may be implemented. For example, the different components within library **1700** may be subdivided or combined in other fashions other than that as displayed. Additionally, in other implementations, some functions may be omitted or other functions may be added. Further, some functions may be combined and implemented as a single module or application within library **1700.** As another example, interfaces **1706** may be implemented using other interfaces in addition to or in place of the ones illustrated.

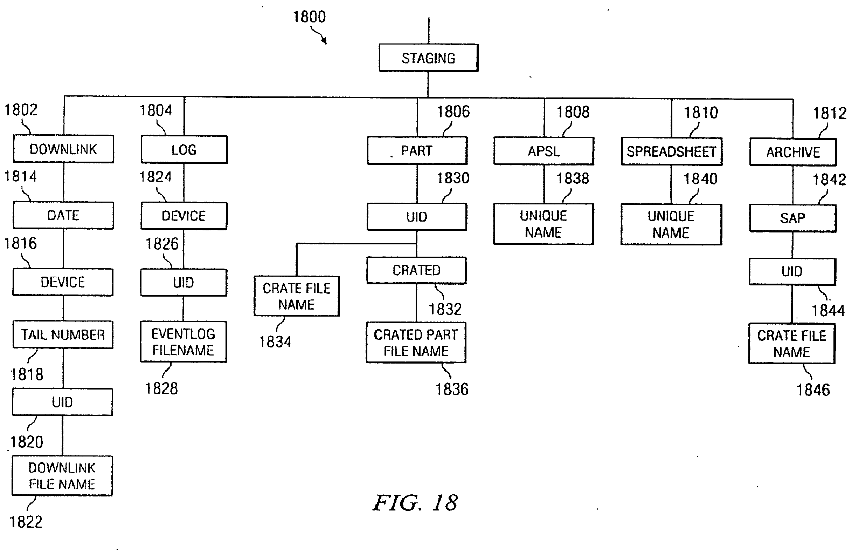

Turning now to **Figure 18****,** a diagram illustrating a file system directory layout is depicted in accordance with an advantageous embodiment. File system directory layout **1800** is an example of a layout or schema used within file system **1718** in **Figure 17****.** In this example, file system directory layout **1800** defines information used to locate files within file system **1718** in **Figure 17****.** The file types include, for example, downlink **1802,** log **1804,** part **1806,** alternate part sign list (APSL) **1808,** spreadsheet **1810,** and archive **1812.**

Each of these types of files are identified within file system directory layout **1800** with different types of information. For example, downlink **1802** includes date **1814,** device **1816,** tail number **1818,** unique identifier (UID) **1820,** and downlink file name **1822.** Date **1814** identifies the creation date of the downlink file. Device **1816** identifies the device that transferred the downlink data from the aircraft to the library. This device may be, for example, a proxy server application or software maintenance tool. Tail number **1818** identifies a particular aircraft on which the downlink data was located. Unique identifier **1820** uniquely identifies the file within the file system. Downlink file name **1822** is the name of the downlink file.

Next, log **1804** includes device **1824,** unique identifier (UID) **1826,** and eventlog filename **1828.** Part **1806** is for a software aircraft part and includes unique identifier (UID) **1830,** crated **1832,** crate file name **1834,** and crated part file name **1836.** Crated **1832** identifies a directory in which the crate, containing the software aircraft part, is located. Crate file name **1834** is a name of the crate file. Crated part file name **1836** is the name of the file containing the software aircraft part.

Alternate part signature list **1808** includes unique name **1838,** and spreadsheet **1810** includes unique name **1840.** Archive **1812** includes software aircraft part (SAP) **1842,** unique identifier (UID) **1844,** and crate file name **1846.**

File system directory layout **1800** is provided as an example of one implementation for file system **1718** in **Figure 17****.** In other advantageous embodiments, other file system layouts or schemas may be used, which are suitable for the particular implementation.

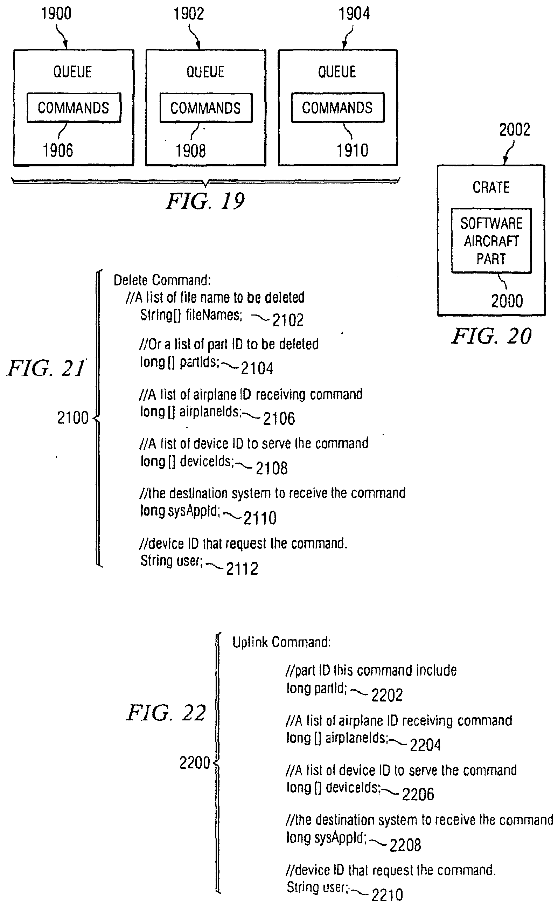

With reference now to **Figure 19****,** a block diagram illustrating an organization of commands in queues is depicted in accordance with an advantageous embodiment. In this example, queues **1900, 1902,** and **1904** are examples of queues that are located in database **1720** in **Figure 17****.**

Queue **1900** includes commands **1906;** queue **1902** includes commands **1908;** and queue **1904** includes commands **1910.** Commands **1906, 1908,** and 1910 are commands destined for a particular aircraft, in these examples. The commands may be, for example, uplink commands, downlink commands, or delete commands. An uplink command is a command that sends information from library **1700** in **Figure 17** to an aircraft, while a downlink command is a command that sends information from an aircraft to library **1700** in **Figure 17****.**

A delete command is a command that is used to delete information on the aircraft. This information may be, for example, a software aircraft part, a configuration file, or a manual. Each of these queues, in these examples, is associated with a particular ground tool or device. In these examples, queues **1900, 1902,** and **1904** are associated or designated for different devices that are to distribute the commands to aircraft.

For example, queue **1900** may be associated with a first proxy server application, queue **1902** with a second proxy server application, and queue **1904** with a software maintenance tool. When different devices contact library **1700** in **Figure 17****,** commands are distributed to those devices based on whether commands are present in the queues associated with those devices.

Turning now to **Figure 20****,** a block diagram of a software aircraft part is depicted in accordance with an advantageous embodiment. In this example, software aircraft part **2000** is stored in crate **2002.** Crate **2002** is stored within file system **1718** in **Figure 17****.**

Crate **2002** is a file, in these examples. Crate **2002** may be, for example, without limitation, in a zip file format. Crate **2002** also may in some embodiments contain more than one software aircraft part. Software aircraft part **2000** may include a set of files that provide functionality for the particular part. These files may include, for example, executable files, data files, configuration files, and library files.

In the depicted embodiments, crate **2002** and software aircraft part **2000** are signed. In other words, software aircraft part **2000** is signed with one digital signature, while crate **2002** is signed with another digital signature. These digital signatures may be the same or different, depending on the particular embodiment. Of course, in other implementations, software aircraft part **2000** may not be stored in crate **2002.**

With reference now to **Figures 21-23****,** examples of command data structures are depicted in accordance with an advantageous embodiment. The different command data structures illustrated in these figures are examples of temporary data structures created from commands stored in queues, such as queues **1900, 1902,** and **1904** in **Figure 19****.**

Turning now to **Figure 21****,** a command data structure for a delete command is depicted in accordance with an advantageous embodiment. In this example, delete command data structure **2100** includes parameters **2102, 2104, 2106, 2108, 2110,** and **2112**.

Parameter **2102** identifies a set of file names to be deleted. Parameter **2104** identifies a set of part identifiers to be deleted. Parameter **2106** is a set of airplane identifiers that identify the particular aircraft to receive the delete command. This list of airplane identifiers may be, for example, tail numbers. Parameter **2108** identifies a set of devices that are to send the command. These devices may be, for example, ground tools, such as a proxy server application or software maintenance tool.

Parameter **2110** identifies the destination system to receive the command. In these examples, the destination system is the particular line replaceable unit that is to receive the command. Parameter **2112** identifies a user that requests the command.

In **Figure 22****,** a diagram illustrating a command data structure for an uplink command is depicted in accordance with an advantageous embodiment. In this example, uplink command data structure **2200** includes parameters **2202, 2204, 2206, 2208,** and **2210.** Parameter **2202** identifies the software aircraft part to be uplinked or sent. Parameter **2204** identifies a set of airplanes to receive the commands. These parameters contain aircraft identifiers. Parameter **2206** is a set of device identifiers for devices to process the command. Parameter **2208** is a set of parameters identifying the destination system to receive the command. Parameter **2210** identifies the user that requested the command.

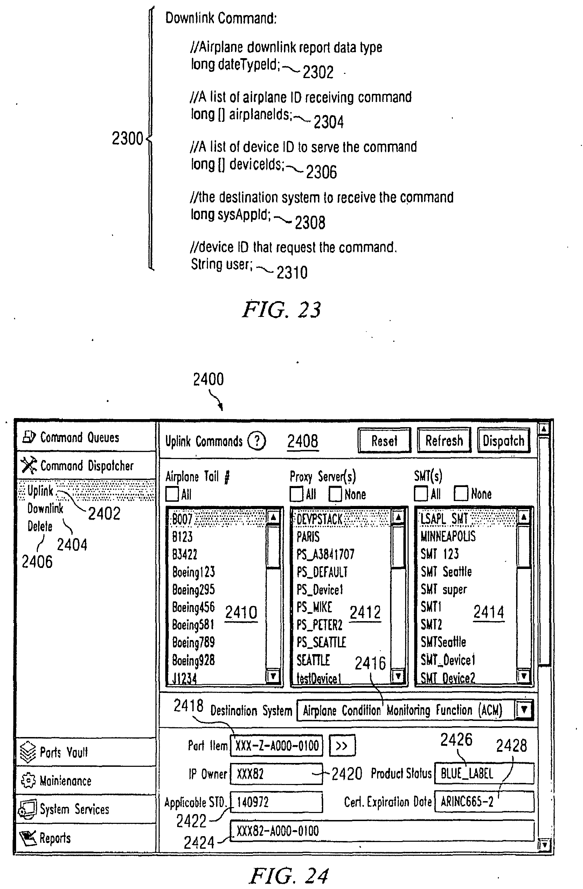

Turning next to **Figure 23****,** a diagram illustrating a data structure for a downlink command is depicted in accordance with an advantageous embodiment. In this example, downlink command data structure **2300** includes parameters **2302, 2304, 2306, 2308,** and **2310.**

Parameter **2302** identifies the type of data that is being downlinked. Parameter **2304** identifies a set of aircraft to receive the command to downlink data. Parameter **2306** is for a set of devices to send the command to the set of aircraft. Parameter **2308** identifies a set of line replaceable units on the set of aircraft to receive the command. Parameter **2310** identifies a user that requests the command.

These command data structures are an abbreviated form of the commands that allow devices, such as a proxy server application or software maintenance tool, to begin processing the commands referenced by the command data structures. These command data structures may reduce the amount of traffic across various communications links, in these examples. The devices may request the actual commands after receiving these command data structures. These command data structures are deleted after being sent to the ground tools, in these examples.

With reference now to **Figure 24****,** a diagram of a user interface for dispatching commands is depicted in accordance with an advantageous embodiment. Window **2400** is an example of a user interface that may be presented through user interface system **1702** for command dispatcher **1724** in **Figure 17****.**

In this example, a user may select between creating commands, such as uplink commands and downlink commands. This selection may be made through controls **2402** and **2404.** Control **2402** may be used to generate an uplink command, while control **2404** may be used to generate a downlink command. Control **2406** may be used to generate delete commands.

In this depicted example, control **2402** has been selected, resulting in section **2408** being displayed within window **2400.** Section **2408** provides a user an ability to input information to create an uplink command. For example, the user may select an airplane tail number from list **2410.** These airplane tail numbers are unique to particular aircraft.

The user also may select a device in the form of a proxy server application from list **2412** to distribute the command. Also, devices in the form of software maintenance tools may be selected through list **2414.** The destination system on the aircraft may be selected through field **2416.** The destination system is a particular line replaceable unit, in these examples. Field **2418** allows the entry of a part number. Entry of this part number provides other information about the part shown in fields **2420, 2422, 2424, 2426,** and **2428.** The particular information displayed about the part may vary, depending on the particular implementation.

Field **2416** has different selectable values for different command types and the rules are enforced by Field **1724** that are represented in control **1702** and control **1704** in **Figure 17****.**

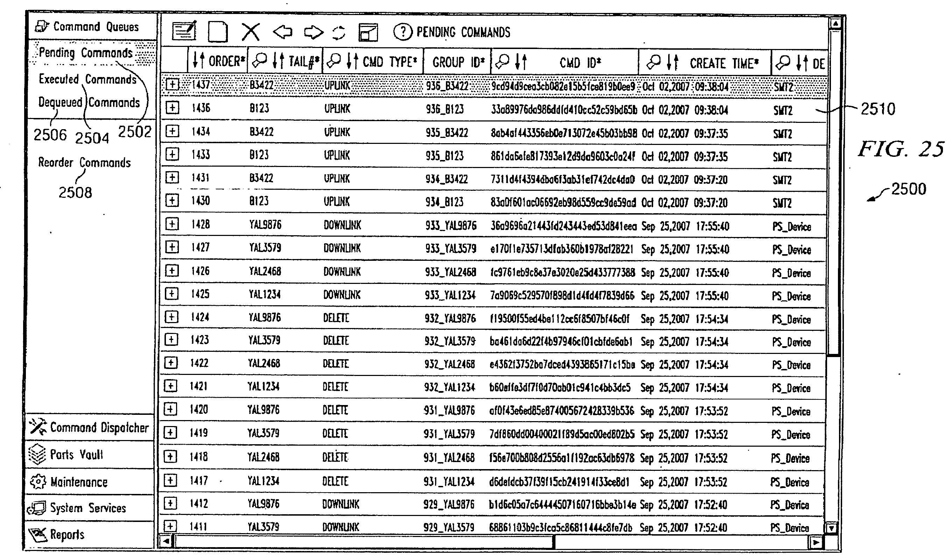

**Figures 25-26** are diagrams of graphical user interfaces in accordance with an advantageous embodiment. These graphical user interfaces are examples of interfaces that may be presented through user interface system **1702** in **Figure 17****.** These depicted graphical user interfaces are presented for purposes of illustrating one particular implementation and not meant to limit the manner in which a graphical user interface may be designed or presented by user interface system **1702** in **Figure 17****.**

Turning to **Figure 25****,** a diagram illustrating and user interface for viewing commands is depicted in accordance with an advantageous embodiment. In this example, window **2500** is an example of a graphical user interface that may be displayed through user interface system **1702** for command queue manager **1726** in **Figure 17****.** In this example, the user may view the status of various commands. In particular, specific types of commands may be viewed through window **2500.**

Commands may be viewed using controls **2502, 2504,** and **2506.** Pending commands may be viewed by selecting control **2502,** executed commands may be viewed by selecting control **2504,** and dequeued commands may be viewed by selecting control **2506.** A user may reorder or change the order in which commands are stored in the queue through control **2508.** In this example, pending commands have been selected and are displayed within section **2510** of window **2500.**

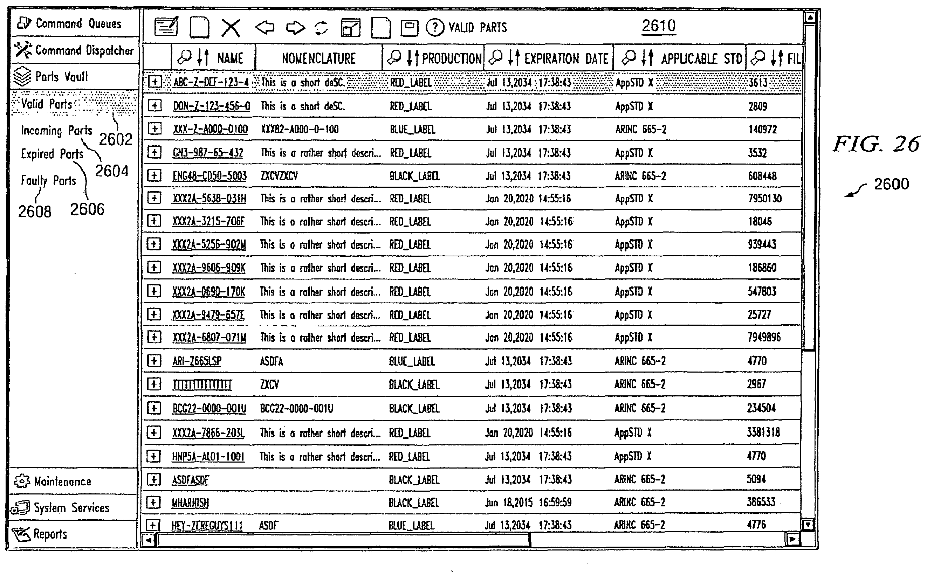

With reference now to **Figure 26****,** a diagram of a user interface for viewing parts is depicted in accordance with an advantageous embodiment. Window **2600** is an example of a graphical user interface presented through user interface system **1702** for parts vault **1722** in **Figure 17****.**

In this depicted example, software aircraft parts within the library may be viewed. Valid parts may be viewed through the selection of control **2602,** incoming parts may be viewed through the selection of control **2604,** expired parts may be viewed through the selection of control **2606,** and faulty parts may be viewed through the selection of control **2608.** In this example, control **2602** has been selected and valid parts located within the library are displayed within section **2610** of window **2600.**

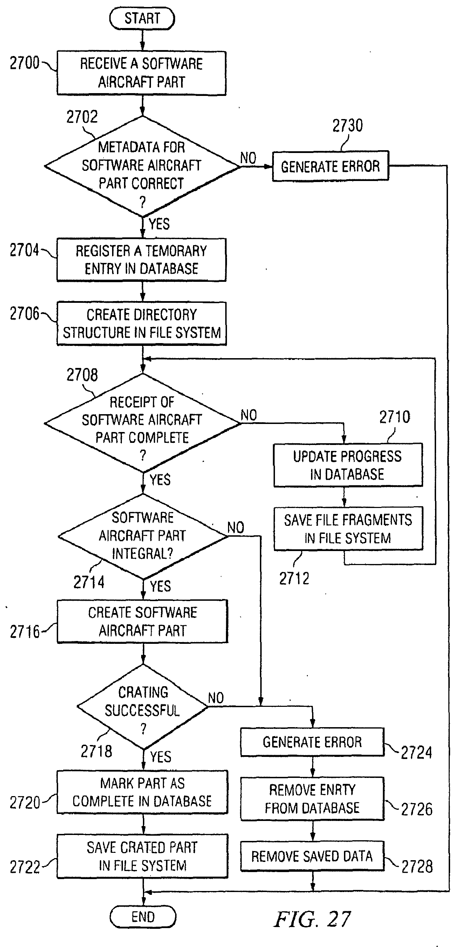

With reference now to **Figure 27****,** a flowchart of a process for receiving software aircraft parts in a library is depicted in accordance with an advantageous embodiment. The process illustrated in **Figure 27** may be implemented in library **1700** in **Figure 17****.** In particular, these processes may be implemented in parts vault **1722** within management components **1710** of library **1700** in **Figure 17****.**

The process begins by receiving a software aircraft part (operation **2700**). In receiving the software aircraft part, metadata is received as well as a stream of data for the software aircraft part. The process determines whether the metadata for the software aircraft part is correct (operation **2702**). In these examples, the metadata is data that is associated with and/or describes the software aircraft part.

In these examples, the following metadata may be checked: whether part name conforms to the regular expression [^∼/:*?\"<>,|.\\]* and less or equal to 200 characters; whether the production status is BLACK_LABEL, RED_LABEL, or BLUE_LABEL; whether the applicable standard is of a length greater or equal to 0 and less or equal to 500 characters; whether the intellectual property owner is of a length greater or equal to 0 and less or equal to 100 characters; whether the release date has a correct date format; and whether the description is of a length greater or equal to 0 and less or equal to 2000 characters.

If the metadata for the part is correct, the process registers a temporary entry in the database in the library (operation **2704**). This temporary entry is used to provide a status of the process for receiving the part. The entry initially indicates that the receiving of the part has begun. The process also creates a directory structure in the file system (operation **2706**). This directory structure is used to save portions or fragments of the file containing the software aircraft part as the file is received.

A determination is made as to whether the receipt of the software aircraft part is complete (operation **2708**). If the receipt of the software aircraft part is not complete, the progress is updated in the database (operation **2710**), and the file fragments received are saved in the file system (operation **2712**). This progress may be displayed in the user interface. The process then returns to operation **2708** to continue checking the status of the received operation for the software aircraft part.

When the receipt of the software aircraft part is complete in operation **2708,** the process determines whether the part is integral (operation **2714**). This operation is performed to determine whether the software aircraft part is complete and whether the part has errors. The check may be made by matching a certificate to the received part.

If the software aircraft part is integral, the process crates the software aircraft part (operation **2716**). The process then determines whether the crating operation was successful (operation **2718**). If the crating was successful, the part is marked as complete in the database (operation **2720**). The crated file is saved in the file system for later retrieval (operation **2722**), with the process terminating thereafter.

With reference again to operation **2718,** if the crating operation is not successful, an error is generated (operation **2724**). Thereafter, the process removes the entry from the database (operation **2726**), and removes the saved data for the software aircraft part (operation **2728**), with the process terminating thereafter. With reference again to operation **2714,** if the software aircraft part is not integral, the process also proceeds to operation **2724.** Operations **2726** and **2728** are performed to cleanup the database entry and the file system entry for the failed receipt of the software aircraft part.

With reference again to operation **2702,** if the metadata for the software aircraft part is not correct, the process generates an error (operation **2730**), with the process terminating thereafter. The errors generated in operations **2730** and **2724** may be stored in a log for later use.

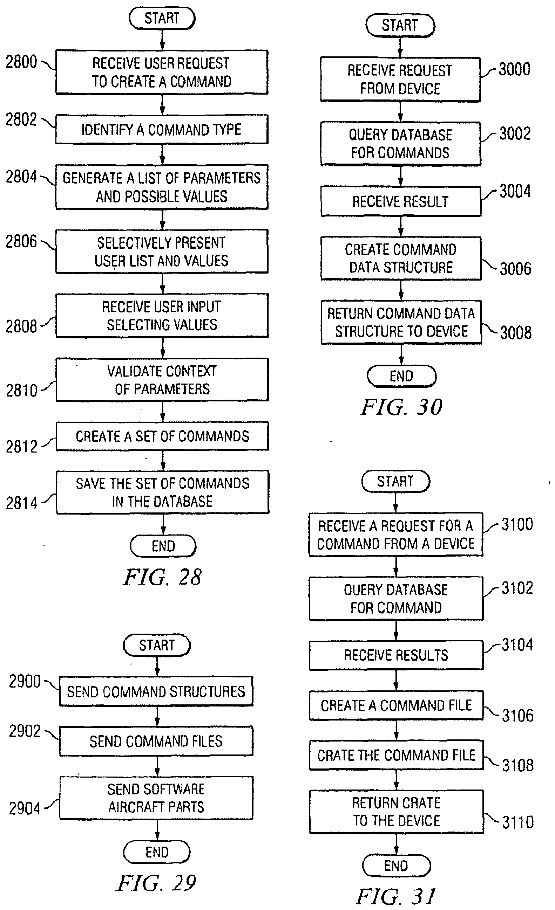

Turning now to **Figure 28****,** a flowchart of a process for creating a command is depicted in accordance with an advantageous embodiment. The process illustrated in **Figure 28** **may** be implemented in library **1700** in **Figure 17****.** In particular, this process may be implemented in command dispatcher **1724** in **Figure 17****.**

The process begins by receiving a user request to create a command (operation **2800**). This command may be received through a user interface, such as that provided through user interface system **1702** in **Figure 17****.** A user may select one of three command types, in these examples. The command types include uplink, downlink, and delete. The process identifies a command type from the user input (operation **2802**).

In response to the type of command identified, the process generates a list of parameters and possible values (operation **2804**). This list includes, for example, aircraft tail numbers, applicable device name lists, and destination line replaceable units to receive the command. The process then selectively presents the list and values to the user (operation **2806**). In these examples, the list is a context sensitive list that provides additional options or values, depending on the previous selections made by the user.

The process receives user input selecting values from the presented list and values (operation **2808**). The process then validates the context of the parameters (operation **2810**). In these examples, the context sensitive values exist in user interface **1702** in **Figure 17****.** This interface implements what is allowable within a command type the values of destination systems. Operation **2810** rechecks these rules at backend **1704** in **Figure 17****.** Backend **1704** may serve other user interface other than user interface **1702** in **Figure 17** that may not have the same validation rules.

The process creates a set of commands (operation **2812**). In operation **2812,** the process creates a command for each combination of command type, tail number, and device name. Of course, other rules and policies may be used to identify what commands are created from the user selections. Typically, all commands of the same type and target to the same aircraft may be logically grouped. Thereafter, the set of commands is saved in the database in the library (operation **2814**), with the process terminating thereafter.

With reference to **Figure 29****,** a high level flowchart of a process for managing software aircraft parts is depicted in accordance with an advantageous embodiment. The process illustrated in **Figure 29** may be implemented in library **1700** in **Figure 17****,** in these examples.

The process begins by sending command structures to distribution devices (operation **2900**). These command structures may be, for example, delete command data structure **2100** in **Figure 21****,** uplink command data structure **2200** in **Figure 22****,** or downlink command or data structure **2300** in **Figure 23****.** These command structures are sent in response to requests for commands from various devices, such as a proxy server application or software maintenance tool.

Thereafter, command files are sent to the devices (operation **2902**). These command files are sent in response to requests for the commands themselves when a particular device executes a command. Command structures are sent instead of sending command files to reduce the amount of traffic that may occur from constant polling by various devices. Instead, command files are sent when devices actually begin executing the commands. Thereafter, the process sends the software aircraft parts (operation **2904**), with the process terminating thereafter. In this operation, the aircraft parts are sent as part of the execution of a command.

Turning now to **Figure 30****,** a flowchart of a process for dispatching command structures is depicted in accordance with an advantageous embodiment. The process illustrated in **Figure 30** is a more detailed description of operation **2900** in **Figure 29****.**

The process begins by receiving a request from a device (operation **3000**). In these examples, the device may be, for example, a proxy server application or a software maintenance tool. Of course, the device may be any device that contacts or connects to the library to obtain commands.

The process then queries the database for commands associated or placed in a command queue for the particular device (operation **3002**). Operation **3002** may be implemented using command queue manager **1726** in **Figure 17****.** The process receives a result from the query (operation **3004**).

Thereafter, the process creates a command data structure containing the commands for the device (operation **3006**). The process then returns the command data structure to the device (operation **3008**), with the process terminating thereafter. In these examples, the command data structures are created upon a request by a device for commands. In other embodiments, the command data structures may be created and broadcast to many devices based on some event or on a period event, such as the expiration of a timer.

Turning now to **Figure 31****,** a flowchart of a process for dispatching command files is depicted in accordance with an advantageous embodiment. The process illustrated in **Figure 31** is a more detailed description of operation **2902** in **Figure 29****.** The process illustrated in **Figure 31** may be implemented in a component, such as command dispatcher **1724** in **Figure 17****.**

At this point in the process, the device has received a command data structure for processing. The device may perform some processing of the command based on this command data structure. For example, the device may begin to establish a communications link with the aircraft. The command data structure provides sufficient information for the device to perform various processes. The propagation of the command to the aircraft, however, requires additional information in a command file.

The process begins by receiving a request for a command file from a device (operation **3100**). The process queries the database for the command identified by the device (operation **3102**). This query is made using a unique identifier previously sent in the command structure.

The process then receives results from the database (operation **3104**). Operation **3102,** in these examples, queries the database based on a command ID and retrieves all the information about the command which is used to created a crated version of the command in extensible markup language. Operation **3104** could be redundant. These results are used to create a command file (operation **3106**). The process crates the command file (operation **3108**). Thereafter, the process returns the crate to the device (operation **3110**), with the process terminating thereafter.

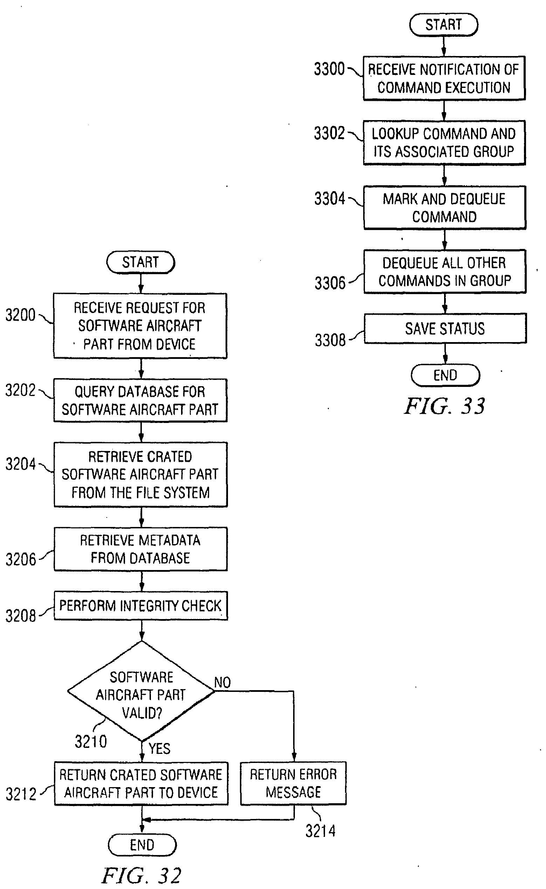

With reference now to **Figure 32****,** a flowchart of a process for dispatching parts is depicted in accordance with an advantageous embodiment. The process illustrated in **Figure 32** is a more detailed description of operation **2904** in **Figure 29****.** The process in this example may be implemented using command dispatcher **1724** in **Figure 17****.**

The process begins by receiving a request for a software aircraft part from a device (operation **3200**). The process queries the database for the software aircraft part (operation **3202**). The process retrieves the crated software aircraft part from the file system (operation **3204**), and retrieves metadata for the software aircraft part from the database (operation **3206**). The process then performs an integrity check on the software aircraft part (operation **3208**). The integrity check is performed to ensure that the software aircraft part has not been corrupted while being stored. This integrity check may be made using various error checking processes, including hashing.

A determination is made as to whether the software aircraft part is valid based on the integrity check (operation **3210**). If the software aircraft part is valid, the crated software aircraft part is returned to the device (operation **3212**), with the process terminating thereafter. On the other hand, if the software aircraft part is not valid, an error message is returned (operation **3214**), with the process terminating thereafter.

Turning now to **Figure 33****,** a flowchart of a process for dequeuing commands is depicted in accordance with an advantageous embodiment. The process illustrated in **Figure 33** may be performed by command queue manager **1726** in **Figure 17****.** This process is used to remove commands from the queue in the database after the commands have been processed.

The process begins by receiving notification of a command execution (operation **3300**). In this example, the notification is received from the device executing the command. The process looks up the command and its associated group (operation **3302**). This lookup is performed using a unique identifier for the command. Additionally, other commands associated with the executed commands are redundant commands that may have been sent to different devices for the same aircraft.

The process marks and dequeues the command from the command queue in the database (operation **3304**). The process also dequeues all other commands in the group (operation **3306**). This dequeuing of other commands prevents redundant commands being dispatched to different devices in the future. Thereafter, the status is saved (operation **3308**), with the process terminating thereafter.

### PROXY SERVER

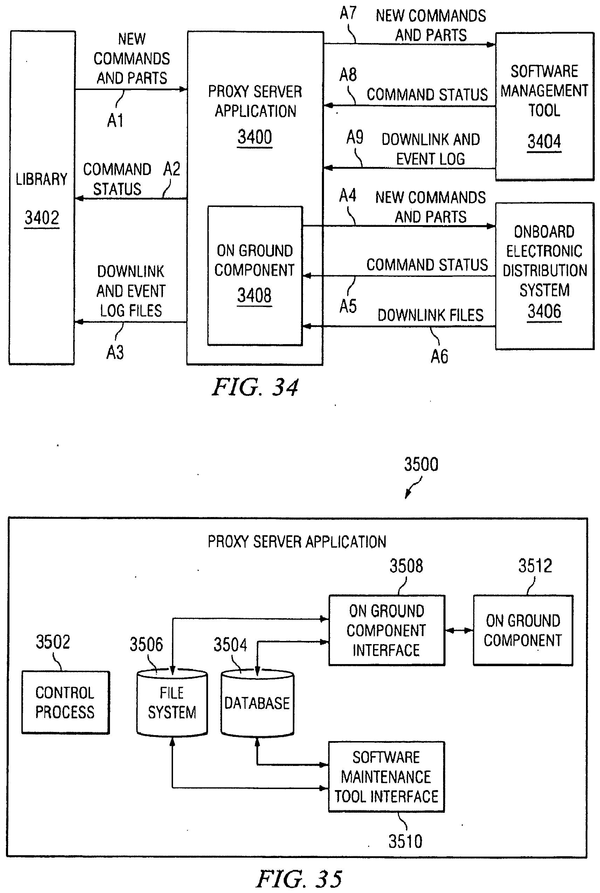

Turning now to **Figure 34****,** a diagram illustrating data flow in a proxy server application is depicted in accordance with an advantageous embodiment. Proxy server application **3400** interacts with components such as library **3402,** software maintenance tool **3404,** and onboard electronic distribution system **3406.** In these examples, on ground component **3408** provides for transfer of information between library **3402** and onboard electronic distribution system **3406.**

Library **3402** may send new commands and software aircraft parts to proxy server application **3400** (message **A1**). The results of the processing of those commands and parts may be returned to library **3402** by proxy server application **3400** as command status information (message **A2**). Additionally, proxy server application **3400** also may send downlink and event log files to library **3402** (message **A3**).

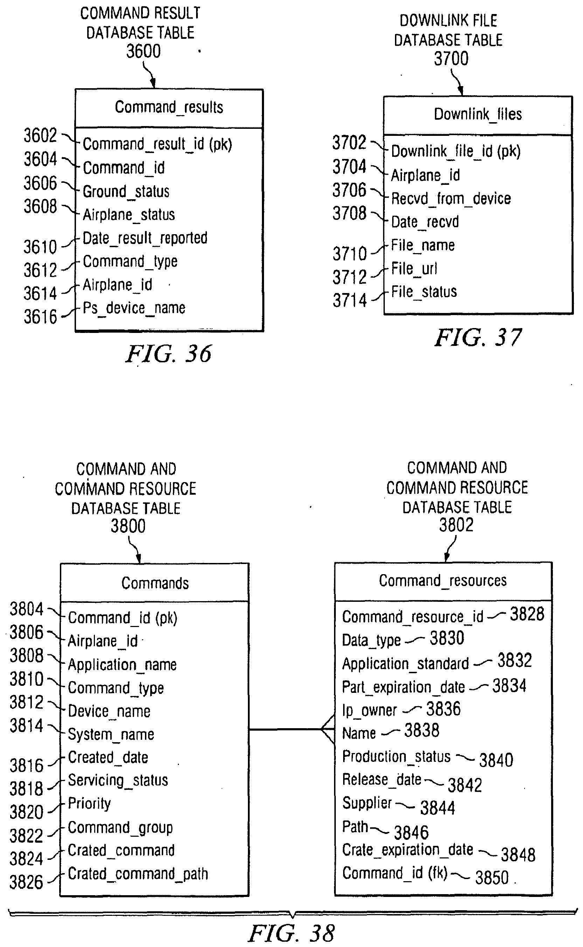

With respect to transferring information with onboard electronic distribution system **3406,** on ground component **3408** and proxy server application **3400** may send new commands and software aircraft parts to onboard electronic distribution system **3406** (message **A4**). Command status information may be returned to on ground component **3408** identifying the status of commands and parts sent to onboard electronic distribution system **3406** (message **A5**). Additionally, onboard electronic distribution system **3406** may send downlink files to on ground component **3408** (message **A6**). Proxy server **3400** is an example of a proxy server application, such as proxy server application **3606** in **Figure 36****.**

Proxy server application **3400** may send new commands and parts to software maintenance tool **3404** (message **A7**). Software maintenance tool **3404** may return command status after the processing of those files (message **A8**) and send downlink files or event logs (message **A9**). In these examples, software maintenance tool **3404** may communicate with onboard electronic distribution system **3406.** Software maintenance tool **3404** provides an alternate route for exchanging information with onboard electronic distribution system **3406.** Software maintenance tool **3404** is located in a portable data processing system, which may be moved from a location associated with proxy server application **3400** to the aircraft in which onboard electronic distribution system **3406** is located. These details are described in more detail with respect to the description of software maintenance tool **3404** below.

Although the different interactions have been described in a particular order, any of the different messages and interactions may occur simultaneously at any time.

For example, proxy server application **3400** may send commands and aircraft parts to onboard electronic distribution system **3406** at the same time onboard electronic distribution system **3406** downloads downlink data to proxy server **3400.** Further, proxy server application **3400** may simultaneously service multiple aircraft clients, such as software maintenance tool **3404** and onboard electronic distribution system **3406.**

With reference now to **Figure 35****,** a diagram illustrating a proxy server application is depicted in accordance with an advantageous embodiment. Proxy server application **3500** is an example implementation of proxy server application **3400** in **Figure 34****.** In this example, proxy server application **3500** includes control process **3502,** database **3504,** file system **3506,** on ground component interface **3508,** software maintenance tool interface **3510,** and on ground component **3512.** These two interfaces may be implemented using application programming interface (API) calls, in these examples.

Database **3504** contains commands processed by control process **3502.** Each of the records in database **3504** may identify the status of a command. For example, a record may identify whether a command has been processed, as well as the target aircraft and target line replaceable unit on the aircraft. File system **3506** stores software aircraft parts and downlink data, in these examples.

On ground component **3512** is a software component in proxy server application **3500** that communicates with the onboard electronic distribution system on the aircraft. On ground component application program interfaces **3508** provide calls that may be used by control process **3502** to exchange information with on ground component **3512.**

On ground component **3512** functions to allow any processes, such as control process **3502** in proxy server application **3500,** to communicate with an onboard electronic distribution system without having to be specifically designed to communicate with the onboard electronic distribution system. As a result, control process **3502** may be change or modified without having to include protocols used to communicate with the onboard electronic distribution system. Further, changes to an onboard electronic distribution system may occur without requiring changes to all of the processes in proxy server application **3500.** Instead, modification or changes may be made to on ground component **3512.**

Software maintenance tool application programming interfaces **3510** provide calls that may be used by control process **3502** to communicate with a software maintenance tool. The structure and organization of database **3504** and file system **3506** may be similar to that used in a library within the software aircraft part maintenance environment.

Turning to **Figures 36-39****,** diagrams illustrating data structures used in database **3504** in **Figure 35** are depicted in accordance with an advantageous embodiment. Command result database table **3600** illustrates information and records for command results. Command result database table **3600** includes command result identifier **3602,** command identifier **3604,** ground status **3606,** aircraft status **3608,** date **3610,** command type **3612,** aircraft identifier **3614,** and device name **3616.**

Command result identifier **3602** uniquely identifies a specific command result record, and command identifier **3604** uniquely identifies a specific command record. Command Identifier **3604** may be found in various tables to relate data in the tables to a specific command record. Ground status **3606** identifies the origination of the command status messages, which may be from an on ground component or an onboard electronic distribution system in these examples. Aircraft status **3608** is a command status message that can originate from an on ground component or an onboard electronic distribution system. The ground status identifies the status of the uplink or downlink of the file being uplinked or downlinked.

This information provides the percentage completeness of the actual uplink or downlink of the file. Each percentage may be reported as a separate status. Using an uplink as an example, a status message of one-quarter done, followed by a one-half done status message, then a three-quarters done message, and finally a done status message would all be sent as the contents of the file was being sent to the onboard electronic distribution system. The reporting of each message would be an indication that the appropriate amount of the file contents had been successfully delivered. The same may occur with file contents being written to the ground component during a downlink operation.

Date **3610** identifies the date that the particular device sent the command result. Command type **3612** identifies the type of command, such as uplink, downlink, or delete. Aircraft identifier **3614** is a unique value identifying a specific aircraft within an airline's fleet of aircraft. Device name **3616** identifies the name of the device sending the command result to the proxy server application.

Turning now to **Figure 37****,** a diagram of a downlink file database table is depicted in accordance with an advantageous embodiment. In this example, downlink file database table **3700** illustrates information in a downlink file database table. Downlink file database table **3700** includes downlink file identifier **3702,** airplane identifier **3704,** device **3706,** date **3708,** file name **3710,** file universal resource locator **3712,** and file status **3714.**

With reference now to **Figure 38****,** command and command resource database tables are depicted in accordance with an advantageous embodiment. In this example, command database table **3800** represents commands, while command resources database table **3802** represents command resources. Command database table **3800** includes command identifier **3804,** airplane identifier **3806,** application name **3808,** command type **3810,** device name **3812,** system name **3814,** date **3816,** servicing status **3818,** priority **3820,** command group **3822,** crated command **3824,** and crated command path **3826.**

Command resources database table **3802** includes command resource identifier **3828,** data type **3830,** application standard **3832,** part expiration date **3834,** owner **3836,** name **3838,** production status **3840,** release date **3842,** supplier **3844,** path **3846,** crate expiration date **3848,** and command identifier **3850.** Command resources identified in command resources database table **3802** are software aircraft parts in crates for uplink commands, file or configuration reports for downlink commands, and files or software aircraft part files for delete commands.

Command identifier **3804** uniquely identifies this specific command result record. Airplane identifier **3806** identifies a particular aircraft. Application name **3808** identifies the line replaceable unit and the aircraft. For example, application name **3808** may identify a particular line replaceable unit. Device name **3812** identifies the different devices for which the command is dispatched to an aircraft. The device name identifies, for example, a particular proxy server application or software maintenance tool.

In these examples, the name may be a specific name for the particular proxy server application or software maintenance tool. System name **3814** identifies the name of the system on which the application is present. Date **3816** identifies the date that the command was created by the command dispatcher in the library.

Servicing status **3818** is used to identify the status of a command. This field may identify commands that have been successfully sent to the onboard electronic distribution system and to identify commands that a software maintenance tool has reported as being successfully uplinked to an onboard electronic distribution system.

Priority **3820** is a value used to order commands within queues for distribution to an onboard electronic distribution system. Command group **3822** may be used to group commands. Crated command **3824** is the name of the file containing the crated format of the command. Crated command path **3826** is a path identifying the location of where the grated command is stored.

In command resources database table **3802,** command resource identifier **3828** uniquely identifies the command resource record. Data type **3830** identifies the type of data for the resource. For example, the data type may be a software aircraft part or a file. Owner **3836** identifies the intellectual property owner of the software aircraft part. Name **3838** is the name of the file or the software aircraft part, in these examples.

Production status **3840** identifies the production status of the software aircraft part within a crate. This status may be, for example, red label, blue label, or black label. A red label part is a non-deliverable, production quality hardware or software part under engineering development. A blue label part is controlled and maintained is restricted for use in a laboratory environment only. A black label part is considered production ready and can be delivered to an airline customer.

Release date **3842** identifies the date that the software aircraft part in the crate was released. Supplier **3844** identifies the supplier of the software aircraft part. Path **3846,** in these examples, identifies the location of the software aircraft part. For example, a universal resource locator string may be used for retrieving the part. Crate expiration date **3848** is the date that the certificated used to sign the crate expires. Command identifier **3850** identifies the specific aircraft command record.

Crated command files may be associated with records in the command table by storing the file name in the crated command field in combination with the file path string. Software aircraft part crate files may be associated to records in the command resource table in command resources database table **3802** by storing the file name in name **3838** in combination with a file path string.

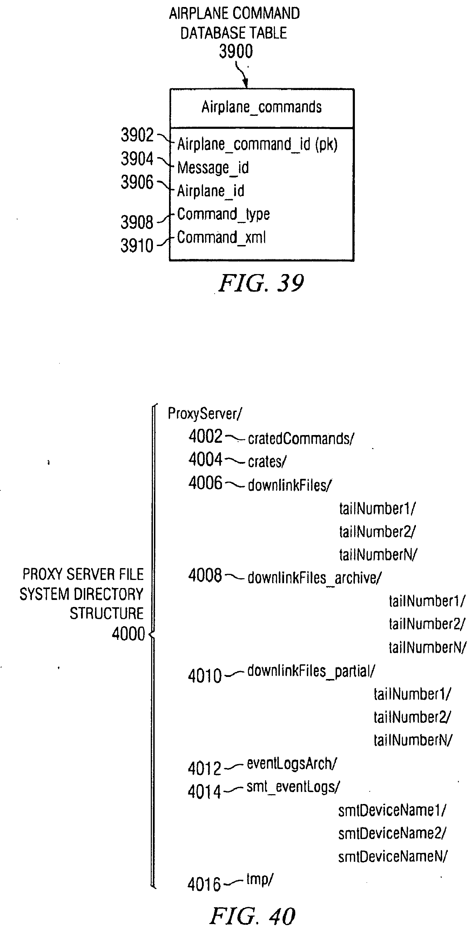

In **Figure 39****,** a diagram illustrating an airplane command database table is depicted in accordance with an advantageous embodiment. In this example, airplane command database table **3900** provides an example of information found for airplane commands. Airplane command database table **3900** includes airplane command identifier **3902,** message identifier **3904,** airplane identifier **3906,** command type **3908,** and command XML **3910.**

Airplane command identifier **3902** is used to uniquely identify the particular aircraft command record. Message identifier **3904** is an identifier for partial downlinks related to a particular downlink command. This identifier is generated for downlink files that are not the result of a downlink command sent to the onboard electronic distribution system. Command XML **3910** identifies the extensible markup language document file format of the particular downlink command that the onboard electronic distribution system sent that will be retrieved when the onboard electronic distribution system requests a partial downlink file.

In these examples, the different tables may be related to each other through the command identifier. The different database table definitions are for different data elements handled by the proxy server application. Different processes may use one or more of these tables to indicate when a record is inserted, updated, or deleted.

Turning now to **Figure 40****,** a diagram of a proxy server file system directory structure is depicted in accordance with an advantageous embodiment. In this example, directory structure **4000** represents a file system directory structure. Directory structure **4000** is an example of one type of directory structure that may be implemented in file system **3506** in **Figure 35****.** Directory structure **4000** may identify different types of files stored within a file system on a proxy server application.

In these examples, directory structure **4000** includes crated commands **4002,** crate **4004,** downlink files **4006,** downlink files archive **4008,** downlink files partial **4010,** archived event file logs **4012,** event log **4014,** and temporary files **4016.** This type of directory structure is used to store files in the file system as well as to identify or locate files within the file system, in these illustrative examples.

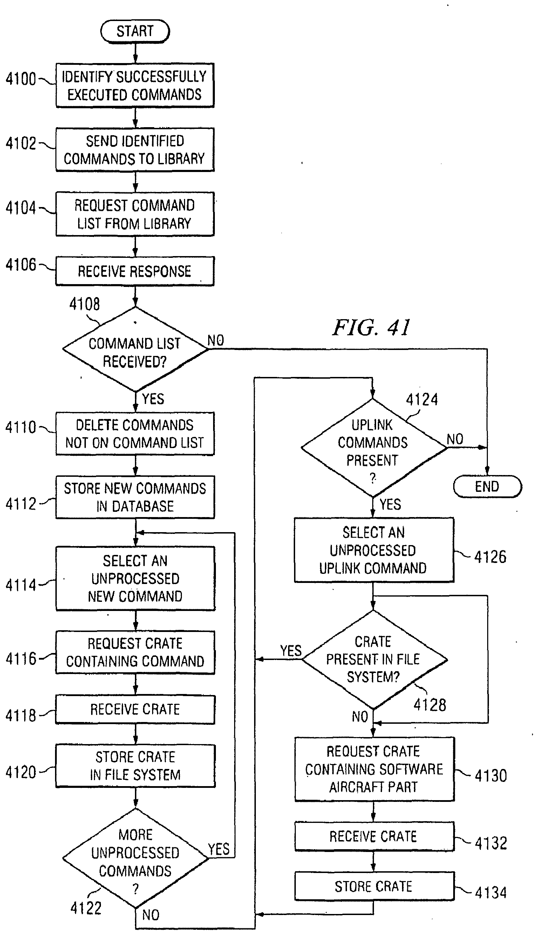

Turning now to **Figure 41****,** a flowchart of a process for receiving information from a library is depicted in accordance with an advantageous embodiment. In this example, the process illustrated in **Figure 41** may be implemented in control process **3502** in **Figure 35****.** This process is used to receive commands and parts from a library in the software aircraft part maintenance environment. This process may be initiated in response to an event. For example, the event may be the expiration of a timer. In other embodiments, the event may be caused by other sources. For example, the event may be initiated by a user input.

The process begins by identifying successfully executed commands (operation **4100**). These commands are ones that the proxy server application sent to a set of aircraft in which the processing of the commands occurred successfully. The commands may be, for example, to delete a software aircraft file, load a software aircraft file, or downlink data from a line replaceable unit on the aircraft.

These commands may be identified from a database within the proxy server application, such as database **3504** in **Figure 35****.** The particular commands may be identified from command identifiers in a command result database table, such as command result database table **3600** in **Figure 36****.** The identification of these commands forms a list of commands that is sent to the library (operation **4102**). Operations **4100** and **4102** are used to send command status information to the library.

Next, the process requests a command list from the library (operation **4104**). Operation **4104** is performed to initiate processing of new commands for distribution to a set of aircraft. The process receives a response from the request (operation **4106**). A determination is made as to whether a command list is received in the response (operation **4108**). If a command list is not received, the process terminates with no new command present to process. Otherwise, the process deletes commands stored within the database that are not found in the new command list received from the library (operation **4110**).

In operation **4110,** the commands that are present in the database with the proxy server application that are not included in the list of commands retrieved from the library are considered to be unnecessary for the proxy server application to process or handle. This feature makes the library the authoritative source for commands that are supposed to be processed and found on different proxy server applications, in these examples.

If the proxy server application receives a command and the command is canceled by a user before processing, the command dispatcher in the library deletes the command for the device. As a result, the proxy server application will not receive the command in the list of commands during a future cycle in which commands are requested. In this manner, a user may remove all the commands for a particular proxy server application by deleting pending commands for that proxy server application from a command queue screen.

Thereafter, the process stores new commands in the database (operation **4112**). In these examples, the command list may be in the form of a command data structure. The proxy server application will selectively request the actual commands themselves either immediately or at some other point in time.

The process then selects an unprocessed new command for the process (operation **4114**). The process requests a crate containing the command (operation **4116**). In response to the request, the process receives the crate (operation **4118**). The received crate is then stored in the file system (operation **4120**). The process then determines whether any unprocessed new commands are still present (operation **4122**). If additional unprocessed new commands are present, the process returns to operation **4114** to select another unprocessed new command for processing.

Otherwise, in operation **4122,** the process determines whether uplink commands are present in the new commands received (operation **4124**). If uplink commands are present, an unprocessed uplink command is selected for processing (operation **4126**). The process then determines whether a crate containing a software aircraft part is already present in the file system (operation **4128**). If a crate is present, the process returns to operation **4124** as described above.

If a crate is not present, the process requests the crate containing the software aircraft part corresponding to the command from the library (operation **4130**). Thereafter, the process receives the crate (operation **4132**) and stores the crate in the file system (operation **4134**).

The process then returns to operation **4124** to determine whether additional unprocessed uplink commands are present. If additional unprocessed uplink commands are not present, the process terminates. Otherwise, the process returns to operation **4126** to select another unprocessed uplink command as described above.

During execution of the process in **Figure 41****,** three types of event log messages are created and recorded. A record indicating that the proxy server application successfully connected to the library is one event recorded in the log. An event indicating that a list of received commands has been received from the library is another event that is recorded. An event is also recorded for each command that is placed into a queue for an aircraft identified by the command. The list of successful commands sent to the library may be used in aiding an airline with planning maintenance operations.

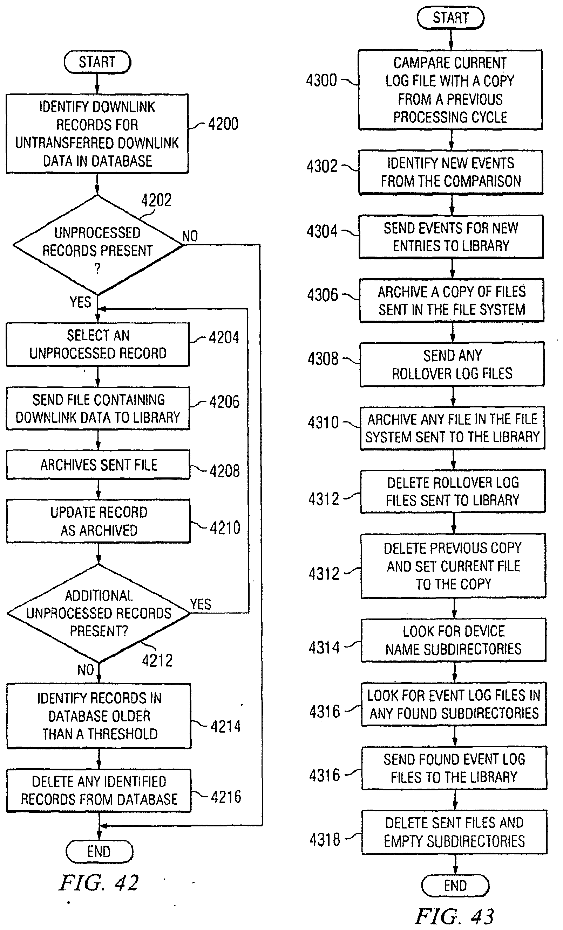

Turning now to **Figure 42****,** a flowchart of a process for sending downlink files to a library is depicted in accordance with an advantageous embodiment. The process illustrated in **Figure 42** may be implemented in a control process, such as control process **3502** in **Figure 35****.** This process illustrates the different operations that occur when a proxy server application sends a downlink file received from an onboard electronic distribution system to a library. This process may be initiated by an event, such as a timer. This process may be initiated at a different time from the process for handling commands that is illustrated in **Figure 41** to help spread out a traffic network and reduce congestion.

The process begins by identifying downlink records for untransferred downlink data in the database (operation **4200**). A determination is made as to whether unprocessed records are present in the database (operation **4202**). If unprocessed records are present, an unprocessed record for a downlink file is selected for processing (operation **4204**). The process sends the file containing the downlink data to the library (operation **4206**).

Thereafter, the process archives the file sent to the library (operation **4208**). The process then updates the database record for the file as being archived (operation **4210**). A determination is then made as to whether additional unprocessed records are present (operation **4212**). If additional unprocessed records are present, the process returns to operation **4204.**

Otherwise, the process identifies records in the database that are older than some selected threshold (operation **4214**). This threshold may be, for example, some selected number of hours since the date and/or time in the timestamp indicating when the downlink file was received. The process deletes any identified records from the database (operation **4216**), with the process terminating thereafter. With reference again to operation **4202,** if unprocessed records are not present, the process also terminates.

Turning now to **Figure 43****,** a flowchart of a process for sending event files to a library is depicted in accordance with an advantageous embodiment. The process illustrated in **Figure 43** may be implemented in a proxy server application component, such as control process **3502** in **Figure 35****.** As with the other processes, the process illustrated in **Figure 43** may be initiated in response to an event, such as a timer.

The process in this figure supports sending event logs back to the library for analysis for use in planning operations, such as maintenance operations. The event log sent to the library in **Figure 43** captures event messages that are the result of user interaction with an application user interface system and/or interface interaction between application components. This type of information may be used during business processes of an airline for reporting during an audit to ensure that various processes are followed for specific operations.

The process begins by comparing a current log file with a copy of the log file from a previous processing cycle (operation **4300**). The process identifies any new events that have occurred from the comparison of the two log files (operation **4302**). The process then sends events for new entries found in comparison to the library (operation **4304**). A copy of the file sent to the file system is archived (operation **4306**). The process then sends any rollover log files to the library (operation **4308**). Rollover log files are files present from a previous period of time, such as a previous date.

The process archives a copy of any files in the file system sent to the library (operation **4310**). The process then deletes the rollover log files sent to the library (operation **4312**). Next, the previous copy of the log file is deleted and the current log file is set as the copy for use in the next comparison (operation **4312**). The process then looks for device name subdirectories within the event logs direction (operation **4314**). In operation **4314,** subdirectories with a device name are created when a proxy server application writes event log files for received files from a software maintenance tool into the file system.

The process looks for event log files in any found subdirectories (operation **4316**). Afterwards, the process sends any event log files found in the subdirectories to the library (operation **4316**). The process then deletes all of the sent files and empties the subdirectories (operation **4318**). The process then terminates.

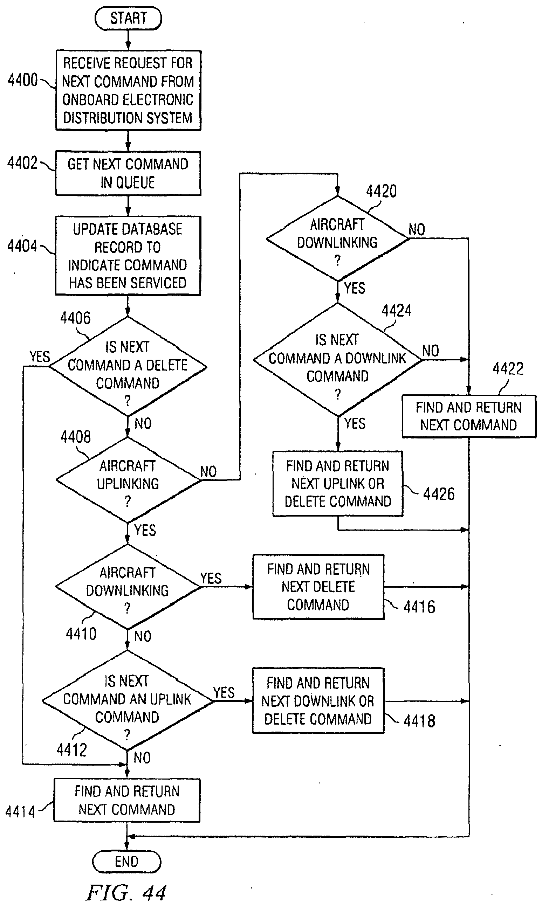

Turning now to **Figure 44****,** a flowchart of a process for sending information to an aircraft is depicted in accordance with an advantageous embodiment. In these examples, the process illustrated in **Figure 44** may be implemented in a software component, such as control process **3502** within proxy server application **3500** in **Figure 35****.** In these examples, the information takes the form of commands and software aircraft parts sent to an onboard electronic distribution system on the aircraft.

The process begins by receiving a request for a next command from the onboard electronic distribution system (operation **4400**). Thereafter, the process obtains the next command requested by the onboard electronic distribution system (operation **4402**). In these examples, the actual file for the command is located in the file system of the proxy server application. The record in the database contains the metadata about the command in the file system.

The process then updates the database record for the command to indicate that the command has been serviced (operation **4404**). The process makes a determination as to whether the next command is a delete command (operation **4406**). If the next command to be processed is not a delete command, the process then makes a determination as to whether the aircraft is currently uplinking information (operation **4408**).

If the aircraft is currently uplinking information, the process determines whether the aircraft is also downlinking information (operation **4410**). If the process is not downlinking information, a determination is made as to whether the next command is an uplink command (operation **4412**). If the next command is not an uplink command, the process finds the next command and returns that command to the onboard electronic distribution system (operation **4414**), with the process terminating thereafter.

With reference again to step **4406,** if the next command to be processed is a delete command, the process proceeds to step **4414** as described above. With reference again to operation **4412,** if the next command is an uplink command, the process finds and returns the next downlink command or delete command for the aircraft (operation **4416**), with the process terminating thereafter. With reference again to operation **4410,** if the aircraft is downlinking, the process finds and returns the next delete command in the queue for the aircraft (operation **4418**), with the process terminating thereafter.

With reference back to operation **4408,** if the aircraft is not uplinking, a determination is made as to whether the aircraft is downlinking (operation **4420**). If the aircraft is not downlinking in operation **4420,** the process finds and returns the next command for the aircraft (operation **4422**), with the process terminating thereafter. If the aircraft is downlinking in operation **4420,** a determination is made as to whether the next command for the aircraft is a downlink command (operation **4424**).

If the next command is not a downlink command the process proceeds to operation **4422** as described above. Otherwise the process finds and returns the next uplink command or delete command (operation **4426**), with the process terminating thereafter.

In these examples, the different decisions in determining which command to send to the aircraft is performed to avoid sending too many uplink and/or downlink commands to the same aircraft at the same time. This type of processing is employed to improve or optimize the use of bandwidth while the aircraft is communicating with the proxy server application. An event log message is written to a log file during this process that reports when the software aircraft part was uplinked to an aircraft. In other advantageous embodiments, other types of decisions may be used to implement other policies that may be desired. For example, certain types of commands may be given preferences over other types of commands. Selected types of aircraft may be given priority over others.

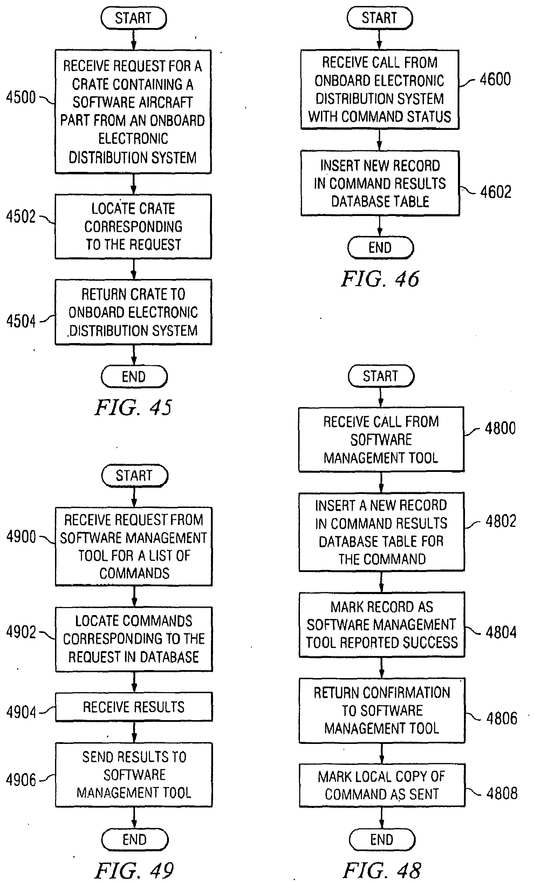

With reference next to **Figure 45****,** a flowchart of a process for receiving software aircraft parts is depicted in accordance with an advantageous embodiment. The process illustrated in **Figure 45** may be implemented in a software component, such as control process **3502** in **Figure 35****.** The process illustrated in this example is used to obtain software aircraft parts from a proxy server application.

The process begins by receiving a request for a crate containing a software aircraft part from an onboard electronic distribution system (operation **4500**). The process locates the crate corresponding to the request (operation **4502**). The process then returns the crate to the onboard electronic distribution system (operation **4504**), with the process terminating thereafter.

Turning now to **Figure 46****,** a flowchart of a process for receiving command status information from an aircraft is depicted in accordance with an advantageous embodiment. The process illustrated in **Figure 46** may be implemented in a software component, such as control process **3502** in **Figure 35****.** This process is used to receive status information from an onboard electronic distribution system on an aircraft.

The process in **Figure 46** is employed to obtain status information regarding the processing of commands on an aircraft. The status information may indicate whether the sending of the command was successful with respect to the particular line replaceable unit. Further, with uplink commands, the status also will indicate whether the software aircraft part is stored on the aircraft and ready for installation. In these examples, the installation of the software aircraft part on the line replaceable unit is one initiated by a mechanic or technician. In other embodiments, this type of installation may be automatic.

The process begins by receiving a call from the onboard electronic distribution system with a command status (operation **4600**). The process inserts a new record in the command results database table with the information from the command status (operation **4602**), with the process terminating thereafter.

With this information, the proxy server application may send the status information back to the library as to whether the command was successful. This information allows an identification of when software aircraft parts are present on an aircraft and ready for installation on a line replaceable unit. In these examples, three event log messages are created. A message indicates whether the specific command was successful. Messages also are sent back indicating which deleted files within a command were successfully deleted. Additionally, the identification of commands that failed also are logged in the status messages.

Turning now to **Figure 47****,** a flowchart of a process for receiving downlink files is depicted in accordance with an advantageous embodiment. The process illustrated in **Figure 47** may be implemented in a software component, such as control process **3502** in **Figure 35****.** This flowchart illustrates the processes that occur when a downlink file is sent to a proxy server application from an onboard electronic distribution system.

The process begins by receiving a call from the onboard electronic distribution system to download downlink data (operation **4700**). In these examples, the on ground component identifies a partial downlink when a file writing operation was previously interrupted and the entire contents of the file were not written into the file. If the file writing operation completed successfully, the downlink is a completed downlink. If the call is to send additional data for the downlink, then the information received is added onto the file previously stored for the downlink on the file system with the proxy server application.

The process then receives data for the downlink file (operation **4702**)**.** Next, the process determines whether the data is for a partially downloaded downlink file (operations **4704**). If the data is for a new downlink file, the process creates a downlink file (operation **4706**). Thereafter, the data is stored in the downlink file (operation **4708**). A determination is then made as to whether additional data is received for the downlink file (operation **4710**). If additional data is received, the process returns to operation **4708.** Otherwise, the process determines whether the file is complete (operation **4712**). If the file is complete, the file is stored in the file system on the proxy server (operation **4714**) with the process terminating thereafter.

With reference again to operation **4712,** if the file is not complete, the process marks the file as a partially downloaded downlink file (operation **4716**) with the process terminating thereafter. With reference again to operation **4704,** if the data to be downloaded is for a partially downloaded downlink file, the process determines whether a partial downlink file is present for the data (operation **4718**).

If the downlink file is present, the process proceeds to operation **4708** as described above. Otherwise, the process sends an error to the onboard electronic distribution system (operation **4720**) with the process terminating thereafter. This area indicates that a partial downlink file for the data to be sent by the onboard electronic distribution system is not present on the proxy server. In this situation, the onboard electronic distribution system may resend the entire file in another data transfer.

In these examples, the onboard electronic distribution system may send downlink files to the proxy server application at the same time that the onboard electronic distribution system is receiving commands from the proxy server application. This process taken into account that interruptions may occur during the downlinking of data to the proxy server application. If the sending of downlink data is interrupted, the successful written part is saved for later when the rest of the data can be written. In this manner, rewriting of earlier data is not necessary. In these examples, an event log message may be recorded that indicates that the downlink data was received from the proxy server application from a specific aircraft.

With reference now to **Figure 48****,** a flowchart of a process for receiving status information from a software maintenance tool is depicted in accordance with an advantageous embodiment. The process illustrated in **Figure 48** may be implemented in control process **3502** in **Figure 35****.** This process illustrates the different operations that occur in receiving status messages from a software maintenance tool.

The process begins by receiving a call from a software maintenance tool with command status information for a command (operation **4800**). Thereafter, the process inserts a new record in the command results database for the table for the command identified in the call (operation **4802**). The process marks the record as software maintenance tool reported success (operation **4804**).

The process returns a confirmation to the software maintenance tool (operation **4806**). These different messages may be collected with other messages to transfer back to the library. The process then marks the local copy of the command as sent to the aircraft (operation **4808**), with the process terminating thereafter. This process prevents the proxy server application from resending the command back to the software maintenance tool.

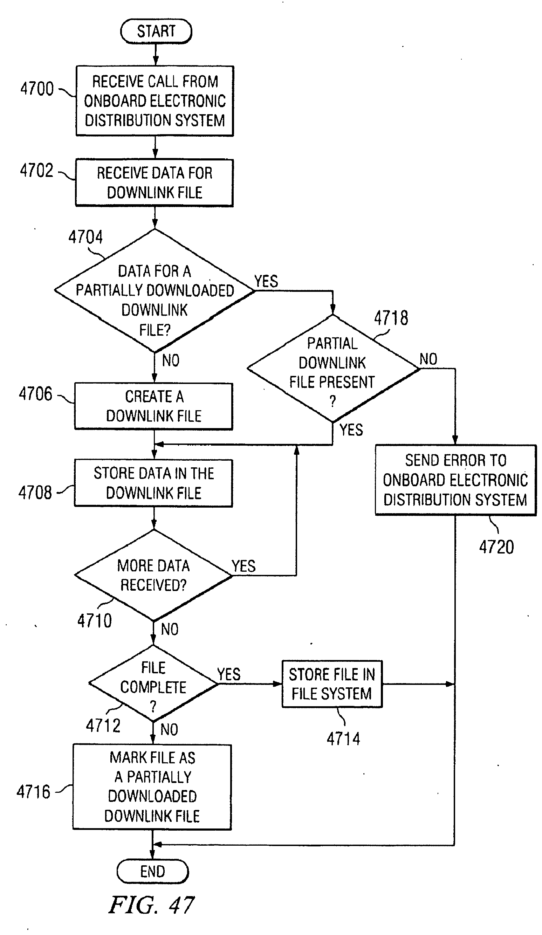

Turning now to **Figure 49****,** a flowchart of a process for sending information to a software maintenance tool is depicted in accordance with an advantageous embodiment. The process illustrated in **Figure 49** may be implemented in control process **3502** in **Figure 35****.** The process sends information in the form of uplink commands and software aircraft parts to the software maintenance tool.

The process begins by receiving requests from the software maintenance tool for a list of commands (operation **4900**). This operation may be for various types of commands. For example, the request may be for any commands that have been designated for the particular software maintenance tool. The request may obtain commands for a particular aircraft, a particular line replaceable unit on the aircraft, or some identifier.

In response to receiving this request, the process locates commands corresponding to the request in the database (operation **4902**). The process then receives a result form the database (operation **4904**). The process sends the results back to the software maintenance tool (operation **4906**), with the process terminating thereafter. The software maintenance tool may request the crates containing the software aircraft parts using a process similar to the one illustrated in **Figure 45** for sending software aircraft parts to an onboard electronic distribution system.

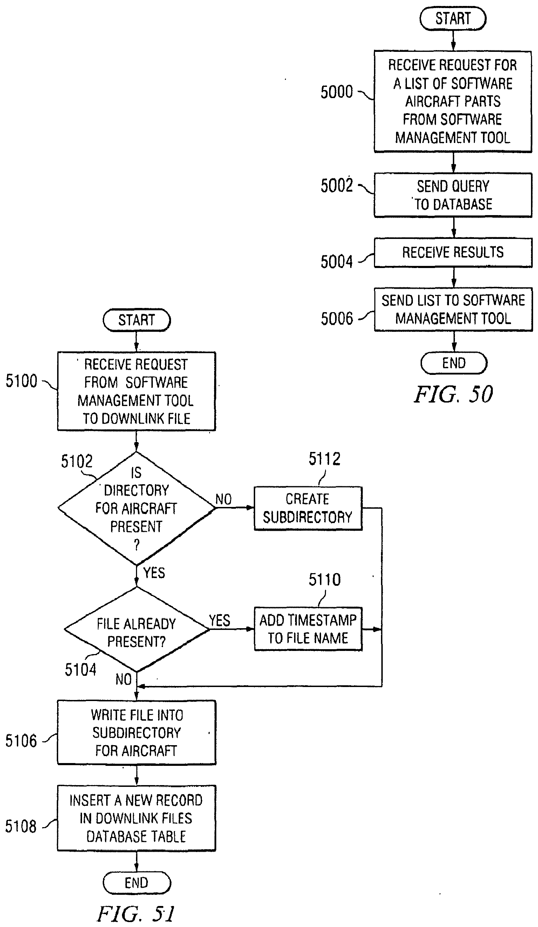

Turning now to **Figure 50****,** a flowchart of a process for sending lists of software aircraft parts to a software maintenance tool is depicted in accordance with an advantageous embodiment. This process may be implemented in a software component, such as control process **3502** in **Figure 35****.** This process may be used to identify what software aircraft parts are available on the proxy server application.

The process begins by receiving a request for a list of software aircraft parts from the software maintenance tool (operation **5000**). The process then sends a query to the database to identify the software aircraft parts stored in the file system (operation **5002**). Results are received from the database (operation **5004**). The list of software aircraft parts are sent to the software maintenance tool (operation **5006**), with the process terminating thereafter.

In these examples, the lists returned in operation **5006** may contain unique software aircraft part names that are in the inventory of the proxy server application even if the software aircraft part is on the proxy server application only to support a command that was dispatched specifically to that proxy server application and not for other devices.

With reference now to **Figure 51****,** a flowchart of a process for receiving downlink files from a software maintenance tool is depicted in accordance with an advantageous embodiment. The process illustrated in this example may be implemented in a proxy server application component, such as control process **3502** in **Figure 35****.**

The process begins by receiving a request from a software maintenance tool to downlink a file (operation **5100**). In operation **5100,** this request may be made as a hypertext transport protocol request. A determination is made as to whether a directory is present for the aircraft (operation **5102**). If a directory is present, a determination is made as to whether the file is already present in the directory (operation **5104**).

If the file is not present in the directory, the file is written into the subdirectory for the aircraft (operation **5106**). Thereafter, the process inserts a new record in a downlink files database table for the downloaded file (operation **5108**), with the process terminating thereafter.

With reference again to operation **5104,** if the file is already present in the subdirectory, a timestamp is added to the file name (operation **5110**), with the process then proceeding to operation **5106** as described above.

In operation **5110,** a time stamp is added to the file name to allow an additional copy of the same file to be written without overriding or losing the original file. As a result, the original file name is present along with an additional file having a file name that is similar except for the addition of the time stamp. The contents of the files may be identical in some cases. With reference again to operation **5102,** if the directory for the aircraft is not present, the process creates a subdirectory for the aircraft (operation **5112**). The process then proceeds to operation **5106** as described above.

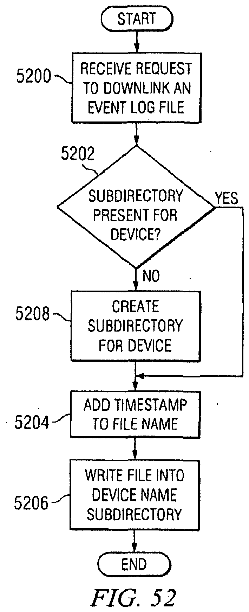

In **Figure 52****,** a flowchart of a process for receiving event log files from a software maintenance tool is depicted in accordance with an advantageous embodiment. The process illustrated in **Figure 52** may be implemented in control process **3502** within proxy server application **3500** in **Figure 35****.**

The process begins by receiving a request from a software maintenance tool to downlink an event log file to the proxy server application (operation **5200**). The process then determines whether a subdirectory is present for the device (operation **5202**). In this example, the device is a software maintenance tool. If a subdirectory is present for the device, a timestamp is added to the file name of the file received from the software maintenance tool (operation **5204**). The process then writes the file into the device name subdirectory (operation **5206**), with the process terminating thereafter.

With reference again to operation **5202,** if a subdirectory is not present for the device, the process creates a subdirectory for that device (operation **5208**). The process then proceeds to operation **5204** as described above.

### Software Maintenance Tool

Within software aircraft part management apparatus **300** in **Figure 3****,** the different advantageous embodiments provide a computer implemented method, apparatus, and computer program product for managing software aircraft parts. The different advantageous embodiments provide a software maintenance tool located on a portable data processing system that may be used to establish connection to a source through a ground network. A set of uplink commands may be retrieved from the source through this connection. A set of software aircraft parts corresponding to the uplink commands are retrieved from the source through the established connection to form a set of retrieved software aircraft parts. The set of software aircraft parts is stored in the portable data processing system.

This portable data processing system may then be disconnected from the ground network and connected to an aircraft network in an aircraft. An uplink command is issued from the set of uplink commands to the aircraft network through an on ground component located in the portable data processing system. The stored software aircraft part corresponding to the uplink command may then be sent to the aircraft network through the on ground component.

This software maintenance tool may be utilized in situations in which an aircraft network is unable to establish a connection with a ground network. For example, at some airports the aircraft network may be incompatible with the particular ground network that is present. In other examples, a failure or error in the ground network may prevent the aircraft network from communicating with the ground network to receive commands and software aircraft parts.

Further, the software maintenance tool on the portable data processing system also may be employed to receive data from the aircraft. This data may be, for example, a downlink file.

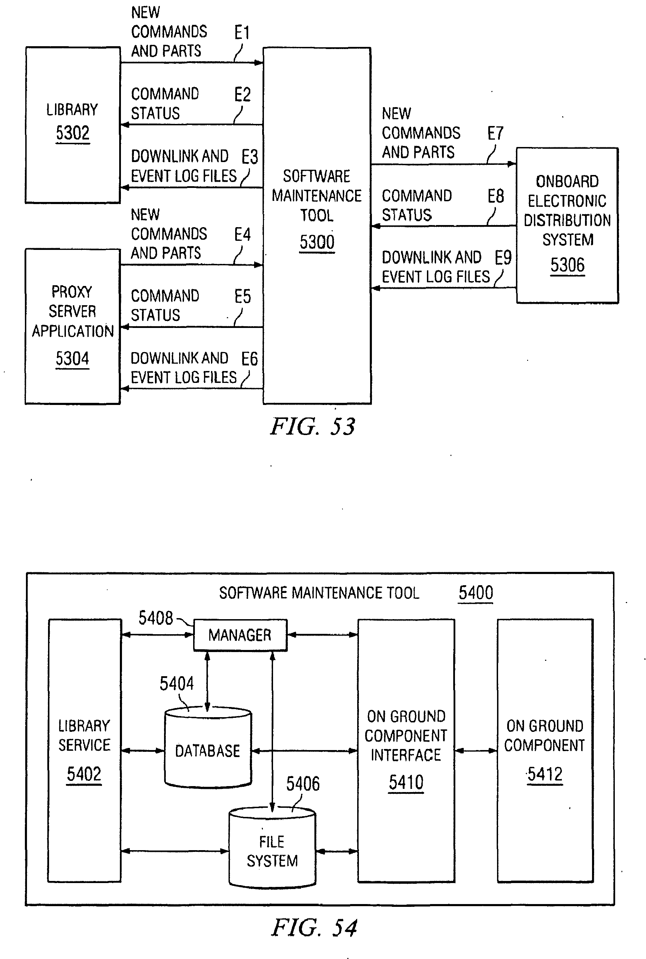

With the reference next to **Figure 53****,** a diagram illustrating data flow and a software maintenance tool is depicted in accordance with an advantageous embodiment. Software maintenance tool **5300** interacts with components, such as library **5302,** proxy server application **5304** and onboard electronic distribution system **5306.** These components also are referred to as sources. In these examples, software maintenance tool **5300** provides for the transfer of information between library **5302** and/or proxy server application **5304** and onboard electronic distribution system **5306.**

Library **5302** may be, for example, library **304** in **Figure 3****,** while proxy server application **5304** may be proxy server application **306** in **Figure 3****.** Onboard electronic distribution system **5306** may be, for example, onboard electronic distribution system **310** in **Figure 3****.**

Library **5302** sends new commands and parts to software maintenance tool **5300** (message **E1**) The results of processing of these commands in parts may be returned to library **5302** by software maintenance tool **5300** (message **E2**). Additionally, software maintenance tool **5300** also may return downlink and event log files (message **E3**).

Depending on the particular implementation or use, software maintenance tool **5300** may receive new commands and parts indirectly from library **5302** through proxy server application **5304** (message **E4**). In a similar fashion, software maintenance tool **5300** may return command status (message **E5**) and downlink and event log files (message **E6**) to proxy server application **5304,** which in turn sends this information to library **5302.**

With respect to transferring information with onboard electronic distribution system **5306,** software maintenance tool **5300** may send new commands and software aircraft parts to onboard electronic distribution system **5306** (message **E7**). Software maintenance tool **5300** may receive a command status from onboard electronic distribution system **5306** (message **E8**). The command status also may include the status of software directory parts sent to onboard electronic distribution system **5306.** Onboard electronic distribution system **5306** may send downlink and event log files to software maintenance tool **5300** for transfer to library **5302** (message **E9**).

Examples of these types of transfers are described in more detail below. Further, these steps and interactions may occur in a particular order and any of the different messages and interactions may occur simultaneously at any time. For example, software maintenance tool **5300** may send new commands and software aircraft parts to onboard electronic distribution system **5306** at the same time software maintenance tool **5300** receives downlink files from onboard electronic distribution system **5306.** In these examples, software maintenance tool **5300** executes on a portable data processing system, such as a laptop computer. Data processing system **200** in **Figure 2** is an example of the data processing system that may be used to implement a laptop computer.

Software maintenance tool **5300** may be transported from one location to another location to distribute software aircraft parts and to download information, such as download data or files from line replaceable units on an aircraft. In the different advantageous embodiments, software maintenance tool **5300** establishes a direct connection with onboard electronic distribution system **5306.** In these examples, a direct connection may be a wire connection or a wireless connection. This type of connection is made without a network connecting the data processing system or systems on the aircraft to the data processing system on which software maintenance tool **5300** is located.

Turning now to **Figure 54****,** a block diagram of a software maintenance tool is depicted in accordance with an advantageous embodiment. In this example, software maintenance tool **5400** includes library service **5402,** database **5404,** file system **5406,** manager **5408,** on-ground component interface **5410** and on-ground component **5412.**

Library service **5402** provides an interface to communicate with other components within a software aircraft part management apparatus. Library service **5402** provides software maintenance tool **5400** an interface to communicate with components, such as, for example, a library and a proxy server application. Database **5404** contains information, such as metadata about commands in software aircraft parts or parts in file system **5406.**

Additionally, database **5404** also may contain information about downlink information. This information is stored in the form of tables and records within database **5404.** Further, database **5404** may store commands received from a proxy server application for execution by an onboard electronic distribution system on an aircraft data processing system in the aircraft.

File system **5406** stores files, such as commands, software aircraft parts, and downlink files. The different files may be stored within crates in file system **5406,** depending upon the particular implementation. Manager **5408** includes processes for managing the operation of software maintenance tool **5400.** In these examples, manager **5408** may incorporate processes for presenting user interface views to a user. These views may provide a user an interface to initiate operations and to view information.

On-ground component interface **5410** provides an interface to on-ground component **5412.** On-ground component interface **5410** may be implemented using application programming interface calls, in these examples. On-ground component **5412** communicates with the aircraft. In these examples, on-ground component **5412** may communicate with an onboard electronic distribution system located on the aircraft data processing system in the aircraft. By having an interface to on-ground component **5412,** on-ground component **5412** may be changed or modified for particular aircraft or types of aircraft without affecting the other components within software maintenance tool **5400**.

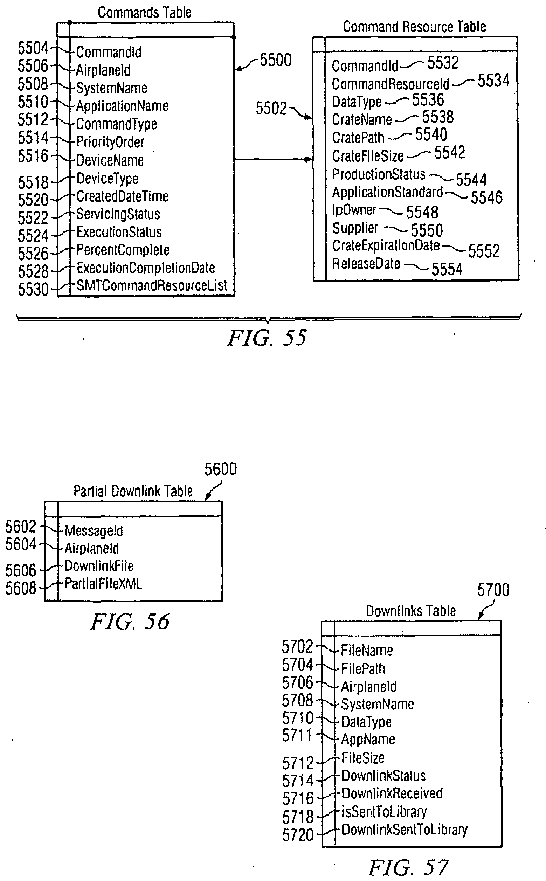

Turning now to **Figure 55****,** a diagram of commands and command resource tables are depicted in accordance with an advantageous embodiment. In this example, commands table **5500** represents commands, while command resource table **5502** represents command resources. These tables are examples of tables that may be found in database **5404** in software maintenance tool **5400** in **Figure 54****.**

Commands table **5500** includes command identifier **5504,** airplane identifier **5506,** system named **5508,** application named **5510,** command type **5512,** priority order **5514,** device name **5516,** device type **5518,** date **5520,** servicing status **5522,** execution status **5524,** percent complete **5526,** execution completion date **5528** and command resource list **5530.** Command resource table **5502** includes command identifier **5532,** command resource identifier **5534,** data type **5536,** crate name **5538,** crate path **5540,** crate file size **5542,** production status **5544,** application standard **5546,** owner **5548,** supplier **5550,** crate expiration date **5552** and release date **5554.**

The different fields illustrated for commands table **5500** and command resource table **5502** represent fields that may be found in tables within a software maintenance tool database. In commands table **5500,** command identifier **5504** uniquely identifies the particular record. Command identifier **5504** may be found in various tables to point to a specific command record.

Airplane identifier **5506** identifies a specific aircraft. In these examples, the identifier may identify an aircraft uniquely within a fleet of aircraft for a particular airline. System name **5508** identifies the name of the line replaceable unit on which the software aircraft part is located. System name **5508** includes routing information to identify the line replaceable unit. Date **5520** identifies the date and time that a command was created in the library. Servicing status **5522** identifies commands that have been successfully sent to the onboard electronic distribution system and identifies commands that have been reported to the library as having been successfully uplinked or executed on the onboard electronic distribution system.

Execution status **5524** provides a notification of whether the command has been executed on the aircraft. In particular, this command provides information as to whether the onboard electronic distribution system on the aircraft has executed the command. Percent complete **5526** indicates the progress of the uplinking of a software aircraft part in a crate by the onboard electronic distribution system in these examples. Execution completion date **5528** identifies when the command execution is complete. Command resource list **5530** identifies a data structure containing information about the crate, such as command resource table **5502** in **Figure 55****.**

In command resource table **5502,** command identifier **5532** is similar to command identifier **5504** in commands table **5500** and provides an identification of a specific command record. Command resource identifier **5534** is used to identify specific command resource record in the database. Data type **5536** identifies the type of data for the resource. For example, the resource may be a software aircraft part or a file. In these examples, each command allows different types of information to be associated with the particular command.

Crate name **5538** identifies the name of the crate in which the software aircraft part is located. Crate path **5544** identifies the location of the crate containing the software aircraft part. Crate file size **5542** identifies the size of the crate. Production status **5544** indicates the production status of the particular software aircraft part contained within the crate. These values may be, for example, red label, blue label, or black label.

Applicable standard **5546** identifies the applicable standard for the software aircraft part in these examples. Owner **5548** identifies the owner of any intellectual property of the software aircraft part contained within the crate. Release date **5554** identifies the release date of the software aircraft part.

With reference now to **Figure 56****,** a diagram of partial downlink data is depicted in accordance with an advantageous embodiment. In this example, partial downlink table **5600** is an example of a table that may be found in a database within a software maintenance tool, such as database **5406** in **Figure 54****.** As depicted, partial downlink table **5600** contains message identifier **5602,** airplane identifier **5604,** downlink file **5606** and partial file XML **5608.**

Message identifier **5602** is a command identifier for partial downlinks related to a downlink command sent to an onboard electronic distribution system. This identifier is generated by the onboard electronic distribution system on an aircraft for downlink files and not the result of the downlink command sent to the onboard electronic distribution system by the library through a proxy server application or the software maintenance tool. Airplane identifier **5604** identifies the particular aircraft within a set of aircraft.

Downlink file **5606** specifies the full directory path to the partially downlinked file. When an onboard electronic distribution system requests a downlink file for which an attempt has already been made to downlink the file at a prior time, the software management tool returns the path to the partially downlinked file.

Partial file XML **5608** contains information about the partially downlinked file. This information may be used by the onboard electronic distribution system to resume downlinking of the downlinked file from where the downlinking was previously interrupted. In this manner, the downlinking of the file may begin from where it was interrupted to avoid having to resend the entire file.

Turning next to **Figure 57****,** a diagram of a downlinks table is depicted in accordance with an advantageous embodiment. Downlinks table **5700** is an example of a table in a database in a software maintenance tool, such as database **5406** in **Figure 54****.** Downlinks table **5700** stores information about each downlinked file sent by onboard electronic distribution system in these examples. Downlinks table **5700** includes file name **5702,** file path **5704,** airplane identifier **5706,** system name **5708,** data type **5710,** file size **5712,** downlink status **5714,** downlink received **5716,** is sent to library **5718,** and downlink sent to library **5720.**

File name **5702** identifies the name of the file containing the downlink information. File path **5704,** in these examples, identifies the location of the file containing the downlink information. Airplane identifier **5706** identifies the aircraft from which the downlink file was received. This identifier is a unique identifier for a set of aircraft, such as aircraft for a particular airline. This identifier may be a tail part number. System name **5708** identifies the name of the line replaceable unit on which the software aircraft part is located. Data type **5710** identifies the type of data. In the case of downlink information, the data is identified as a file. AppName **5711** identifies an application on the aircraft data processing system that is responsible for obtaining the software aircraft part.

File size **5712** identifies the size of the file containing the downlink data. Downlink status **5714** indicates the status of the downlink operation. In these examples, downlink status **5714** shows successful downlinks. In some embodiments, partial downlinks may be identified by downlink status **5714.** Library **5718** indicates the time when the file was downlinked to the software and maintenance tool. Downlinks sent to library **5720** indicates the time when the downlinked file is sent to the library or proxy server application. This information is used to determine when to delete the downlinked file from the software maintenance tool. Downlinked files may be deleted after a configurable amount of time past the time the downlink file was sent to ensure that the downlinked file was backed up on the library or proxy server application to which the downlink file was sent.

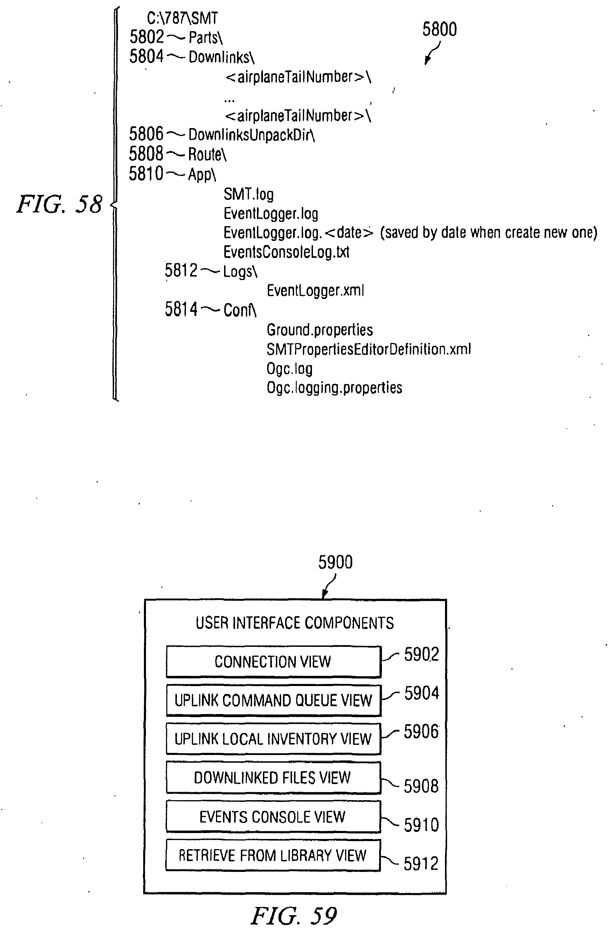

Turning now to **Figure 58****,** a diagram of a software maintenance tool file system directory structure is depicted in accordance with an advantageous embodiment. In this example, directory structure **5800** represents a file system directory structure that may be used in a file system, such as in file system **5406** in **Figure 54****.** Directory structure **5800** identifies different types of files to work within the file system on a software maintenance tool. In these examples, directory structure **3900** includes parts **5802,** downlinks **5804,** downlinks unpacked dir **5806**, route **5808,** application **5810,** logs **5812** and conf **5814.**

Parts **5802** identifies a directory that stores crates received from a library, directly from the library or through a proxy server application. In these examples, the crates may include commands and/or software aircraft parts. Further, the crates also may be loaded from media, such as a flash memory or hard drive attached to the laptop in which the software maintenance tool is located. The crates in this directory may be sent to the onboard electronic distribution system on an aircraft.

Downlinks **5804** are a directory used to store downlink files and partial downlink files received from an onboard electronic distribution system. In these examples, the downlink files may be organized by the tail number of the aircraft from which the files originated. Downlinks **5804** may include subdirectories named by the aircraft tail numbers, in these examples. The downlink files are stored in crated form in these examples. Downlink files that have already been sent to the library are not automatically deleted from downlinks **5804.** Instead, these files may be deleted after some selected amount of time from when they are sent to the library or proxy server application.

Downlinks unpacked Dir **5806** identifies a directory used by the software maintenance tool to unpack the contents of crates. These crates are unpacked to extract information about a downlink file. The file in uncrated form may be stored in a directory within downlinks unpacked dir **5806** using the name of the file.

Route **5808** identifies the directory that contains a SMT-route info.xml file. This file contains a list of systems, applications, and commands sorted by each of the applications. The contents of these files are used by the software maintenance tool and indirectly by the library to ensure that uplink commands are sent to the appropriate aircraft systems.

App **5810** identifies the directory in which the different processes for the software maintenance tool is installed. Additionally, logs related to the software maintenance tool also may be stored in this directory. These logs include, for example, events that may be recorded during the operation of the software maintenance tool.

Logs **5812** is a subdirectory within app **5810** and contains the event logger.xml file last sent to the library and/or proxy server application in these examples. Conf **5814** is a subdirectory within app **5808** and contains property files to define the operation or behavior of the software maintenance tool as to define the behavior of various components within the software maintenance tool.

Turning now to **Figure 59****,** a diagram illustrating interface components implemented in a software maintenance tool is depicted in accordance with an advantageous embodiment. In this example, user interface components **5900** are examples of user interface components that may be implemented in manager **5408** within software maintenance tool **5400** in **Figure 54****.** User interface components **5900** include connection view **5902,** uplink command queue view **5904,** uplink local inventory view **5906,** downlinked files view **5908,** events console view **5910,** and retrieve from library view **5912.**

Connection view **5902** is a user interface component that provides for an area to display functionality tabs. In these examples, the user interface provides device identification information as well as a dropdown box allowing a user to select between various components, such as an onboard electronic distribution system, a library, a proxy server application or other devices. Further, this interface component also may provide a control to connect the software maintenance tool to the particular device selected from the dropdown box.

Uplink command queue view **5904** provides an interface to view the progress of uplinking commands and parts. This view also has a control to delete commands and software aircraft parts. Uplink local inventory view **5906** provides a user interface to allow an operator of the software maintenance tool to load or import software aircraft parts from a media. This view allows a user to create uplink commands without being connected to a ground network. The user may select software aircraft parts for uplinking to specific line replaceable units on specific aircraft. This media may be, for example, a portable media, such as a flash memory, a portable hard drive, a compact disc, or a digital versatile disc. Downlinked files view **5908** provides a user interface to view downlink files received from the onboard electronic distribution system. A user also may use this view to delete downlink files as wells as issue downlink control commands.

Events console view **5910** allows a user to view different events that have occurred during the execution of various processes of the software maintenance tool. For example, event console view **5910** may present a different action that occurred in sending a software aircraft part to an onboard electronic distribution system. These events may include, for example, connection to the aircraft, sending of the file, and identification of a successful loading of the file.

Retrieved from library view **5912** is a user interface that may be used to initiate processes for obtaining commands and software aircraft parts from a library or proxy server application. Commands table **5500** in **Figure 55** identifies fields that may be found in commands table **5500.** This view also sends back successfully-uplinked commands, downlink files, and event logs.

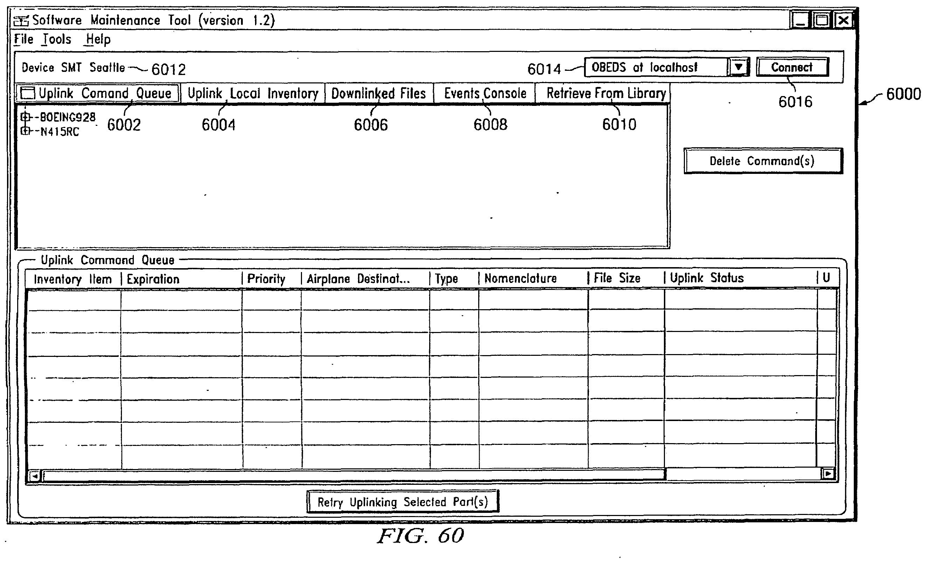

With reference next to **Figures 60-65****,** example implementations of user interfaces for user interface components **5900** in **Figure 59** are depicted. With reference first to **Figure 60****,** window **6000** illustrates a main screen or interface that may be presented in user interface components **5900** in **Figure 59****.** In particular, window **6000** is an example of connection view **5902** in **Figure 59****.** Window **6000** includes tabs **6002, 6004, 6006, 6008** and **6010.** These tabs may be selected to present controls and information for various functions and processes within a software maintenance tool.

Section **6012** displays information about the software maintenance tool. In this example, section **6012** indicates that the software maintenance tool is connected to an aircraft identified by the tail number. List **6014** provides a list of other components to which a software maintenance tool may establish connections. Control **6016** allows a user to initiate a connection to another component. In these examples, a user may select various components, such as an onboard electronic distribution system, a library, or a proxy server application from a set of proxy servers.

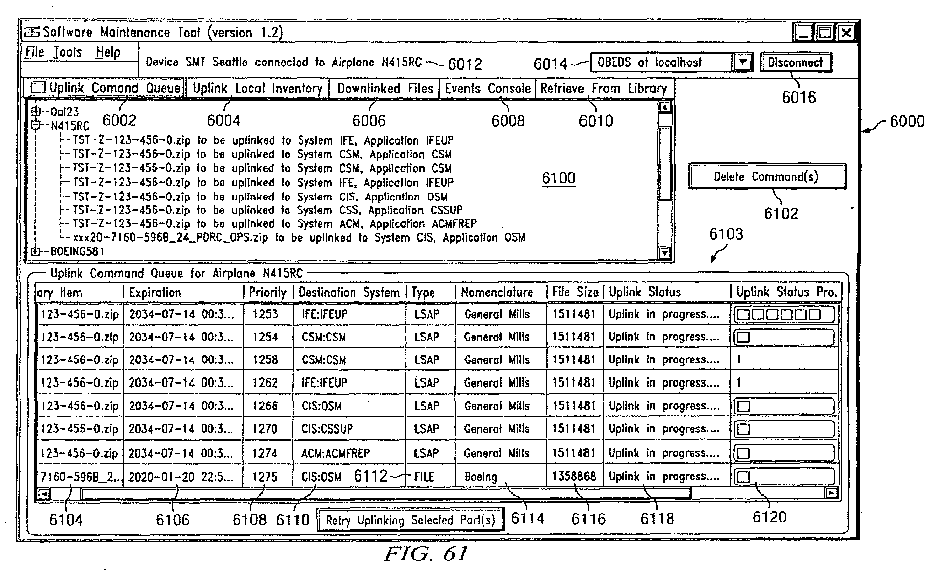

With reference now to **Figure 61****,** a selection of tab **6002** initiates an uplink command queue view in window **6000.** In this example, this uplink command queue view is an example of the user interface presented by uplink command queue view **5904** in **Figure 59****.** In this example, section **6100** displays commands for a particular aircraft in a tree queue. A user may delete a set of commands from section **6100** by selecting those commands and pressing delete command **6102.** The status information about commands are presented in section **6103.**

Information that may be displayed includes, for example, item **6104,** expiration **6106,** priority **6108,** destination system **6110,** file type **6112,** nomenclature **6114,** file size **6116,** uplink status **6118** and uplink status progress **6120.** Item **6104** identifies the particular item, such as a software aircraft part name. Expiration **6106** is an expiration date for a particular command. Priority **6108** identifies the order in which commands are to be uplinked to the destination system on the aircraft. Destination system **6110** identifies the particular line replaceable unit in an application on the aircraft in which parts are to be sent. Type **6112** identifies the type of item contained in the crate, such as a file or a software aircraft part.

Nomenclature **6114** provides a short identification or description of the part. File size **6116** identifies the size of the crate containing the particular item. Uplink status **6118** provides a status as to the process, success or failure of a command. Uplink status progress **6120** provides a graphical progress bar showing the percent complete for a particular command.

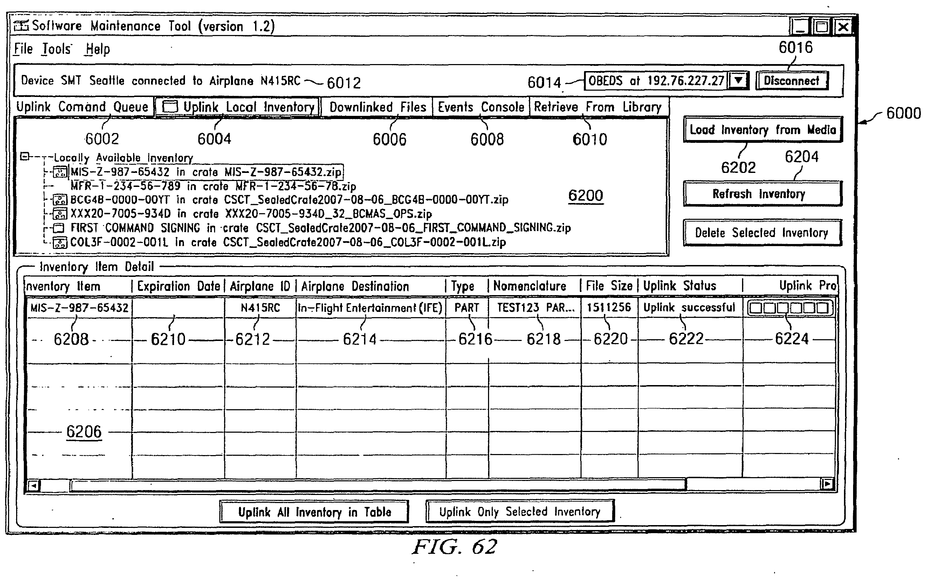

With reference now to **Figure 62****, a** diagram illustrating a user interface for an uplink local inventory view is depicted in accordance with an advantageous embodiment. In this example, tab **6004** has been selected and a user interface for uplink local inventory view **5906** in **Figure 59** is presented. This particular view allows a user to load crates or software aircraft parts from a local source. This type of functionality allows a user to load a software aircraft part from another source in the event that access to a library or proxy server application may be unavailable or interrupted. Additionally, new parts that may not be found in the library or proxy server application or updated versions of software aircraft parts also may be loaded in this manner. A local inventory of software aircraft parts or other items may be found on storage devices, such as a hard drive, a flash memory, a compact disc, or a digital versatile disc.

Section **6200** illustrates an identification of local inventory that may be loaded onto the software maintenance tool. These items may include software aircraft parts and commands. A particular item may be loaded by selecting that item in section **6200** and pressing load inventory from media button **6202.** The current inventory found on a particular storage device may be refreshed by pressing refresh inventory **6204.**

Details about selected items in section **6200** may be displayed in section **6206.** In these examples, the information may include, for example, inventory item **6208,** expiration date **6210,** airplane identifier **6212,** airplane destination **6214,** type **6216,** nomenclature **6218,** file size **6220,** uplink status **6222** and uplink status progress **6224.** This information is similar to the information displayed for software aircraft parts received from a library proxy server application as displayed in window **6000** in **Figure 61**.

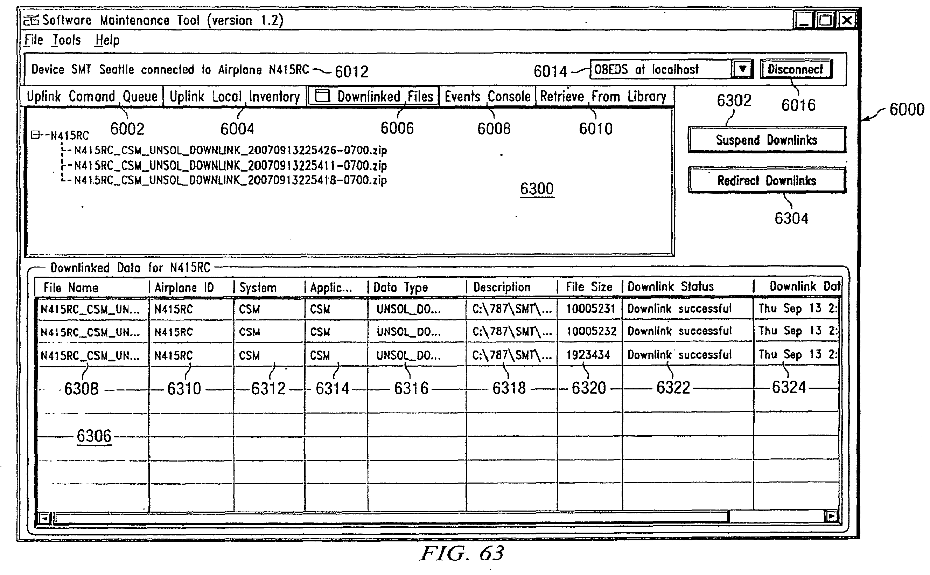

With reference now to **Figure 63****,** a diagram of a user interface for a downlinked files view is depicted in accordance with an advantageous embodiment. In this example, window **6000** displays a user interface for a user interface component, such as downlinked files view **5908** in **Figure 59****.** This view is presented in response to a selection of tab **6006.** In this user interface, information about data downlinked from different aircraft are displayed in section **6300.**

A user may suspend or stop downlinks from an onboard electronic distribution system on an aircraft by selecting suspend downlinks button **6302.** When this button is selected, a software maintenance tool does not receive any additional downlinks or information from the aircraft to which the connection is present. Downlinks may be resumed by pressing a resume button that is displayed.

Further, a user may redirect downlinks destined for a proxy server application to the software maintenance tool by selecting redirect downlinks button **6304.** Selection of this button causes the onboard electronic distribution system to reroute all downlink information destined for a proxy server application to be sent to the software maintenance tool. If the software maintenance tool is disconnected from the onboard electronic distribution system, the downlinks are then automatically sent to the original destination.

Section **6306** displays additional information for downlink data presented in section **6300.** Further, a user may view or delete downlink files in section **6306.** Deletions may be made by selecting a particular downlink file and initiating the delete command.

Information presented about downlinked files in section **6306** include, for example, file name **6308,** airplane identifier **6310,** system **6312,** application **6314,** data type **6316,** description **6318,** file size **6320,** downlink status **6322,** and downlink date and time **6324.** File name **6308** identifies the name of the file downlinked or received from the aircraft. Airplane identifier **6310** identifies the aircraft from which the data is received. System **6312** identifies the line replaceable unit from which the data is received. Application **6314** identifies the software aircraft part on the line replaceable unit associated with the data.

Data type **6316** identifies the type of data generated by the application. The software maintenance tool receives downlinked files with a data type to represent an unsolicited downlink in these examples. Description **6318** identifies the name of the file downlinked, in this example. File size **6320** identifies the size of the downlinked file. Downlink status **6322** identifies whether the data was successfully downlinked to the software maintenance tool. Downlink date and time **6324** identifies when the downlink completed. This completion may be a successful completion, a failure, or a partial downlink, depending upon the particular situation.

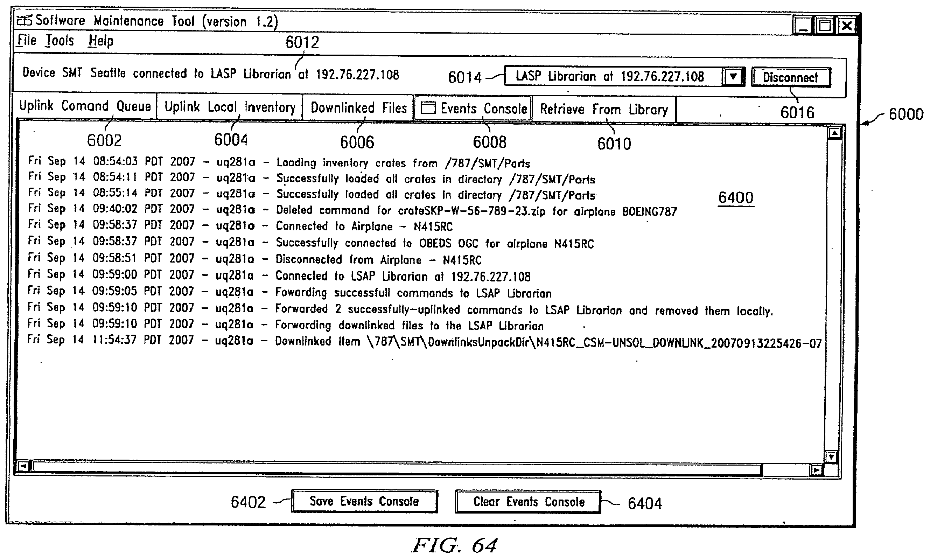

Turning now to **Figure 64****,** a diagram illustrating a user interface for an event console is depicted in accordance with an advantageous embodiment. In this diagram, window **6000** displays a user interface for a user interface component, such as events console **5910** in **Figure 59****.** In the depicted example, this particular view is presented in window **6000** in response to selecting tab **6008.** Section **6400** presents activity that occurs with a particular software maintenance tool session. In these examples, a software maintenance tool session is a period of time during which the software maintenance tool is operating. The events illustrated in section **6400** may be presented in real time.

In these examples, these events may be saved by selecting save events console button **6402.** Events may be cleared from display in section **6400** by selecting clear events console button **6404.** Additionally, the software maintenance tool may automatically save events without user intervention. In these examples, each entry displayed in section **6400** includes a date and time stamp, a user identifier of the user performing a particular action, and a message identifying the action that has been performed.

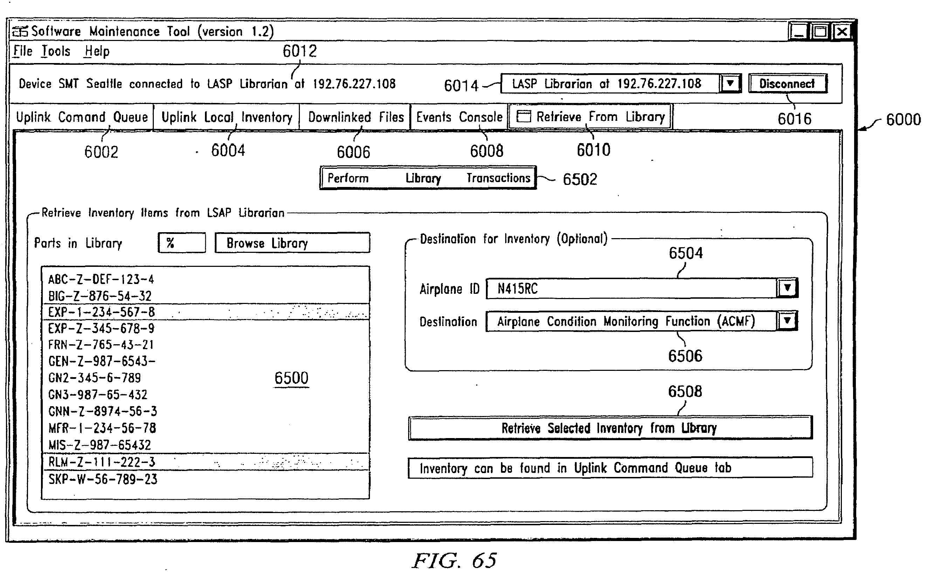

Turning now to **Figure 65****,** a diagram illustrating a user interface for a retrieve from library view is depicted in accordance with an advantageous embodiment. In this example, window **6000** displays a user interface for retrieve from library view **5912** in **Figure 59****.** This user interface is presented in response to a selection of tab **6010.** This user interface may be used to retrieve commands from a library or a proxy server application as well as browsing or looking at the various software aircraft parts. Additionally, this is when the loss may be used to create commands to uplink software aircraft parts to an onboard electronic distribution system.

Parts that are available in the library are displayed in section **6500.** Particular software aircraft parts designated for the software maintenance tool may be retrieved by pressing perform library transactions button **6502.** A user also may create commands to uplink software aircraft parts to an onboard electronic distribution system using this interface. A user may also select a software aircraft part from section **6500** and designate a particular aircraft and line replaceable unit using list **6504** and list **6506.** List **6504** provides identifications of aircraft. List **6506** identifies a particular line replaceable unit on the aircraft for the software aircraft part.

After these identifications have been made, the software aircraft part may be retrieved from the library by pressing retrieve selected inventory from library button **6508.** Selection of this button causes the software aircraft part to be retrieved and a command to be created to uplink the software aircraft part to the aircraft.

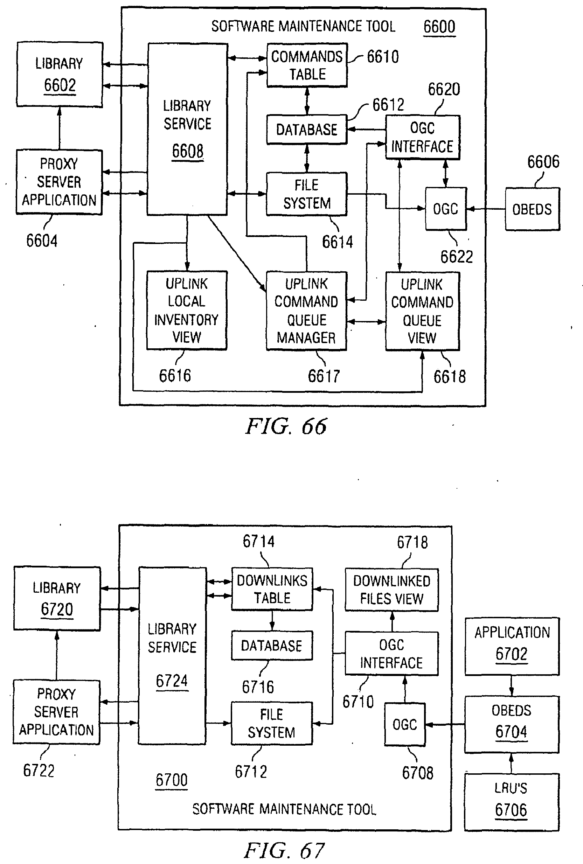

Turning now to **Figure 66****,** a diagram illustrating data flow through a software maintenance tool in sending commands and software aircraft parts to an aircraft is depicted in accordance with an advantageous embodiment. In this example, data sending flow is shown for software maintenance tool **6600** to the sending of commands and software aircraft parts from library **6602** or proxy server application **6604** to onboard electronic distribution system (OBEDS) **6606** on an aircraft. Each of the different steps and the results of those steps performed by software maintenance tool **6600** may be logged as events for downloading to library **6602** or proxy server application **6604.**

In this example, the process begins when a user initiates a transactions process with library **6602** or proxy server application **6604** using a user interface from a user interface component, such as retrieve from library view **5912** in **Figure 59****.** Library service **6608** retrieves a list of uplink commands that have been successfully uplinked to onboard electronic distribution system **6606.** Library service **6608** then makes a call to either library **6602** or proxy server application **6604** and passes a list of the command identifiers for commands that were successfully uplinked to onboard electronic distribution system **6606.** Library service **6608** retrieves a list of uplink commands that have been successfully uplinked from commands table **6610.** Commands table **6610** is an example of a table found in database **6612.** Commands table **5500** in **Figure** 55 identifies fields that may be found in commands table **6610.**

For every command identifier sent to library **6602** or proxy server application **6604,** the corresponding command is deleted from commands table **6610** in database **6612.** Additionally, library service **6608** also may send downlink files and event logs from file system **6614.**

Thereafter, library service **6608** may make a call to library **6602** or proxy server application **6604** to obtain a list of commands. These commands are compared with commands that should be in queues for distribution to different aircraft. If commands are present in commands table **6610** that are not in the list of commands received from library **6602** or proxy server application **6604,** those commands are deleted from this table. However, commands generated by an operator of software maintenance tool **6600** will be retained. The deletion of commands, in these examples, occurs for commands previously sent from library **6602** or proxy server application **6604.**

For each new command received, library service **6608** determines whether a crate already exists for the software aircraft part within file system **6614.** If the crate for the software aircraft part is not present for the command, then library service **6608** retrieves a crate containing the software aircraft part from library **6602** or proxy server application **6604.** Any retrieved crates are stored in file system **6614.** If the crate is successfully retrieved or a crate already exists, the new command is placed into commands table **6610** in database **6612.** If the crate is successfully retrieved or the crate already exists, the new command is added to a queue in uplink command queue manager **6617.** Uplink command queue view **6618** may show information for commands managed by uplink command queue manager **6617.**

Thereafter, uplink local invention view **6616** is updated or refreshed. In this example, uplink local invention view **6616 is** a user interface component, such as uplink local inventory view **5906** as displayed in window **6000** in **Figure 62****.** This view allows an operator to see the different software aircraft parts that are stored within the software maintenance tool. By knowing what software aircraft parts are present in file system **6614,** an operator may create new commands to uplink those software aircraft parts using the software maintenance tool. Thereafter, update command queue view **6618** is updated. This view may be, for example, uplink command queue view **5904** as displayed in window **6000** in **Figure 61****.**

Thereafter, the operator may disconnect software maintenance tool **6600** from library **6602** or proxy server application **6604.** Software maintenance tool **6600** may then be transported to the aircraft and connected to onboard electronic distribution system **6606.** When this connection is established, uplink command queue view **6618** automatically uplinks all commands that have not been successfully uplinked for the particular aircraft to onboard electronic distribution system **6506** through on ground connection (OGC) interface **6520.**

On ground connection interface **6620** creates a command for on ground component (OGC) **6622** and adds this command to a list of commands for on ground component **6622** to retrieve one at a time. These commands are identified in uplink command queue manager **6617.**

When on ground component **6622** calls on ground component interface **6620,** on ground component interface **6620** determines whether the aircraft is already uplinking data. If the aircraft is already uplinking data, a null value is returned to on ground component **6622** and commands are not changed in the command list. In these examples, on ground component **6622** communicates with onboard electronic distribution system **6606** to determine whether the aircraft is uplinking data in these examples.

If the aircraft is not already uplinking, the oldest uplink command in the command queue is passed to on ground component **6622.** In turn, on ground component **6622** communicates with onboard electronic distribution system **6606** to start uplinking the crate identified in the command. On ground component **6622** may obtain status information during uplinking of software aircraft parts. Further, on ground component interface **6620** may update uplink command queue view **6618** to show a progress bar, such as those illustrated in uplink status progress **6120** in **Figure 61****.**

When the command has been successfully executed, uplink command queue view **6618** updates the information in commands table **6610.** Additionally, uplink command queue view **6618** also updates the execution status of the command field in commands table **6610.**

Turning now to **Figure 67****,** a diagram illustrating data flow in a software maintenance tool processing downlinked files is depicted in accordance with an advantageous embodiment. In this example, software maintenance tool **6700** may receive downlinked files initiated by application **6702** executing on a laptop computer connected to onboard electronic distribution system (OBEDS) **6704.** Additionally, unsolicited downlink files from line replaceable units (LRU's) **6706** also may be received by software maintenance tool **6700.** When software maintenance tool **6700** establishes a connection to onboard electronic distribution system **6704,** on ground component **6708** is the component that provides the communication with onboard electronic distribution system **6704.**

On ground component (OGC) **6708** communicates through on ground component interface (OGC) **6710** with other components in software maintenance tool **6700.** In this example, a downlink file is downlinked and stored in file system **6712.** When the downlink file is transferred to file system **6712,** on ground component interface **6710** inserts a new record in downlinks table **6714** in database **6716.**

The different downlink files stored within file system **6712** may be viewed using downlinked files view **6718.** This view is an example of a user interface component, such as downlinked files view **5908** in **Figure 59****.** This view may be used to identify what downlink files have been received as well as manipulate downlink files. Downlinks table **5700** in **Figure 57** shows examples of fields that may be found in downlinks table **6714.**

Thereafter, software maintenance tool **6700** may be moved and establish connection with library **6720** or proxy server application **6722.** When this connection is established, library service **6724** identifies downlink files that have not yet been sent to library **6720** or proxy server application **6722.** The identification of these files may be found in downlinks table **6714.**

In these examples, partially downlink files are not sent to library **6720** or proxy server application **6722.** For each of the downlink files identified in downlinks table **6714,** library service **6724** confirms that these files are still stored in file system **6712.** Library service **6724** then forwards all of the located downlinked files to library **6720** or proxy server application **6722.** Any files sent to proxy server application **6622** are eventually sent to library **6720** by proxy server application **6722.**

In some cases, files may be only partially downlinked to the software maintenance tool because of an interruption. The different advantageous embodiments provide a mechanism through which partially downlinked files are saved by the software maintenance tool within file system **6612.** These partial downlink files are saved and additional or remaining portions of the downlink may be retrieved at a later time and added to these partial downlinked files to form a complete downlink file. In this manner, if an interruption occurs, the downlinking of data may pick up where it left off without having to downlink the entire file again.

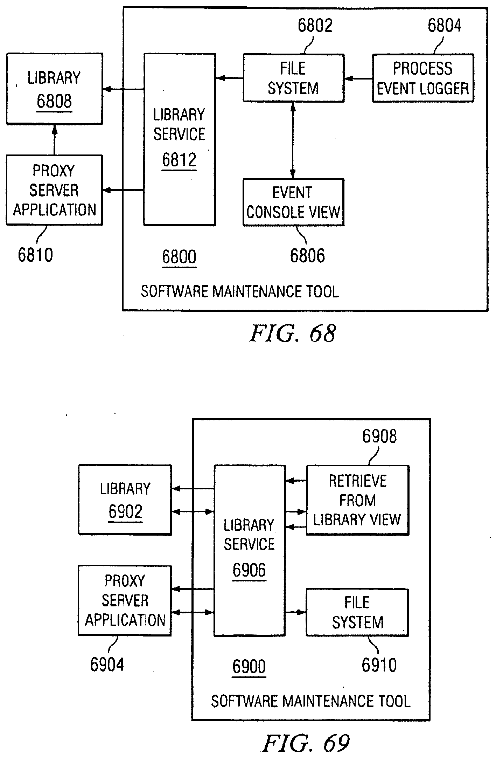

Turning now to **Figure 68****,** a diagram illustrating data flow and logging importing events by a software maintenance tool is depicted in accordance with an advantageous embodiment. In this example, software maintenance tool **6800** logs events in file system **6802** using process event logger **6804.** Process event logger **6804** is an example of a process that may be found in manager **5408** in **Figure 54****.**

In these examples, process event logger **6804** may log all of the different steps and results of those steps performed by software maintenance tool **6800** in uplinking and downlinking data. This type of information may be displayed in event console view **6806,** which is an example of a user interface component in user interface components **5900** in **Figure 59****.** An example user interface is window **6000** in **Figure 64****.** When software maintenance tool **6800** connects to library **6808** or proxy server application **6810** through library service **6812,** a user input is received to transfer data and log files stored in file system **6802** are forwarded on to library **6808** and proxy server application **6810.** If the event logs are successfully sent, the event log files are renamed for archival purposes.

Turning now to **Figure 69****,** a diagram illustrating data flow in a software maintenance tool retrieving parts from a library is depicted in accordance with an advantageous embodiment. In this example, software maintenance tool **6900** may connect to library **6902** or proxy server application **6904** through library service **6906.** A user may retrieve from library view **6908** to identify parts stored on library **6902** and/or proxy server application **6904.**

Retrieved from library view **6908** is an example of retrieved from library view **5912** in **Figure 59** within user interface components **5900** in **Figure 59****.** Window **6000** in **Figure 65** is an example of a user interface for this particular view. The parts may be displayed and retrieved from retrieve from library view **6908.** A user may select a set of parts and retrieve those parts from library **6902** and/or proxy server application **6904** and store the software aircraft parts in file system **6910.** The parts are then displayed for users to create uplink command(s).

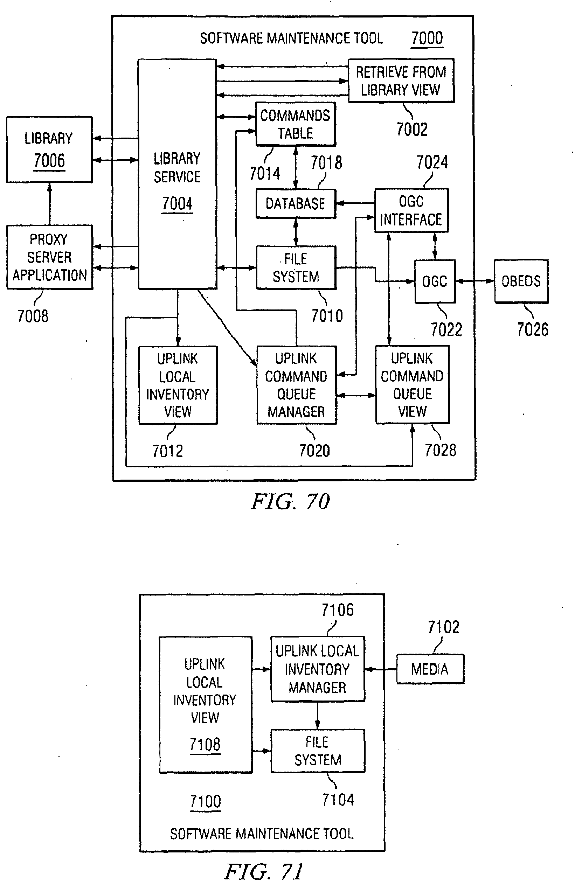

Turning now to **Figure 70****,** a diagram illustrating data flow in a software maintenance tool during retrieving and creating of commands is depicted in accordance with an advantageous embodiment. In this example, software maintenance tool **7000** may retrieve parts and create commands using retrieve from library view **7002.** Retrieve from library view **7002** is an example of a user interface component, such as retrieve from library view **5912** in **Figure 59** as presented in window **6000** in **Figure 65****.**

When library service **7004** is connected to library **7006** or proxy server application **7008,** a user may view a list of parts retrieved from retrieve from library view **7002.** A user may select parts through this view and initiate downlinking of those parts by library service **7004.** The parts retrieved by library service **7004** are stored in file system **7010.** In these examples, the software aircraft parts are stored as crates. Uplink local inventory view **7012** may be refreshed.

With retrieved from library view **7002,** a user may create commands that are stored in commands table **7014** in database **7018.** These commands may be added to uplink command queue manager **7020** for execution by on ground component (OGC) **7022** through on ground component (OGC) interface **7024** to onboard electronic distribution system (OBEDS) **7036.** Uplink command queue manager **7020** is an example of a component within manager **5408** in software maintenance tool **5400** in **Figure 54****.** The status of this process may be viewed through uplink command queue view **6928.**

With reference now to **Figure 71****,** a diagram illustrating uploading of software aircraft parts from alternative sources is depicted in accordance with an advantageous embodiment. In this example, software maintenance tool **7100** may upload software aircraft parts from media **7102** into file system **7104** through uplink local inventory manager **7106.** This view is an example of uplink local inventory view **5906** in **Figure 59****.** This view uses a graphical user interface, such as window **6000** in **Figure 62****.**

The control of this uploading or uplinking process from media **7102** may be performed using uplink local inventory view **7108.** Software aircraft parts may be uploaded into software maintenance tool **7100** from other sources other than a library or a software proxy server application. By allowing for this type of flexibility, software maintenance tool **7100** may allow for last minute parts or new parts not yet available from normal sources to be uploaded to an aircraft or if a connection to the library or proxy server application is unavailable.

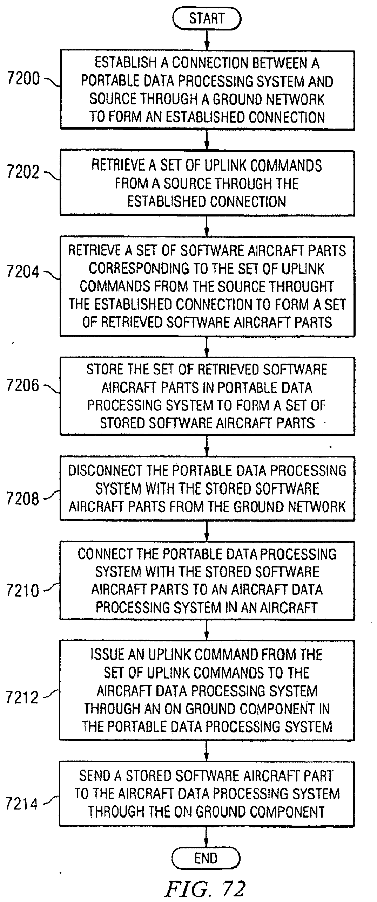

Turning next to **Figure 72****,** a high level flowchart of a process for managing software aircraft parts is depicted in accordance with an advantageous embodiment. The process illustrating in **Figure 72** may be implemented in a software maintenance tool, such as software maintenance tool **5400** in **Figure 54****.**

The process begins by establishing a connection between the portable data processing system and a source through a ground network to form an established connection (operation **7200**). Thereafter, the process retrieves a set of uplink commands from a source through the establish connection (operation **7202**). The source may be, for example, a proxy server application, a library, or even a local storage device.

The process then retrieves a set of aircraft parts corresponding to the set of uplink commands from the source through the established connection to form a set of retrieved software aircraft parts (operation **7204**). The process stores the set of retrieved software aircraft parts in the portable data processing system to form a set of stored software aircraft parts (operation **7206**).

The process then disconnects the portable data processing system with the stored software aircraft parts from the ground network (operation **7208**). In these examples, the portable data processing system is moved to a location to allow the portable data processing to connect to an aircraft network on an aircraft. Next, the process connects the portable data processing system with the stored aircraft parts to an aircraft network in an aircraft (operation **7210**).

The process then issues an uplink command from the set of uplink commands to the aircraft data processing system through an on-ground component in the portable data processing system. The process sends a stored aircraft part corresponding to the uplink command in the set of stored software aircraft parts to the aircraft data processing system through the on-ground component (operation **7114**), with the process terminating thereafter.

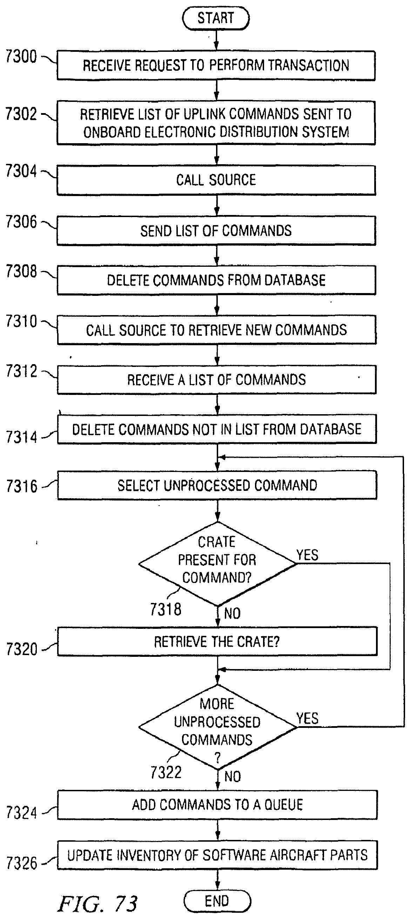

Turning now to **Figure 73****,** a more detailed flowchart of a process for managing software aircraft parts is depicted in accordance with an advantageous embodiment. The process illustrated in **Figure 73** may be implemented in a software maintenance tool, such as software maintenance tool **5400** in **Figure 54****.** The process in this figure illustrates the different steps that occur in a software maintenance tool when connected to a source, such as a library or a proxy server application.

The process begins by receiving a request to perform transactions (operation **7300**). In this example, the process to perform transactions may be initiated by a user through a user interface within user interface components **5900** in **Figure 59****.** In particular, the process may be initiated by a user entering user input into retrieve from library view **5912** in **Figure 59** with a user interface, such as window **6000** as illustrated in **Figure 65****.**

The process then retrieves a list of uplink commands sent to an onboard electronic distribution system (operation **7302**). In this example, the list of uplink commands are ones in which the software aircraft parts identified by the uplink command has been successfully sent to the onboard electronic distribution system. These different commands may be stored in a table in a database, such as commands table **5500** in **Figure 55****.** Each of the records within commands table **5500** in **Figure 55** may include an indication as to whether a command was successfully sent.

Thereafter, the process calls a source (operation **7304**). The source may be, for example, a library or a proxy server application. The process sends these lists of commands to the source (operation **7306**). The commands sent to the source are then deleted from the database and the software maintenance tool (operation **7308**).

The process then calls the source to retrieve new commands (operation **7310**). A list of commands is received from the source (operation **7312**). In operation **7312,** the commands are received in an uncrated form unlike the manner in which a proxy server or application receives commands from a library. The process then deletes commands not in the list from the database (operation **7314**). As a result, the source is the authority or provides an override as to what commands are to be executed by the software maintenance tool.

If a user desires to remove commands or delete commands for execution on an aircraft, these commands may be deleted at the source. The list of commands sent to the software maintenance tool results in any commands not in the list being deleted. As a result, this type of process allows for updating commands to be executed on the software maintenance tool.

The process selects an unprocessed command for processing (operation **7316**). A determination is made as to whether a crate containing a software aircraft part is present for the command (operation **7318**). In operation **7318,** the process checks the file system on the software maintenance tool to determine whether a crate containing the software aircraft part is already stored in the file system. If a crate is not present, then the process retrieves the crate (operation **7320).**

Next, a determination is made as to whether additional unprocessed commands are present (operation **7322).** If additional unprocessed commands are present, the process returns to (operation **7316).** The process proceeds to operation **7322** from operation **7318** if a crate is present for the command. The process then adds the commands to a queue (operation **7324**). The process then updates the inventory of software aircraft parts (operation **7326**).

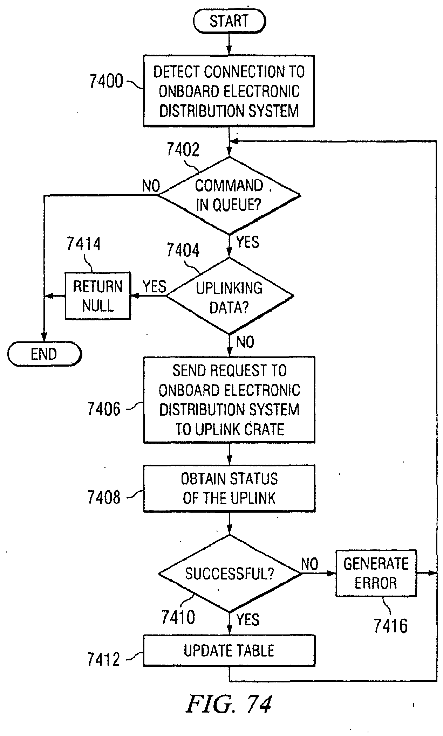

**Figure 74** illustrates operations that occur in a software maintenance tool when a portable data processing system, on which the software maintenance tool is located, is connected to an aircraft network.

In these examples, the software maintenance tool may be used to send software aircraft parts to an onboard electronic distribution system executing on an aircraft data processing system in the aircraft network. In these examples, the queue may be, for example, a queue in uplink command queue manager **6517** in **Figure 65****.** The process then updates an inventory of software aircraft parts (operation **7326**), with the process terminating thereafter.

Turning now to **Figure 74****,** a flowchart of a process for sending software aircraft parts from a software maintenance tool to an onboard electronic distribution system is depicted in accordance with an advantageous embodiment. In this example, the process may be implemented in a software maintenance tool, such as software maintenance tool **5400** in **Figure 54****.** The process begins by detecting a connection to the onboard electronic distribution system on the aircraft data processing system (operation **7400**).

The process determines whether a command is present in the command queue (operation **7402**). If a command is present, the process determines whether the aircraft is currently uplinking data (operation **7404**). If the aircraft is not currently uplinking data, the process sends a request to the onboard electronic distribution system to uplink the crate containing the software aircraft part (operation **7406**). The process then obtains the status of the uplink (operation **7408**). The status may be displayed on a user interface, such as window **6000** in **Figure 61****.** Operation **7408** occurs while uplinking of the crate continues.

After uplinking completes, a determination is made as to whether the uplinking of the crate with the software aircraft part has been successful (operation **7410**). If the uplinking of the crate was successful, the command table is updated (operation **7412**). The table, in these examples, is a commands table, such as commands table **5500** in **Figure 55****.** The process then returns to operation **7302** determine whether additional commands are present in the queue for processing.

With reference again to operation **7410,** if the uplinking of the software aircraft part was not successful, an error is generated (operation **7416**) and the process returns to operation **7402** as described above. With reference again to operation **7404,** if the aircraft is uplinking data, a null value is returned (operation **7414),** with the process terminating thereafter.

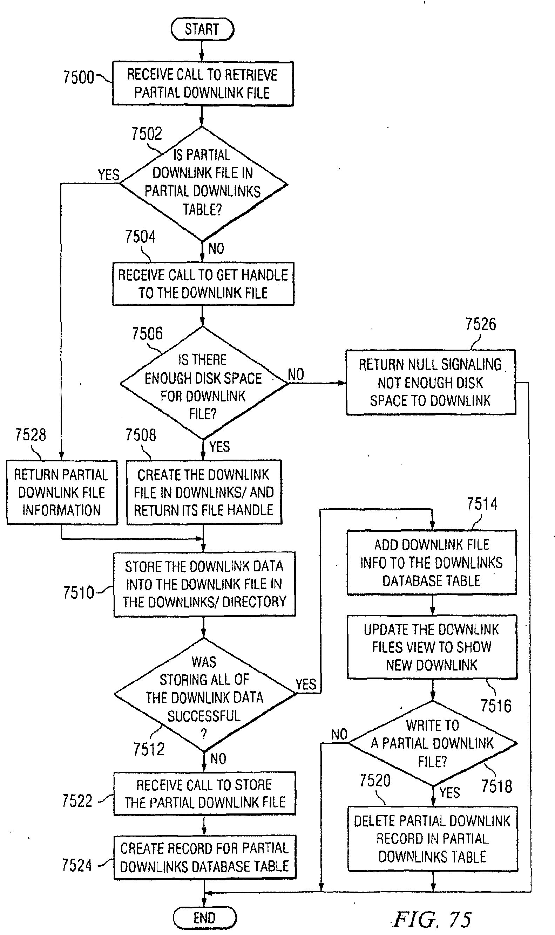

With reference now to **Figure 75****,** a flowchart of the process for receiving downlink data is depicted in accordance with an advantageous embodiment. The process illustrated in **Figure 75** may be implemented in a data software maintenance tool, such as software maintenance tool **5400** in **Figure 54****.**

The process in **Figure 75** begins by receiving a call from the onboard electronic distribution system to retrieve a partial downlink file (operation **7500**). A determination is made as to whether the partial downlink file is contained in a partial downlinks table (operation **7502**). This partial downlink table may be a table, such as, for example, partial downlink table **5600** in **Figure 56****.** If the partial downlink file is not found in the table, the process receives a call to obtain a handle to the downlink file from the onboard electronic distribution system (operation **7504**).

Next, a determination is made as to whether enough disk space is present to store the downlink file (operation **7506**). If sufficient space is present, the downlink file is created in a directory called "downlinks\" and a file handle return to the onboard electronic distribution system (operation **7508**). The process then stores the downlink data into the downlink file in the "downlinks\" directory (operation **7510**).

A determination is then made as to whether the downlink file was successfully stored (operation **7512**). If all of the downlink data was successfully stored, the process adds the downlink file to the downlinks data base table (operation **7514**). This table may be a table such as, for example, downlinks table **5700** in **Figure 57****.** The process then updates the downlink files view to show the new file (operation **7516**). This view is a view, such as downlink files view **5908** as presented in window **6000** in **Figure 63****.**

The process then determines whether the data is written to a partial downlink file (operation **7518**). If the data is not written to a partial downlink file, the process terminates. Otherwise, the partial downlink record in the partial downlinks table is deleted (operation **7520)** with the process terminating thereafter. In this case, the partial downlink file is completed with the rest of the downlink data and the identification of the partial downlink file is no longer needed.

With reference again operation **7512,** if the storing of all of the data for the downlink file was not successful, the process receives a call from the onboard electronic distribution system to store a partial downlink file (operation **7522**). In this case, the onboard electronic distribution system may have interrupted the downlinking data for a number of different reasons. For example, the amount of bandwidth available is insufficient to downlink data and uplink other information. The process then creates a record in the partial downlinks database table (operation **7524**), with the process terminating thereafter.

With reference again to operation **7506,** if insufficient space is present for the downlink file, a null is returned to the onboard electronic distribution system to indicate that insufficient disk space is present for the downlink data (operation **7526**). With reference back to operation **7502,** if a partial downlinks file is present in the partial downlinks table, the process returns partial downlink file information to the onboard electronic distribution system (operation **7528**). This information includes a starting point or offset to send the rest of the downlink data for the downlink file. The process then proceeds to operation **7510** as described above.

Thus, the software maintenance tool described in these different advantageous embodiments provides an additional feature for transferring software aircraft parts from a library to an aircraft data processing system. In the different advantageous embodiments, the software maintenance tool may connect either to the library or to a proxy server application on a ground network to receive commands and software aircraft parts. The software maintenance tool may then be disconnected from the ground network and physically moved to a location for connection to an aircraft network. At this location, the software maintenance tool connects to the aircraft network and transfers software aircraft parts and commands to the onboard electronic distribution system executing on a data processing system on the aircraft network in the aircraft.

Additionally, the software maintenance tool allows for an operator to create commands independently from the library using graphical user interfaces presented by view components in the software maintenance tool. The software maintenance tool also includes features that allow this component to receive software aircraft parts from other sources other than a library or proxy server application.

### Onboard Electronic Distribution System

The different advantageous embodiments also provide a computer implemented method, apparatus, and computer program product for transferring information with an aircraft. In one advantageous embodiment, a computer implemented method is used for transferring information with the aircraft. A connection is established between an onboard electronic distribution system executing in an aircraft data processing system in the aircraft and an on ground component.

The on ground component may be located in a ground network in a software application, such as a software maintenance tool or a proxy server application in these examples. In response to a request for a command from the onboard electronic distribution system made through the connection, the command for execution by the onboard electronic distribution system is identified. This identified command is sent to the onboard electronic distribution system from the on ground component. A transaction identifier is assigned to the command.

A status of the transaction associated with the command is maintained on the onboard electronic distribution system and on the on ground component using the transaction identifier. An uplink is initiated by the onboard electronic distribution system. A software aircraft part is then sent to the onboard electronic distribution system from the on ground component to perform the uplink. The status of this transfer is stored.

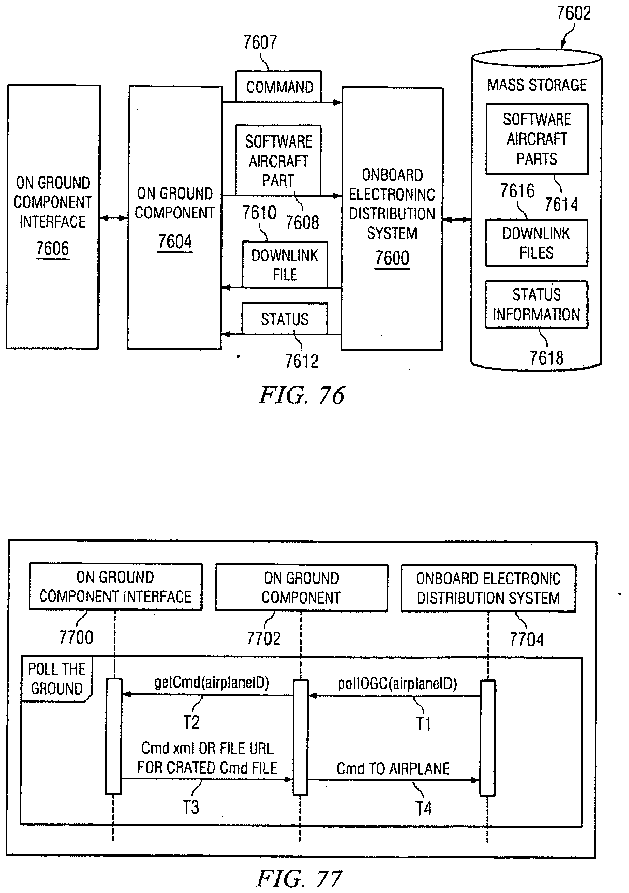

Turning now to **Figure 76****,** a diagram of components used to transfer information with an aircraft is depicted in accordance with an advantageous embodiment. Onboard electronic distribution system **7600** is an example of an onboard electronic distribution system, such as onboard electronic distribution system **310** in software aircraft part management apparatus **300** in **Figure 3****.**

In this illustrative example, onboard electronic distribution system **7600** and mass storage **7602** are components located on an aircraft data processing system in an aircraft network. Onboard electronic distribution system **7600** is an example of onboard electronic distribution system **146** in **Figure 1****.** Mass storage **7602** is an example of storage device **148** in **Figure 1****.** These components are part of an aircraft data processing system, such as aircraft data processing system **144** in aircraft network **101.**

On ground component **7604** and on ground component interface **7606** are examples of components that may be found in a proxy server application or a software maintenance tool, such as proxy server application **3500** in **Figure 35** or software maintenance tool **5400** in **Figure 54****.** In these examples, on ground component **7604** and onboard electronic distribution system **7600** may exchange information. Command **7607,** software aircraft part **7608,** downlink file **7610** and status **7612** are examples of information that may be transferred with onboard electronic distribution system **7600.**

In these examples, on ground component **7604** may send command **7607** to onboard electronic distribution system **7600.** Onboard electronic distribution system **7600** may execute this command to perform a transaction. This transaction may be, for example, an uplink or a downlink of data. An uplink includes sending software aircraft part **7608** to onboard electronic distribution system **7600.** A downlink includes sending a downlink file **7610** to on ground component **7604.**

Additionally, the status of the different transactions is maintained by both on ground component **7604** and onboard electronic distribution system **7600** in these examples. Status **7612** is sent by onboard electronic distribution system **7600** to on ground component **7604** to provide the status of a particular transaction being performed through the execution of a command, such as command **7606.** This status is associated with a particular command or transaction through a command identifier.

Software aircraft part **7608** may be sent to onboard electronic distribution system **7600** for storage with software aircraft parts **7614** in mass storage **7602.** Downlink file **7610** may be a downlink file from downlink files **7616** in mass storage **7602.**

Status information **7618** may be stored in mass storage **7602** and includes status information, such as status **7612.** Status information **7618** may indicate that a particular software aircraft part has been successfully stored within software aircraft parts **7614** in mass storage **76012.** Status information **7618** allows for the initiation of the loading of a software aircraft part from mass storage **7602** onto a line replaceable unit once that software aircraft part has been identified as being successfully uplinked by onboard electronic distribution system **7600** and stored within mass storage **7602.**

Additionally, status information **7618** may identify whether a downlink file, such as downlink file **7610** has been successfully downlinked. If a partial downlink of downlink file **7610** occurs, status information **7618** provides the status of what information within downlink file **7610** has been transmitted. As a result, maintaining a status of how much information has been downlinked to on ground component **7604** may be used to downlink the remaining information for downlink file **7610** at a later point in time without restarting the entire transmission of downlink file **7610.**

On ground component interface **7606** provides an interface with other components to on ground component **7604.** In this manner, on ground component **7604** may be interchangeable or modified with other versions or configurations of on ground components to provide access to a particular onboard electronic distribution system that may have a different protocol for exchanging information or processing commands. In these examples, on ground component **7604** contains the processes needed to transfer information with onboard electronic distribution system **7600.** If a different onboard electronic distribution system is employed that is not compatible with on ground component **7604** on ground component **7604** may be substituted with another on ground component.

As a result, other software components in the ground network do not have to be changed. For example, other components within a proxy server application and a software maintenance tool do not require modifications to be able to communicate with an onboard electronic distribution system.

Turning now to **Figure 77****,** a message flow diagram illustrating message flow used to poll for a command is depicted in accordance with an advantageous embodiment. In this example, the components involved in this message flow are on ground component (OGC) interface **7700,** on ground component **7702,** and onboard electronic distribution system **7704.**

In this example, onboard electronic distribution system **7704** polls on ground component **7702** for a command (message **T1**). In response to being polled, on ground component **7702** sends a get command request to on ground component interface **7700** (message **T2**.) This command is used by on ground component interface **7700** to identify commands that may be located in a proxy server application or a software maintenance tool for onboard electronic distribution system **7704.**

In response, a command or a pointer to a crated command file is returned to on ground component **7702** (message **T3**). In these examples, a proxy server application returns a pointer, such as a universal resource locator, to a crated file containing the command. With a software maintenance tool, the actual command itself is returned in message **T3.** If a command is not present, then a null value or some other indicator is returned in message **T3.** The returned command is then sent to onboard electronic distribution system **7704** (message **T4**). Onboard electronic distribution system **7704** may then process and execute the command received in message **T4.**

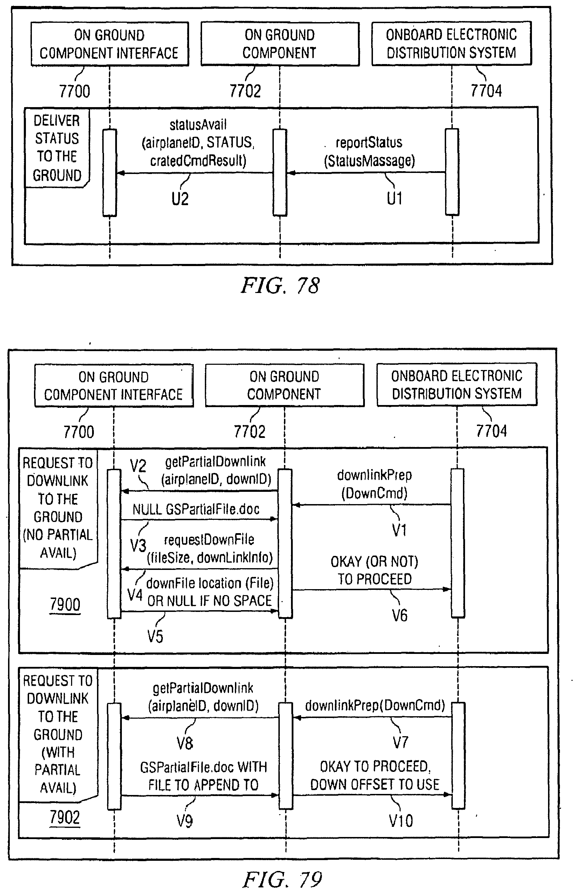

Turning now to **Figure 78****,** a message flow diagram illustrating the sending of status information is depicted in accordance with an advantageous embodiment. In this example, components in the message flow include on ground component interface **7700,** on ground component **7702,** and onboard electronic distribution system **7704.** Onboard electronic distribution system **7702** provides status information for various operations and processes executed by onboard electronic distribution system **7704.** This status information may include, for example, the status of a software aircraft part that has been uplinked, the status of a downlink file, and/or other suitable information.

Onboard electronic distribution system **7704** sends the status to on ground component **7702** (message **U1**). This status is relayed by on ground component **7702** to on ground component interface **7700** (message **U2**). This status information may then be processed by a proxy server application or a software maintenance tool in these examples.

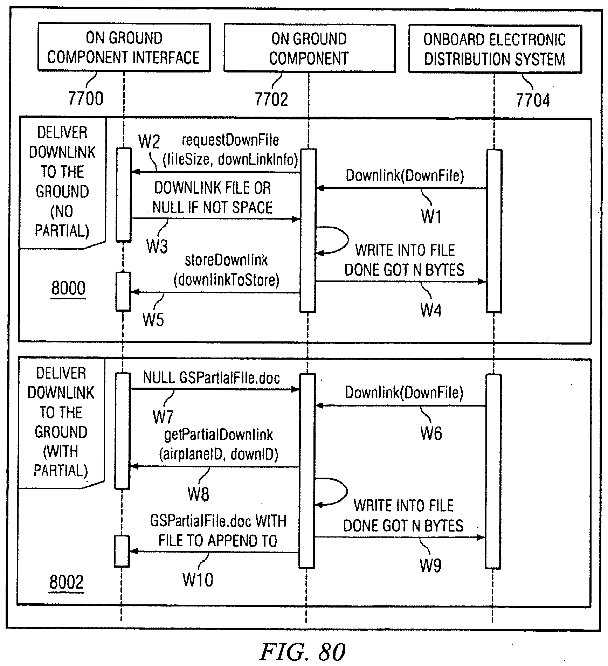

Two phases are present for downlinking data. **Figure 79** illustrates a first phase in which a request for downlinking data is made and **Figure 80** depicts a second phase in which the data is downlinked. With reference now to **Figure 79****,** a message flow diagram of a request to downlink data is depicted in accordance with an advantageous embodiment. The message flow in **Figure 79** shows the first phase in downlinking data. In these examples, **Figure 79** shows the request to downlink data. The second phase is for actually transmitting down link data as described with respect to **Figure 80** below.

In this example, phase one has two cases. In case **7902,** a request to downlink information is made with a partial downlink being available.

In case **7900,** onboard electronic distribution system **7706** sends a request to downlink a file (message **V1**). In message **V1,** the request may be refused if no space is present to store the downlink file. In response, on ground component **7702** sends a request to determine whether a partial downlink record is present to on ground component interface **7700** (message **V2**). In response, on ground component interface **7700** sends a request to obtain a partial downlink associated with the request to send to message **V1** (message **V2**). The request sent in message **V2** includes an airplane identifier and a downlink identifier. This information is used by on ground component interface **7700** to determine whether a partial downlink file is present for this particular downlink file.

On ground component interface **7700** returns a null value to on ground component **7702** indicating that a partial downlink file is not present for the requested downlink (message **V3**). In response, on ground component **7702** makes a request to downlink the downlink file (message **V4**). The message in message **V4** is a request to downlink the entire file, in these examples. In these examples, t message includes information about the file size. If space is available, on ground component interface **7700** returns a location to downlink the file to on ground component **7702** (message **V5**). If no space is available, a null value is returned to message **V5.**

In response, on ground component **7702** returns a response to onboard electronic distribution system **7704** (message **V6**). This message is either an indication that is an okay to proceed downlinking or a denial of the request.

In case **7902** in the first phase, onboard electronic distribution system **7704** makes a request to downlink part of a file for a downlink file (message **V7**). In response, on ground component **7702** makes a request to determine whether a partial downlinked file is already present for the requested downlink (message **V8**).

In response to receiving this message, on ground component interface **7900** returns a document containing a reference to an existing partially downlinked file to on ground component **7702** (message **V9**). In these examples, the document is an extensible markup language (XML) document and reference may be a pointer or universal resource locator (URL) depending on the particular implementation.

When the reference is returned, on ground component **7702** sends a response to the request to downlink a partial downlink file to onboard electronic distribution system **7704** (message **V10**). The response, in this example, includes an indication that it is okay to proceed with the downlink and an offset to use. The offset identifies where in the downlink file the downlinking of data should start. This offset is identified from the downlink information already received for the downlink file.

Turning now to **Figure 80****,** a message flow diagram for downlinking data is depicted in accordance with an advantageous embodiment. As with **Figure 79****,** this downlink process includes two cases, case **8000** and case **8002.** Case **8000** involves downlinking data with no partial downlinks and phase **8002** involves downlinking data with partial downlinks. In **Figure 79****,** case **7900** illustrates the case in which a partial downlink is not available, while case **7902** illustrates the case in which a partial downlink file is available on the on ground component.

In case **8000,** the message flow begins with onboard electronic distribution system **7704** downlinking the downlink file to on ground component **7702** (message **W1**). On ground component **7704** makes a request to downlink the file from the onboard electronic distribution system **7704** to on ground component interface **7700** (message **W2**). This message includes a file size as well as other suitable downlink information.

On ground component interface **7700** returns a response to on ground component **7702** (message **W3**). A null is returned if space is unavailable to downlink the downlink file. If the downlink file can be downlinked, on ground component **7702** writes the information into a file and returns a response to onboard electronic distribution system **7704** (message **W4**). Thereafter, on ground component **7702** makes a request to on ground component interface **7700** to store the file (message **W5).**

Next, in case **8002,** onboard electronic distribution system **7704** downlinks a file to on ground component **7702** (message **W6**). Thereafter, on ground component **7702** requests the partial downlink file from on ground component interface **7700** (message **W7**). In this example, the file is returned to on ground component **7702** by on ground component interface **7700** (message **W8**).

At this time, on ground component **7702** writes information into the file to complete the downlink file and returns a response to onboard electronic distribution system **7704** (message **W9**). In this example, the number of bits written in the file is identified in the response. Thereafter, on ground component **7704** sends a request to on ground component interface **7700** to store the downlinked file (message **W10**).

In response to this message, on ground component interface **7700** may store the file within the file system of the ground component. The ground component may be a file stored in a proxy server application or a software maintenance tool.

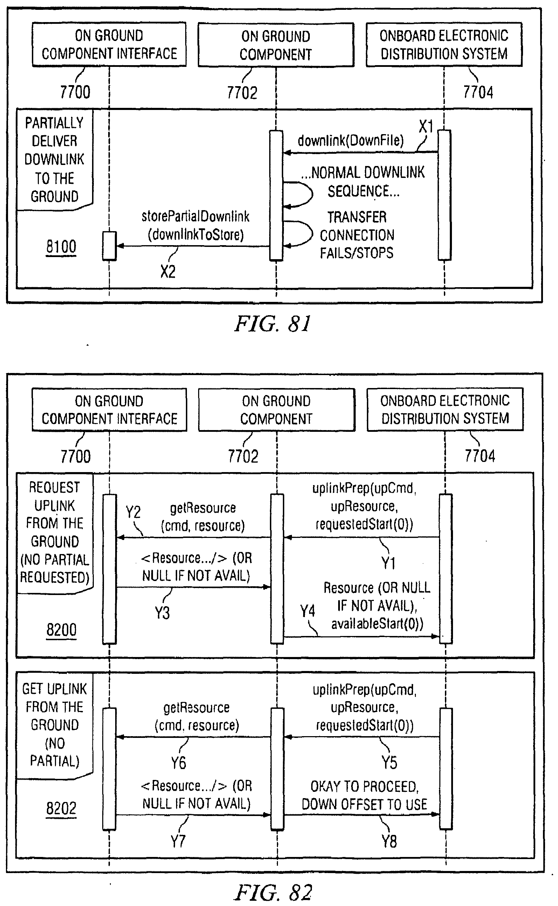

With reference now to **Figure 81****,** a diagram illustrating message flow when the file is only partially delivered is depicted in accordance with an advantageous embodiment. In this example, onboard electronic distribution system **7704** downlinks a file using a normal downlink sequence in which the connection fails or stops (message **X1**). In response to only receiving part of the file, on ground component **7702** sends a request to on ground component interface **7700** to store the partial downlink file (message **X2**). In response to receiving this request, the partial downlink file is stored in a file system by on ground component interface **7700.** This file system may be located in a proxy server application or a software maintenance tool.

Turning now to **Figure 82****,** a message flow diagram illustrating an uplink process is depicted in accordance with an advantageous embodiment. Uplinking is performed in two phases in these examples. In phase **8200,** information about the file to be uplinked is requested and in phase **8202,** the file itself is uplinked. In both phases, on ground component **7702** prompts the ground system for information about the resource. The ground system may be, for example, other components in a proxy server application or software maintenance tool.

As depicted, onboard electronic distribution system **7704** sends a message requesting the uplink of a software aircraft part (message **Y1**). In response to receiving this request, on ground component **7702** sends a call to obtain the particular software aircraft part to on ground component interface **7700** (message **Y2**). In response to this call, an identification of the software aircraft part is returned if the software aircraft part is present (message **Y3).**

If the part is not present, a null value is returned in these examples. In response to receiving this message, on ground component **7702** relays the message to onboard electronic distribution system **7704** (message **Y4**).

In phase **8202,** onboard electronic distribution system **7704** requests the software aircraft part (message **Y5**). In response to receiving this request, on ground component **7702** requests the software aircraft part from on ground component interface **7700** (message **Y6**). On ground component interface **7700** returns the resource if it is available (message **Y7**). If the resource is not available, a null value is returned. On ground component **7702** then sends the software aircraft part to the onboard electronic distribution system **7704** (message **Y8**). If the software aircraft part is not available, then an error is returned.

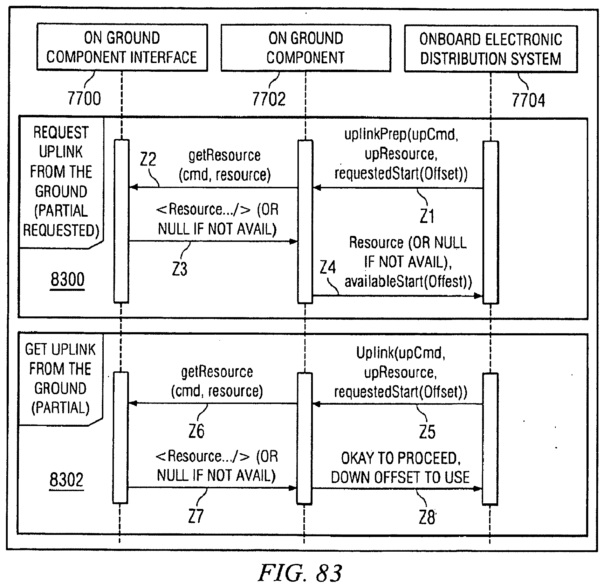

Turning now to **Figure 83****,** a diagram illustrating message flow in an uplink process is depicted in accordance with an advantageous embodiment. In this example, two phases are present in the message flow, phase **8300** and phase **8302.** In phase **8300,** a request is made for a partial uplink of a software aircraft part and in phase **8302,** the uplink of the partial software aircraft part is performed. This partial uplinking of a software aircraft part may be performed if a previous transfer of the software aircraft part was interrupted.

In phase **8300,** onboard electronic distribution system **7704** sends an uplink request to on ground component **7702.** In this example, the request identifies the software aircraft part in an offset or start position from which the part should be uplinked (message **Z1**). In response to receiving this request, on ground component **7702** requests the software aircraft part (message **Z2**).

On ground component interface **7700** returns the software aircraft part if the part is present. Otherwise, a null value is returned (message **Z3**). In response to receiving the software aircraft part, on ground component **7702** returns a response indicating that the software aircraft part is available at the particular offset or starting point (message **Z4**).

Next, in phase **8302,** onboard electronic distribution system **7704** requests the software aircraft part at the start or offset position (message **Z5**). On ground component **7704** requests the resource in response to receiving this request (message **Z6**)**.**

In response to receiving the request, on ground component interface **7700** returns the software aircraft part or a null value if the part is unavailable to on ground component **7702** (message **Z7**). Responsive to receiving the response, on ground component **7704** begins uplinking the software aircraft part at the start point or offset identified (message **Z8).** If the part is unavailable, an error is returned to onboard electronic distribution system **7704.**

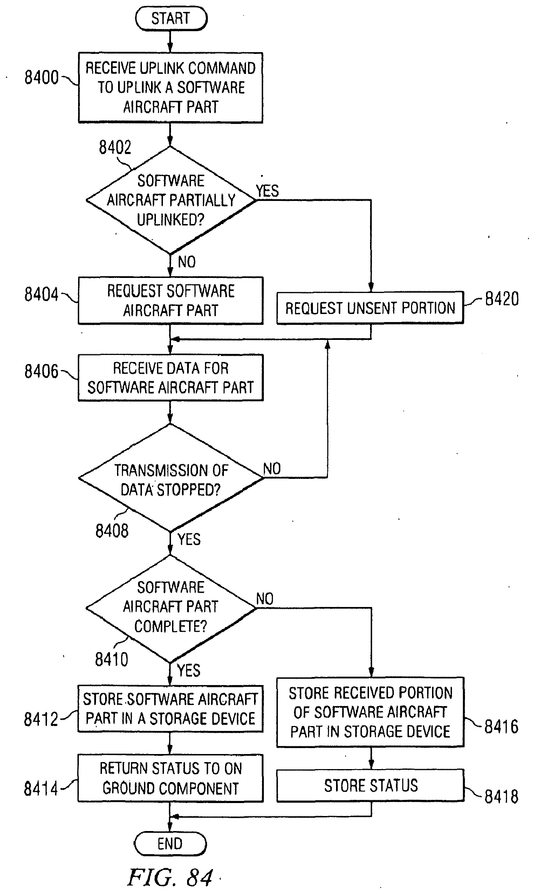

Turning now to **Figure 84****,** a flowchart of a process for uplinking data is depicted in accordance with an advantageous embodiment. The process illustrated in **Figure 84** may be implemented in an onboard electronic distribution system, such as onboard electronic distribution system **7600** in **Figure 76****.** In this example, the uplink data is for a software aircraft part.

The process begins by receiving an uplink command to uplink a software aircraft part (operation **8400**). A determination is made as to whether the software aircraft part has already been partially uplinked (operation **8402**). If the software aircraft part has not been partially uplinked, a request is made to receive the software aircraft part (operation **8404**). The process then receives data for the software aircraft part (operation **8406**).

A determination is made as to whether the transmission of the data has stopped (operation **8408**). The transmission may stop for a number of reasons. For example, the transfer of software aircraft part may have completed. In another example, an interruption may have occurred without completing the transfer of the software aircraft part.

The interruption may also occur due to various events. In one event, the communications link between the onboard electronic distribution system and the on ground component may have terminated unexpectedly. In another example, the event may be an operator terminating the transmission of the software aircraft part from a software maintenance tool.

If the transmission of data has not stopped, the process returns to operation **8406.** Otherwise, a determination is made as to whether the software aircraft part is complete (operation **8410**). If the software aircraft part is complete, the software aircraft part is stored in a storage device in the aircraft data processing system (operation **8412**). In this example, the storage device may be mass storage **7618** in **Figure 76****.**

The process then returns a status to the on ground component (operation **8414**) with the process terminating thereafter. In this example, the status indicates that the software aircraft part has been completely received.

With reference again to (operation **8410**), if the software aircraft part has not been completely received, the received portion of the software aircraft part is stored in a storage device (operation **8416**). The process then stores the status (operation **8418**) with the process terminating thereafter. In this illustrative example, the status may identify the software aircraft part and the portion of the software aircraft part that has actually been received. This information may be used at a later point to retransmit the remaining portion of the software aircraft part.

With reference again to operation **8402,** if the software aircraft part has been partially uplinked, the process requests the unsent portion of the software aircraft part (operation **8420**). The process then proceeds to operation **8406** to receive data from the software aircraft part. In operation **8420,** the request may include an identification of the offset or start point for the software aircraft part data that has not yet been received.

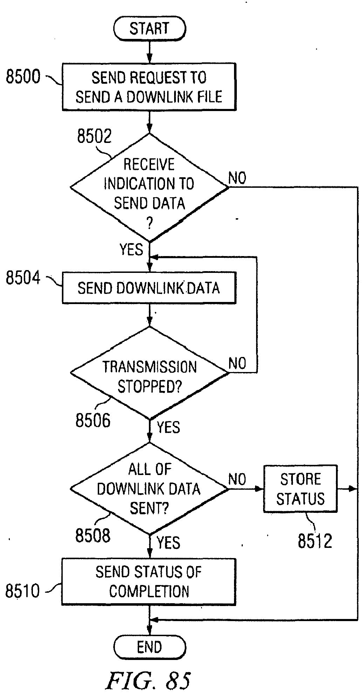

Turning now to Figure **85****,** a flowchart of a process for downlinking data is depicted in accordance with an advantageous embodiment. The process illustrated in **Figure 85** may be implemented in an onboard electronic distribution system, such as onboard electronic distribution system **7600** in **Figure 76****.**

The process begins by sending a request to send a downlink file (operation **8500**). A determination is made as to whether an indication is received to send the data for the downlink file (operation **8502**). If an indication is received to send the data, the process sends the downlink data for the downlink file (operation **8504**).

Next, a determination is made as to whether the transmission of the downlink data has stopped (operation **1006**). The transmission may stop because all of the data has been sent. In other instances, for example, the transmission may stop due to a loss of a communications link or an interruption by an operator on the aircraft. If the transmission of the data has not stopped, the process returns to operation **8504** to continue to send downlink data.

If the transmission has stopped, a determination is made as to whether all of the downlink data has been sent from the downlink file (operation **8508**). If all of the downlink data has been sent, the process sends a status of the completion (operation **8510**) with the process terminating thereafter.

With reference again to operation **8508,** if all of the downlink data has not been sent, a status of the transmission of the downlink data is stored (operation **8512**). In these examples, the status may be stored as status information **7618** in **Figure 76****.** The status in this example may identify the downlink file and the amount of data that was sent.

This process also may be used to send a partial downlink file in which a portion of the downlink file has already been sent. With this type of downlinking, operation **8500** sends a request to downlink a portion of the downlink file rather than the entire file. With a partial downlink file, operation **8502** is a positive indication if the on ground component finds the partially downlinked data from a previous transmission. This indication also includes an offset or starting point to send the rest of the downlink file.

### CRATE TOOL

Software aircraft parts may be received from various sources. Software aircraft parts may be received from a manufacturer of the aircraft or some third party source, depending on the particular implementation. Further, an airline also may create software aircraft parts for use within its aircraft. These parts are distributed using crates in the different advantageous embodiments.

The different advantageous embodiments provide a computer implemented method, apparatus, and computer program product that promotes automation of the receipt and distribution processing digitalized content, computer program(s) or data in digital form that is sensible by a computer. One advantageous embodiment includes the replacement of the physical shipping crate and physical media with a computer sensible crate that facilitates automation. Another advantageous embodiment is the application of one or more digital signatures to the objects inside the crate and to the crate itself, thus in conjunction with a functioning Private Key Infrastructure provides authentication of the sender, non-repudiation and assurance of integrity.

In another advantageous embodiment, a method is used for automated processing software aircraft parts. An incoming crate, which can be an electronic zip file for instance, containing a signed software aircraft part is received from a source outside of an airline's part management system. A set of signatures is validated for the incoming crate and the software aircraft part. Responsive to the set of signatures being valid, the incoming crate is unpacked. The contents of the incoming crate may be displayed at the user's discretion. Responsive to a request to upload the unpacked software aircraft part to a library in a software aircraft part management system or apparatus, the unpacked software aircraft part is signed again with an approval signature to form a signed, approved software aircraft part. An advantageous embodiment is that this second approval digital signature also acts to transfer bailment from the provider of the part to the recipient of the part and provides non-repudiation of the consummation of the transaction.

In an advantageous embodiment where the recipient of the signed, approved software aircraft part may be placed in another crate. The crate containing the signed, recipient approved software aircraft part is signed to form a signed crate wherein signatures for the signed, approved software aircraft part and the signed crate are different from the set of signatures in the incoming crate. The signed crate may be sent to the recipient's library in the software aircraft part management system or apparatus.

In another advantageous embodiment, a computer implemented method is used for processing additional configuration items. A crate containing a configuration item is received to form a received crate. A determination is made as to whether a set of signatures for the crate and the configuration item are valid. Responsive to a determination that the set of signatures are valid, the configuration item is stored.

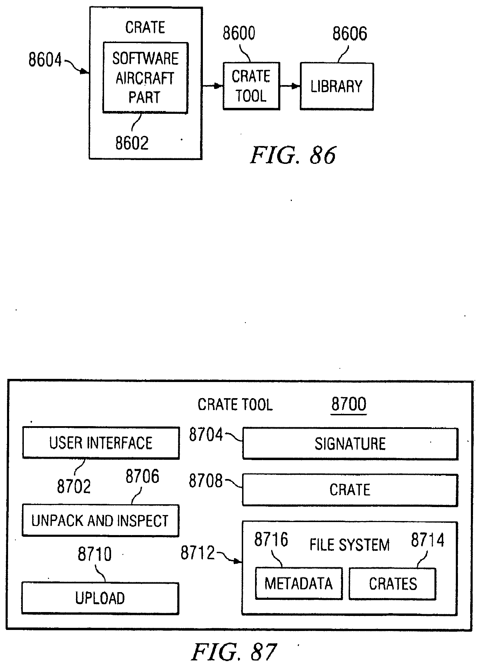

Turning now to **Figure 86****,** a diagram illustrating a crate tool is depicted in accordance with an advantageous embodiment. Crate tool **8600** is used to receive and manage crates for use in an environment, such as software aircraft part management apparatus **300** in **Figure 3****.**

Additionally, crate tool **8600** may be implemented in other components for creating crates within software aircraft part management apparatus **300** in **Figure 3****.** For example, the functionality of crate tool **8600** may be implemented in a software maintenance tool, such as software maintenance tool **5400** in **Figure 54****.** As another example, these functions also may be implemented in aircraft network **7601** in **Figure 76** to send information, such as downlink files in crates, back to a ground network.

In this example, crate tool **8600** may receive software aircraft part **8602** stored or wrapped within crate **8604.** Although these examples illustrate software aircraft part **8602** as being the contents of crate **8604,** any configuration item may be placed into crate **8604** for use within software aircraft part management apparatus **300** in **Figure 3****,** in these examples. For example, a configuration item also may take the form of a document, configuration information, or other suitable information.

Crate tool **8600** processes crate **8604** for uploading to library **8606.** Library **8606** may be implemented using library **1700** in **Figure 17****.** This processing may include various functions, such as checking the integrity and a set of signatures within crate **8604.** The checking of signatures may include both the signature for crate **8604** and software aircraft part **8602.** Further, software aircraft part **8602** may be removed from crate **8604** and inspected. Crate tool **8600** also may repackage software aircraft part **8602** into another crate for uploading to library **8606.**

Turning now to **Figure 87****,** a diagram illustrating a crate tool is depicted in accordance with an advantageous embodiment. Crate tool **8700** is a more detailed illustration of crate tool **8600** in **Figure 86****.** Crate tool **8700** includes user interface **8702,** signature **8704,** unpack and inspect **8706,** crate **8708,** and upload **8710.** User interface **8702** provides a user interface for a user to operate crate tool **8700.** Crate tool **8700** may be implemented in a data processing system, such as data processing system **200** in **Figure 2****.**

Signature **8704,** in these examples, provide a number of different functions. For example, signature **8704** may check the integrity of a crate and its configuration items. This integrity may be performed by checking a digital signature for the crate and its contents. In these examples, the signatures are located in extensible markup language documents that are separate from the contents that are signed. In other embodiments, signatures may be integral to the signed configuration item.

Signature **8704** may sign an existing software aircraft part as well as other documents, files, and other suitable data. Unpack and inspect **8706** allows a user to remove software aircraft parts and other information from a crate and inspect or view those components. In unpacking a crate, unpack and inspect **8706** unzips or removes software aircraft parts from the crate and places them in a selected file system.

Additionally, if a packing slip is present in the crate, this packing slip also may be displayed. The inspect portion of this function may be used to allow a user to inspect the contents and signature validity of crates **8714** stored in file system **8712.** Crate **8708** allows a user to create new crates and manipulate existing crates.

For example, in manipulating crates, a user may organize crates, add to, or subtract from its contents. Crates may be organized in a number of different ways, depending on the particular implementation. For example, a directory may store crates containing software aircraft parts for a particular type of aircraft. Also, crates may be stored based on their source. Upload **8710** provides a function to send signed configuration items in crates from crate tool **8700** to a library, such as library **1700** in **Figure 17****,** in these examples.

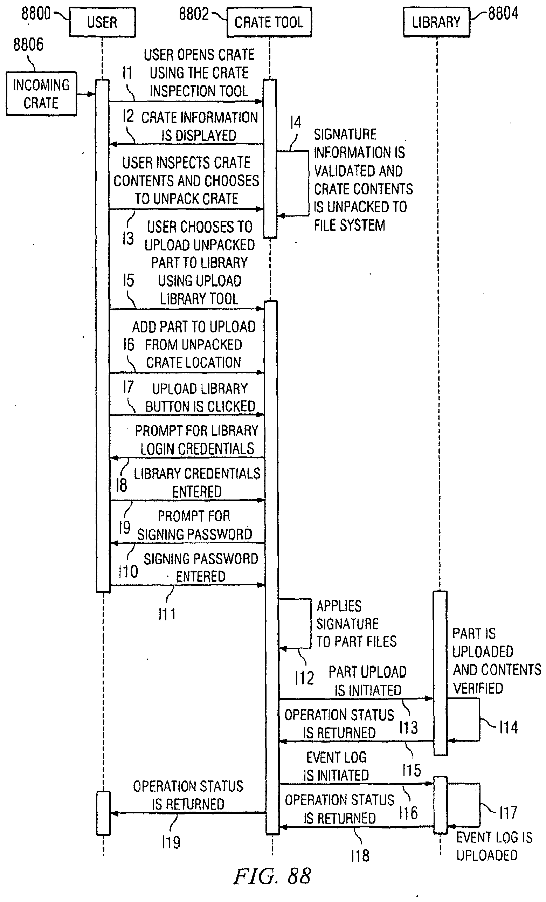

Turning now to **Figure 88****,** a message flow diagram illustrating the processing of a crate is depicted in accordance with an advantageous embodiment. The message flow in **Figure 88** illustrates a flow of messages used to process crates for uploading to a library.

In this example, the different components involved in processing a crate involve user **8800,** crate tool **8802,** and library **8804.** The message flow, in this example, begins when a user processes or receives incoming crate **8806.** In this example, a user may receive incoming crate **8806** from various sources. For example, incoming crate **8806** may be received through an internet connection or through some physical media, such as a flash memory or compact disc.

The user opens the crate using a crate inspection tool (operation **I1**). In response to this user input, crate tool **8802** displays crate information to the user (operation **I2**). The user then inspects the crate contents and chooses to unpack the crate (operation **I3**). In response to receiving this user input, crate tool **8802** validates the signature information and unpacks the contents of the crate into the file system (operation **I4**). The signatures in incoming crate **8806** are signatures generated by the source of the software aircraft part in incoming crate **8806.**

Thereafter, user input is generated by user **8800** to upload the unpacked software aircraft part to the library using a library upload tool (operation **I5**). The user enters user input to add a part to upload from the unpacked crate location (operation **I6**). The user then presses an upload to library button (operation **I7**).

In response to this user input, crate tool **8802** prompts user **8800** for library login credentials (operation **I8**). In response to this prompt, user **8800** enters library credentials (operation **I9**). Crate tool **8802** then prompts the user for a signing password to sign the software aircraft part (operation **I10**). In response to receiving this prompt, user **8800** enters a password (operation **I11**). The signing password, in these examples, is used to create the signature that is to be applied to the various files for the software aircraft part. In response to receiving the password from the user, crate tool **8802** applies the signature to the different software aircraft part files (operation **I12**).

As part of this signing process, a new crate is created with the software aircraft part files being placed in that new crate. With this type of implementation, the digital signatures on the software aircraft part in the crate, at this stage, is different from the signatures from incoming crate **8806.** The signatures that are applied now are ones for a particular user, such as a particular airline or maintenance facility.

After the signature has been applied, a part upload is initiated by crate tool **8802** to library **8804** (operation **I13**). Library **8804** uploads the software aircraft part in the crate and verifies the contents (operation **I14**). Thereafter, an operation status is returned to crate tool **8802** from library **8804** (operation **I15**). Crate tool **8802** sends an event log to library **8804** (operation **I16**). The event log is uploaded by library **8804** (operation **I17**).

Next, an operation status on the upload is returned to crate tool **8802** from library **8804** (operation **I18**). This operation status is then presented to user **8800** by crate tool **8802** (operation **I19**).

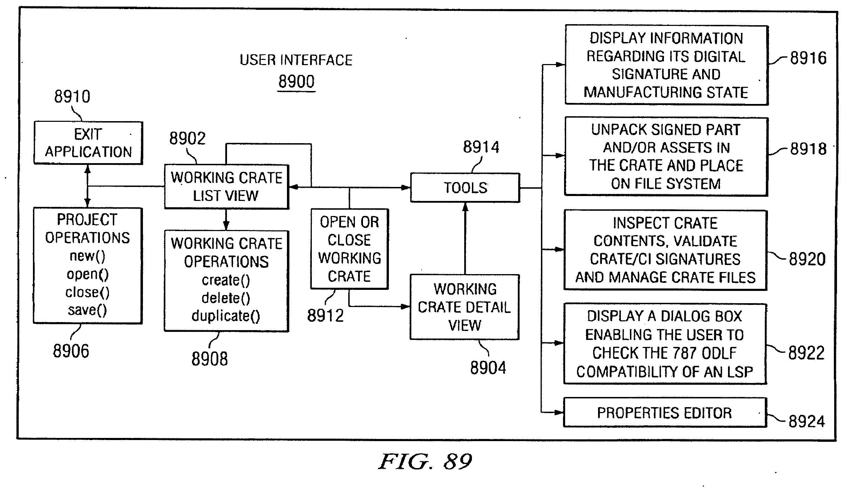

Turning now to **Figure 89****,** a diagram illustrating one implementation of a user interface for a crate tool is depicted in accordance with an advantageous embodiment. In this example, user interface **8900** illustrates components that may be used to implement user interface **8702** in crate tool **8700** in **Figure 87****.** In this example, user interface **8900** includes working crate list view **8902** and working crate detail view **8904.**

Working crate list view **8902** displays a list of different crates. From this view, a user may initiate project operations **8906,** working crate operations **8908,** or exit application **8910.** Project operations **8906** may be used to create a new project, open an existing project, close a current project, or save a current project. Working crate operations **8908** allow a user to create crates, delete crates, or duplicate crates, in these examples. Exit application **8910** allows a user to exit the crate tool.

Further, from working crate list view **8902,** a user may initiate open or close a working crate **8912.** If a working crate is open, working crate detail view **8904** is employed. Working crate detail view **8904** provides a user interface that may display different functions, depending on the particular type of crate being processed.

In addition, from working crate list view **8902** and from working crate detail view **8904,** a user may access tools **8914.** Tools **8914** provide various functions, such as checking crate integrity, unpacking and inspecting crates, and checking compatibility and setting preferences. In this example, tools **8914** provides functions **8916, 8918, 8920, 8922,** and **8924.** Function **8916** displays information regarding the digital signature and the signature states of the configuration item. Examples of signatures states are manufacturing, approval, and source.

Function **8918** unpacks a signed part and/or assets in the crate and places those components into the file system. Function **8920** provides for an inspection of crate contents, validating crate and component signatures, and managing crate files. Function **8922** allows a user to check the compatibility of a software aircraft part with the airplane's onboard data load function (ODLF). Function **8924** allows a user to edit various properties and preferences. The depicted functions are provided as illustrative examples of functions that may be provided in tool **8914.** Of course, other functions may be used in addition to or in placed of the depicted functions.

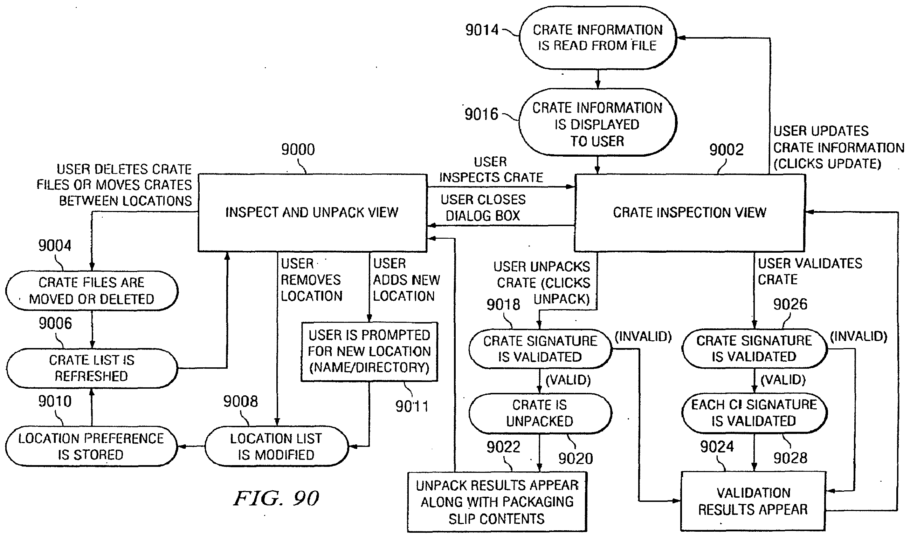

With reference now to **Figure 90****,** a diagram illustrating data flow in inspecting and unpacking crates is depicted in accordance with an advantageous embodiment. The data flow illustrated in **Figure 90** may be implemented in unpack and inspect **8706** in crate tool **8700** in **Figure 87****.**

In this example, two dialog boxes or views are presented, inspect and unpack view **9000** and crate inspection view **9002.** Inspect and unpack view **9000** is displayed to a user and allows a user to perform various actions with respect to a crate that has been received by the crate tool. For example, a user may select an operation to manipulate a crate. This operation may be, for example, delete or move a set of crate files.

If the user selects this operation from inspect and unpack view **9000,** the selected crate files are moved or deleted (operation **9004**). Thereafter, the crate list is refreshed (operation **9006**) and the process returns to inspect and unpack view **9000.**

If a user selects an operation such as removing a location, the process then modifies the location list (operation **9008**). The location preference is then stored (operation **9010**), with the process then returning to operation **9006** as described above. This location preference is a path or direction selected by the user. In this manner, a user may remove a location from a set of directories or a set of locations in which crates may be stored.

At inspect and unpack view **9000,** if the user enters user input at a new location in this view, the user is prompted for a new location (operation **9011**). Once the user enters the new location information, the process proceeds to operation **9008** as described above. If the user selects or decides to inspect a crate, the process moves to crate inspection view **9002.** In this user interface, the user may perform various actions with respect to a crate. For example, a user may select to update crate information. Thereafter, crate information is read from the file (operation **9014**). The process then updates dialog box controls with data to display crate information to the user (operation **9016**).

When crate inspection view **9002** is displayed, a user may select another action, such as unpacking a crate. The selecting of this action results in the crate signature being validated (operation **9018**). If the signature is valid, the crate is unpacked (operation **9020**). The process presents the results of unpacking the crate along with displaying any packing slip contents in crate inspection view **9002** (operation **9022**). Thereafter, the process returns to inspect and unpack view **9000.**

In operation **9018,** if the signature of the crate is invalid, the process presents the validation results (operation **9024**). These results present in crate inspection view **9002** may include an indication that the signature problem is fatal if the validation is incorrect for a crate signature.

In crate inspection view **9002,** if the user selects to validate a crate, the process validates the crate signature (operation **9026**). If the crate signature is valid, then each configuration item signature is then validated (operation **9028**). In both operations **9026** and **9028,** the process proceeds to operation **9024** to display the results of the validation. If a configuration item signature is not valid, then a warning is presented in contrast with a fatal problem occurring if the crate signature is not valid. In crate inspection view **9002,** if the user closes the dialog box, the process returns to inspect and unpack view **9000.**

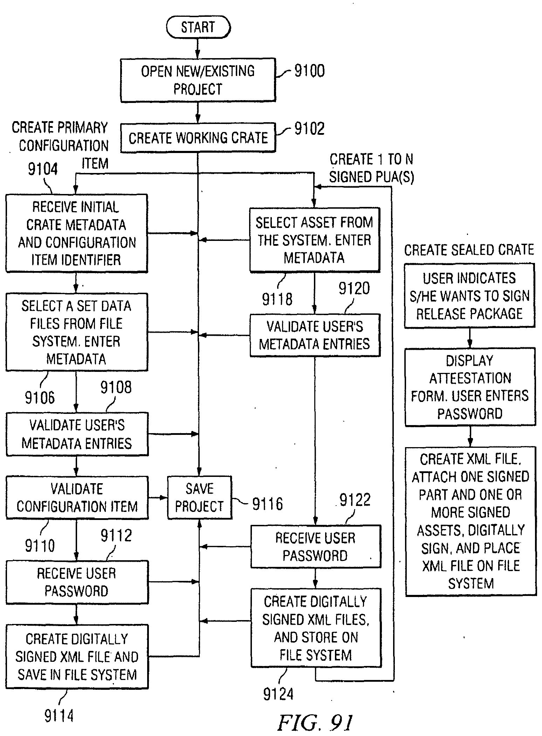

Turning now to **Figure 91****,** a diagram illustrating the data flow in creating a crate is depicted in accordance with an advantageous embodiment. The process illustrated in **Figure 91** may be implemented in a crate tool, such as crate tool **8700** in **Figure 87****.** More specifically, the different operations illustrated in **Figure 91** may be implemented in crate **8708** in **Figure 87****.**

In this example, the process begins by opening a new or existing project (operation **9100**). Thereafter, the process creates a working crate (operation **9102**). In creating an initial signed configuration item, the process begins by receiving initial crate metadata and a configuration item identifier (operation **9104**). In these examples, a configuration item is a single item consisting of a set of files that may be stored within a crate. Each configuration item has a unique identifier. A configuration item may be, for example, a software aircraft part, a related document, or some other file.

The user then navigates to the configuration item's data directory on the file system and enters metadata for those selected files (operation **9106**). A directory of data files is selected because a particular configuration item may be comprised of more than one file. For example, a software aircraft part may include an executable file, a configuration file, and a dynamic link library.

Then, the process validates the metadata entries made by the user (operation **9108**). In operation **9108,** the process may determine whether the metadata entries meet a set of rules. These rules may require certain types of configuration items that contain certain amounts of information and certain types of information. For example, with software aircraft parts, a source or manufacturer of the software aircraft part as well as an identification of the type of aircraft may be entered as metadata. In addition, the metadata also may identify a particular aircraft that is to receive the software aircraft part.

The process may validate the configuration item depending upon the type of working crate (operation **9110**). Next, the process receives a user password (operation **9112**). The process then creates a digitally signed extensible markup language file for the configuration item and stores the digitally signed extensible markup language file with the configuration item in the file system (operation **9114**). The process proceeds to save the project (operation **9116**). A user may, during any of these different operations, choose to halt and save the project and continue the project at another time.

The user then navigates to the asset's data directory on the file system and enters metadata for those selected files (operation **9118**). Thereafter, the process validates the metadata entries made by the user (operation **9120**). The process receives a user password (operation **9122**). The process then creates a digitally signed extensible markup language file for the asset and stores it in the asset's directory (operation **9124**).

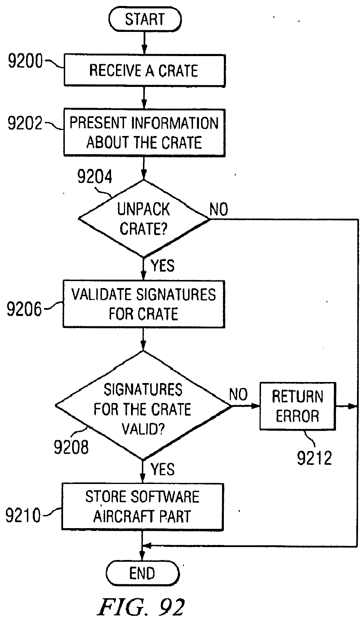

Turning now to **Figure 92****,** a flowchart of a process for processing a received crate is depicted in accordance with an advantageous embodiment. The process illustrated in **Figure 92** may be implemented in a software component, such as crate tool **8700** in **Figure 87****.** More specifically, the process may be implemented in unpack and inspect **8706** in **Figure 87****.**

The process begins by receiving a crate (operation **9200**). In this example, the crate may be received through various sources. For example, a physical media may be connected to or placed into the data processing system in which the process executes. In other embodiments, the crate may be received through a communications link, such as a network link.

The process presents information about the crate (operation **9202**). In this operation, the information may be presented through a graphical user interface. This information may include, for example, the manufacturer source of the crate, an identification of the contents in the crate, a size of the crate, and other suitable information. Thereafter, a determination is made as to whether to unpack the crate (operation **9204**). This determination may be made through receiving user input.

If the crate is to be unpacked, the process validates signatures for the crate (operation **9206**). In these examples, the signatures may be signed using a private key. A public key located in the crate may be used to determine whether the manifest and file digests are valid. This validation also is used to determine whether the crate actually has been originated by the source and remains unmodified or tampered with.

A determination is made as to whether the signatures for the crate are valid (operation **9208**). If the crate signature is valid, the process unpacks the crate containing the software aircraft part and places it on the file system (operation **9210**). The configuration item signatures do not have to be valid to unpack the crate. It is up to the user whether or not to continue unpacking the crate if one or more invalid configuration item signatures are detected. In these examples if the crate signature is valid, the software aircraft part is unpacked and stored within a file system as described in operation **9210**). The process terminates thereafter.

With reference again to operation **9208,** if the crate signature is not valid, an error is returned (operation **9212**), with the process terminating thereafter. With reference back to operation **9204,** if the user decides not to unpack the crate, the process also terminates.

This tool supports the work flow status and dynamics. The implementation of a user interface as discussed in **Figure 2** above allows the user to create, validate and complete a crate. A crate starts with a draft status, and so does each component of the crate (such as the part and a related document). As this process proceeds, the status of the crate, as well as each component, changes from draft to in-work, and to complete as the crate is signed. The implementation also allows the user to add, delete, or modify any components of the crate. Any addition, deletion, or modification will result in a change of the current status of the relevant component and that of the crate, and thus requires re-validation and resigning. The status is graphically indicated in both crate list view and crate detailed view. While providing flexibility and supporting work flow, this functionality further ensures the integrity of completed crates.

This tool supports the dynamic release/distribution work flow status. The implementation of a user interface as discussed in **Figure 4** above allows the user to create, validate and complete a crate. A crate starts with a draft status, and so does each component of the crate (such as the part and a related document). As this process proceeds, the status of the crate, as well as each component, changes from draft to in-work, and to complete as the crate is signed. The implementation also allows the user to add, delete or modify any components of the crate. Any addition, deletion or modification may result in a change of the current status of the relevant component and that of the crate, and thus requires re-validation and resigning. The status is graphically indicated in both crate list view and crate detailed view. While providing flexibility and supporting work flow, this functionality further ensures the integrity of completed crates.

The flowcharts and block diagrams in the different depicted embodiments may illustrate the architecture, functionality, and operation of one or more possible implementations of apparatus, methods and computer program products. In this regard, each block in the flowchart or block diagrams may represent a module, segment, or portion of computer usable or readable program code, which comprises one or more executable instructions for implementing the specified function or functions. In some alternative implementations, the function or functions noted in the block may occur out of the order noted in the figures. For example, in some cases, two blocks shown in succession may be executed substantially concurrently, or the blocks may sometimes be executed in the reverse order, depending upon the functionality involved.

Further, the different block diagrams of software components, hardware components, and data structures illustrated in this disclosure are provided for purposes of depicting one manner in which the different advantageous embodiments can be implemented and not meant form that different embodiments may take. For example, some of the block diagrams illustrate functional blocks that may be combined or subdivided in software implementations. Also, the hardware and architecture illustrated in these examples may be varied in different advantageous embodiments. Also, the different examples of graphical user interfaces are presented for purposes of illustrating one manner in which a user interface may be implemented. These examples also are not meant to limit the manner in which different advantageous embodiments may be implemented.

The different advantageous embodiments can take the form of an entirely hardware-based embodiment, an entirely software-based embodiment or an embodiment containing both hardware and software elements. Some embodiments are implemented in software, which includes but is not limited to forms, such as, for example, firmware, resident software, and microcode.

Furthermore, the different embodiments can take the form of a computer program product accessible from a computer-usable or computer-readable medium providing program code for use by or in connection with a computer or any device or system that executes instructions. For the purposes of this disclosure, a computer-usable or computer readable medium can generally be any tangible apparatus that can contain, store, communicate, propagate, or transport the program for use by or in connection with the instruction execution system, apparatus, or device.

The computer usable or computer readable medium can be, for example, without limitation an electronic, magnetic, optical, electromagnetic, infrared, or semiconductor system, or a propagation medium. Non limiting examples of a computer-readable medium include a semiconductor or solid state memory, magnetic tape, a removable computer diskette, a random access memory (RAM), a read-only memory (ROM), a rigid magnetic disk, a floppy magnetic disk, and an optical disk. Optical disks may include compact disk - read only memory (CD-ROM), compact disk - read/write (CD-R/W) and DVD.

Further, a computer-usable or computer-readable medium may contain or store a computer readable or usable program code such that when the computer readable or usable program code is executed on a computer, the execution of this computer readable or usable program code causes the computer to transmit another computer readable or usable program code over one or more communications links. Each communications link may be either wired or wireless.

A data processing system suitable for storing and/or executing computer readable or computer usable program code will include one or more processors coupled directly or indirectly to memory elements through a communications fabric, such as a system bus. The memory elements may include local memory employed during actual execution of the program code, bulk storage, and cache memories which provide temporary storage of at least some computer readable or computer usable program code to reduce the number of times code may be retrieved from bulk storage during execution of the code.

Input/output (or I/O) devices can be coupled to the system either directly or through intervening I/O controllers. These devices may include, for example, without limitation to keyboards, touch screen displays, and pointing devices. Different communications adapters may also be coupled to the system to enable the data processing system to become coupled to other data processing systems or remote printers or storage devices through intervening private or public networks. Non-limiting examples are modems and network adapters are just a few of the currently available types of communications adapters.

### METHOD AND APPARATUS FOR LOADABLE SOFTWARE AIRPLANE PARTS (LSAP) DISTRIBUTION

Embodiments may be claimed as follows:
A1. A software aircraft part management apparatus, comprising: a library associated with a data processing system, the library being configured manage a set of software aircraft parts for a set of aircraft; a receiving module capable of receiving the plurality of software aircraft parts and sending the set of software aircraft parts to the library; a proxy server in communication with the library, wherein the proxy server is capable of serving a set of aircraft clients; an onboard electronic distribution system for an aircraft in the set of aircraft, wherein the onboard electronic distribution system is an aircraft client in the set of aircraft clients and is capable of receiving a software aircraft part for the aircraft from the library through the proxy server; and a portable software maintenance tool, wherein the portable software maintenance tool provides an alternate route to send the software aircraft part to the onboard electronic distribution system of the aircraft.
A2. The software aircraft part management apparatus of claim A1, wherein the library being configure to create a crate containing the software aircraft part and wherein the software aircraft part is sent to the onboard electronic distribution system in the crate.
A3. The software aircraft part management apparatus of claim A1, wherein the proxy server is associated with the data processing system.
A4. The software aircraft part management apparatus of claim A1, wherein the portable software maintenance tool connects to the proxy server to receive the software aircraft part, is moved onto the aircraft containing the onboard electronic distribution system with the software aircraft part, and connects to the onboard software distribution system to transfer the software aircraft part to the onboard electronic distribution system.
A5. The software aircraft part management apparatus of claim A1, wherein the onboard electronic distribution system downlinks data from a set of line replaceable units on the aircraft to the proxy server to form downlink data and wherein the proxy server sends the downlink data to the library for storage.
A6. The software aircraft part management apparatus of claim A1, wherein the software aircraft part is moved from the library to the onboard electronic distribution system in a crate.
A7. A computer implemented method for managing a plurality of software aircraft parts, the computer implemented method comprising: storing a software aircraft part in a library; identifying an aircraft for the software aircraft part to form an identified aircraft; sending the software aircraft part from the library to a proxy server; and sending the software aircraft part from the proxy server to an onboard electronic distribution system on the identified aircraft.
A8. The computer implemented method of claim A7, wherein the step of sending the software aircraft part from the proxy server to an onboard electronic distribution system on the identified aircraft comprises: sending the software aircraft part from the proxy server to the onboard electronic distribution system on the identified aircraft using a communications link.
A9. The computer implemented method of claim A7, wherein the step of sending the software aircraft part from the proxy server to an onboard electronic distribution system on the identified aircraft comprises: sending the software aircraft part from the proxy server to the onboard electronic distribution system on the identified aircraft using a portable software maintenance tool.
A10. The computer implemented method of claim A7, wherein the storing step comprises: receiving the software aircraft part from a supplier to form a received software aircraft part; processing the software aircraft part to from a processed software aircraft part; and storing the processed software aircraft part in the library.
A11. The computer implemented method of claim A7 further comprising: sending a command to the onboard electronic distribution system from the library through the proxy server to download data from the aircraft; and receiving the data at the library through the proxy server in response to sending the command.
A12. The computer implemented method of claim A7 further comprising: sending the software aircraft part from the library to a software maintenance tool on a portable computer; moving the portable computer with the software aircraft part to the aircraft; establishing a communications link between the software maintenance tool with the onboard electronic distribution system on the aircraft after moving the portable computer to the aircraft to form an established communications link; and sending the software aircraft part from the software maintenance tool to the onboard electronic distribution system through the established communications link.

A computer implemented method and apparatus for managing software aircraft parts. A software aircraft part management apparatus comprises a library, a receiving module, a proxy server, an onboard electronic distribution system on an aircraft, and a portable software maintenance tool. The library on the ground data processing system stores and manages software aircraft parts for aircraft. The receiving module is capable of receiving the software aircraft parts from suppliers and sending the software aircraft parts to the library. The proxy server is in communication with the library and is capable of distributing software to a plurality of aircraft clients. The onboard electronic distribution system is an aircraft client and is capable of receiving software aircraft parts for the aircraft from the library through the proxy server. The portable software maintenance tool provides an alternate route to send the software aircraft part to the onboard electronic distribution system for the aircraft.

### CRATE TOOL

Embodiments may be claimed as follows:
B1. A computer implemented method for processing software aircraft parts, the computer implemented method comprising: receiving an incoming crate containing a software aircraft part from a source outside of a software aircraft part management apparatus; validating a set of signatures for the incoming crate and the software aircraft part; responsive to the set of signatures being valid, unpacking the incoming crate; displaying contents of the incoming crate; unpacking the crate to obtain the software aircraft part; responsive to a request to upload the software aircraft part to a library in the software aircraft part management apparatus, determining whether the software aircraft part meets a policy; responsive to the software aircraft part meeting the policy, signing the software aircraft part to form a signed software aircraft part; placing the signed software aircraft part in a crate, signing the crate containing the signed software aircraft part to form a signed crate wherein signatures for the signed software aircraft part and the signed crate are different from the set of signatures in the incoming crate; and sending the signed crate to the library in the software aircraft part management apparatus.
B2. The computer implemented method of claim B1 further comprising: identifying metadata for the software aircraft part and other configuration items.
B3. The computer implemented method of claim B1, wherein the software aircraft part is a first signed software aircraft part and the signed software aircraft part is signed using a different signature from the first signed software aircraft part.
B4. The computer implemented method of claim B1, wherein the signatures for the signed software aircraft part or the crate are from a manufacturer, an airline, or a supplier.
B5. The computer implemented method of claim B1, wherein the storing step comprises: storing the software aircraft part in a directory in a file system.
B6. The computer implemented method of claim B1 further comprising: displaying a user interface capable of receiving user input to perform operations on a plurality of stored software aircraft parts.
B7. A computer implemented method for processing configuration items, the computer implemented method comprising: receiving a crate containing a configuration item to form a received crate; determining whether a set of signatures for the crate and the configuration item are valid; and responsive to a determination that the set of signatures are valid, saving the configuration item.
B8. The computer implemented method of claim B7 further comprising: determining whether the configuration item is valid.
B9. The computer implemented method of claim B7, wherein the step of determining whether the configuration item is valid comprises: comparing the configuration item to a policy.
B10. The computer implemented method of claim B9, wherein the configuration item is a software aircraft part and the policy is a software aircraft part standard.
B11. The computer implemented method of claim B7 further comprising: responsive to a user input to upload a valid configuration item, signing the valid configuration item; placing the valid configuration item in the crate; signing the crate; and sending the crate to a library in a software aircraft part management apparatus.
B12. The computer implemented method of claim B7 further comprising: organizing a plurality of configuration items including the configuration item in a file system in response to a user input.
B13. The computer implemented method of claim B7 further comprising: displaying a user interface capable of receiving user input to manipulate a set of configuration items.
B14. The computer implemented method of claim B7 further comprising: displaying a user interface capable of supporting and indicating the dynamic release/distribution status of a set of configuration items.
B15. The computer implemented method of claim B7, wherein the set of signatures comprises a first signature for the configuration item and a second signature for the crate.
B16. The computer implemented method of claim B7, wherein the crate contains a primary configuration item and a set of additional configuration items.
B17. A data processing system comprising: a bus; a storage device connected to the bus, wherein the storage device includes program code; a processor unit connected to the bus, wherein the processor unit executes the program code to receive an incoming crate containing a software aircraft part from a source outside of a software aircraft part management apparatus; validate a set of signatures for the incoming crate and the software aircraft part; unpack the incoming crate in response to the set of signatures being valid; display contents of the incoming crate; store the software aircraft part; determine whether the software aircraft part meets a policy in response to a request to upload the software aircraft part to a library in the software aircraft part management apparatus; sign the software aircraft part to form a signed software aircraft part in response to the software aircraft part meeting the policy; place the signed software aircraft part in a crate; signing the crate containing the signed software aircraft part to form a signed crate wherein signatures for the signed software aircraft part and the signed crate are different from the set of signatures in the incoming crate; and send the signed crate to the library in the software aircraft part management apparatus.
B18. The data processing system of claim B17, wherein the processor unit further executes the program code to identify metadata for the software aircraft part.
B19 The data processing system of claim B17, wherein the policy is an industry standard for software aircraft parts.
B20. The data processing system of claim B17, wherein the signatures for the signed software aircraft part and the signed crate are from an airline, a supplier, or a manufacturer.
B21. The data processing system of claim B17, wherein in executing the program code to store the software aircraft part, the processor unit executes the program code to store the software aircraft part in a directory in a file system.

A computer implemented method, apparatus, and computer program product for processing software aircraft parts. A crate containing a software aircraft part is received from a source. Signatures are validated for the crate and the software aircraft part. If the signatures are valid, the crate is unpacked. The contents of the incoming crate are displayed. The software aircraft part is unpacked. Responsive to a request to upload the stored part to a library in the software aircraft part management apparatus, a determination is made as to whether the stored part meets a policy. If the stored part meets the policy, the part is signed. The signed part is placed in a crate and is signed to form a signed crate wherein signatures for the signed software aircraft part and the signed crate are different from the set of signatures in the incoming crate. The signed crate is sent to the library.

### A PROXY SERVER FOR DISTRIBUTING SOFTWARE AIRCRAFT PARTS

Embodiments may be claimed as follows:
C1. A computer implemented method for managing software aircraft parts, the computer implemented method comprising: retrieving a set of software aircraft parts and metadata about the set of software aircraft parts from a library in an aircraft network data processing system to form a set of retrieved software aircraft parts; storing the set of software aircraft parts in a file system; storing the metadata in a database; sending the set of software aircraft parts and the metadata to an onboard electronic distribution system, a communications link between an on ground component interface, and the onboard electronic distribution system; and maintaining status information about activity on the communications link.
C2. The computer implemented method of claim C1 further comprising: sending the status information to the library.
C3. The computer implemented method of claim C2, wherein the status information comprises an identification of whether a software aircraft part in the set of software aircraft parts is ready for installation in a line replaceable unit on an aircraft.
C4. The computer implemented method of claim C1, wherein the set of software aircraft parts is a first set of software aircraft parts, the metadata is first metadata, the onboard electronic distribution system is a first onboard electronic distribution system and the communications link is a first communications link and further comprising: sending a second set of software aircraft parts and second metadata to a second onboard electronic distribution system through a second communications link between the on ground component interface and the second onboard electronic distribution system simultaneously with sending the set of software aircraft parts and the metadata to the onboard electronic distribution system.
C5. The computer implemented method of claim C1 further comprising: receiving a set of commands from the library to form a received set of commands; sending the received set of commands to a second onboard electronic distribution system through a second communications link between the on ground component interface and the second onboard electronic distribution system.
C6. The computer implemented method of claim C5, wherein the set of commands comprises at least one of a delete command and a downlink command.
C7. The computer implemented method of claim C5 further comprising: receiving downlink data through the second communications link between the on ground component interface and the second onboard electronic distribution system; storing the downlink data in the file system to form stored downlink data; and sending the stored downlink data to the library.
C8. An apparatus comprising: a file system; a database; a set of software aircraft parts stored in the file system; a set of commands stored in the database; an on ground component capable of exchanging information with a plurality of onboard electronic distribution systems on a plurality of aircraft; a control process, wherein the control process is capable of receiving the set of commands and the set of software aircraft parts from a library and sending the set of commands and the set of software aircraft parts to the plurality of aircraft; and a data processing system, wherein the file system, the database, the set of software aircraft parts, the set of commands, the on ground component, and the control process are software components on the data processing system.
C9. The apparatus of claim C8, wherein the control process is further capable of sending the set of commands and the set of software aircraft parts to a software management tool on a portable data processing system.
C10. The apparatus of claim C8, wherein the on ground component is capable of receiving downlink data and storing the downlink data in the file system.
C11. The apparatus of claim C8, wherein the control process is capable of transferring the downlink data from the file system to the library.
C12. The apparatus of claim C8, wherein a software aircraft part in the set of software aircraft parts is received in a crate from the library.
C13. The apparatus of claim C8, wherein the apparatus is located at an airport or a maintenance facility.
C14. A computer program product comprising: a computer readable media; program code, stored on the computer readable media, for retrieving a set of software aircraft parts and metadata about the set of software aircraft parts from a library in an aircraft network data processing system to form a set of retrieved software aircraft parts; program code, stored on the computer readable media, for storing the set of software aircraft parts in a file system; program code, stored on the computer readable media, for storing the metadata in a database; program code, stored on the computer readable media, for sending the set of software aircraft parts and the metadata to an onboard electronic distribution system, a communications link between an on ground component interface, and the onboard electronic distribution system; and program code, stored on the computer readable media, for maintaining status information about activity on the communications link.
C15. The computer program product of claim C14 further comprising: program code, stored on the computer readable media, for sending the status information to the library.
C16. The computer program product of claim C15, wherein the status information comprises an identification of whether a software aircraft part in the set of software aircraft parts is ready for installation in a line replaceable unit on an aircraft.
C17. The computer program product of claim C14, wherein the set of software aircraft parts is a first set of software aircraft parts, the metadata is first metadata, the onboard electronic distribution system is a first onboard electronic distribution system and the communications link is a first communications link and further comprising: program code, stored on the computer readable media, for sending a second set of software aircraft parts and second metadata to a second onboard electronic distribution system through a second communications link between the on ground component interface and the second onboard electronic distribution system simultaneously with sending the set of software aircraft parts and the metadata to the onboard electronic distribution system.
C18. The computer program product of claim C14 further comprising: program code, stored on the computer readable media, for receiving a set of commands from the library to form a received set of commands; program code, stored on the computer readable media, for sending the received set of commands to a second onboard electronic distribution system through a second communications link between the on ground component interface and the second onboard electronic distribution system.
C19. The computer program product of claim C18, wherein the set of commands comprises at least one of a delete command and a downlink command.
C20. The computer program product of claim C18 further comprising: program code, stored on the computer readable media, for receiving downlink data through the second communications link between the on ground component interface and the second onboard electronic distribution system; program code, stored on the computer readable media, for storing the downlink data in the file system to form stored downlink data; and program code, stored on the computer readable media, for sending the stored downlink data to the library.

A computer implemented method, apparatus, and computer program product for managing software aircraft parts. In one advantageous embodiment, a method includes retrieving a set of software aircraft parts and metadata about the set of software aircraft parts from a library in an aircraft network data processing system to form a set of retrieved software aircraft parts. The set of software aircraft parts is stored in a file system. Metadata is stored in a database. The set of software aircraft parts and the metadata is sent to an onboard electronic distribution system, a communications link between an on ground component interface, and the onboard electronic distribution system. Status information about activity on the communications link is maintained.

### METHOD AND APPARATUS FOR PROCESSING COMMANDS IN AN AIRCRAFT NETWORK

Embodiments may be claimed as follows:
D1. A computer implemented method for processing commands in a network data processing system, the computer implemented method comprising: creating a set of commands for an aircraft in a plurality of aircrafts; storing the set of commands in a set of queues in a library in the network data processing system to form a stored set of commands; responsive to an event, sending the stored set of commands to a proxy server application executing on the network data processing system to form a distributed set of commands; establishing a connection between the proxy server application and an onboard electronic distribution system executing on an aircraft data processing system on the aircraft; requesting the distributed set of commands from the proxy server application by the onboard electronic distribution system; receiving the distributed set of commands from the proxy server application by the onboard electronic distribution system to form a received set of commands; processing the received set of commands by the onboard electronic distribution system to form a processed set of commands; and forwarding a set of software aircraft parts to a set of target data processing systems on the aircraft using the processed set of commands if the set processed of commands are a set of uplink commands.
D2. The computer implemented method of claim D1, wherein the processing step comprises: identifying a command type for a command in the set of commands to form an identified command; requesting a corresponding software aircraft part in the set of software aircraft parts if the command is an uplink command for the corresponding software aircraft part to form a requested software aircraft part; and receiving the requested software aircraft part.
D3. The computer implemented method of claim D1, wherein the distributed set of commands is sent in a set of crates, wherein each crate in the set of crates is signed with a digital signature.
D4. The computer implemented method of claim D3, wherein the processing step includes: validating the digital signature for the each crate in the set of crates.
D5. The computer implemented method of claim D2, wherein the processing step further comprises: requesting downlink data from the onboard electronic system if the identified command is a downlink command.
D6. The computer implemented method of claim D5 further comprising: retrieving, by the onboard electronics distribution system, the data from a selected data processing system on the aircraft to form retrieved data; placing, by the onboard electronic distribution system, the retrieved data in a crate to form the downlink data; sending the downlink data from the onboard electronic distribution system to the proxy server over the connection to form received downlink data; and sending the received downlink data to the library.
D7. The computer implemented method of claim D2, wherein the processing step comprises: identifying a data processing system to form a target data processing system if the identified command is a delete command; and sending the identified command to the target data processing system to deleted a resource on the target data processing system.
D8. A computer implemented method for processing commands, the computer implemented method comprising: identifying a set of commands in a library in a network data processing system to form an identified set of commands; sending the identified set of commands to a proxy server application executing on the network data processing system to form a distributed set of commands; establishing a connection between the proxy server application and an onboard electronic distribution system executing on an aircraft data processing system on an aircraft; sending the distributed set of commands from the proxy server application to the onboard electronic distribution system to form a received set of commands over the connection; processing the received set of commands by the onboard electronic distribution system to form a processed set of commands; and forwarding a stored set of software aircraft parts located on the aircraft data processing system to a set of target data processing systems on the aircraft using the processed set of commands if the processed set of commands is a set of uplink commands.
D9. The computer implemented method of claim D8 further comprising: sending the set of software aircraft parts to the aircraft data processing system to form the stored set of software aircraft parts.
D10. The computer implemented method of claim D8, wherein the processing step comprises: identifying a command type for a command in the set of commands to form an identified command; and executing the identified command.
D11. The computer implemented method of claim D10, wherein the identified command is a delete command and wherein the executing step comprises: deleting a corresponding software aircraft part from the set of target data processing systems.
D12. The computer implemented method of claim D10, wherein the identified command is a downlink command and wherein the executing step comprises: downlinking data from a selected target data processing system in the set of target data processing systems to the library through the proxy server application.
D13. The computer implemented method of claim D8, wherein the step of sending the distributed set of commands from the proxy server application to the onboard electronic distribution system to form the received set of commands over the connection comprises: sending the distributed set of commands from the proxy server application to the onboard electronic distribution system through a software management tool executing on a portable data processing system to form a received set of commands over the connection.
D14. A computer program product comprising: a computer readable media; program code, stored on the computer readable media, for creating a set of commands for an aircraft in a plurality of aircrafts; program code, stored on the computer readable media, for storing the set of commands in a set of queues in a library in the network data processing system to form a stored set of commands; program code, stored on the computer readable media, responsive to an event, for sending the stored set of commands to a proxy server application executing on the network data processing system to form a distributed set of commands; program code, stored on the computer readable media, for establishing a connection between the proxy server application and an onboard electronic distribution system executing on an aircraft data processing system on the aircraft; program code, stored on the computer readable media, for requesting the distributed set of commands from the proxy server application by the onboard electronic distribution system; program code, stored on the computer readable media, for receiving the distributed set of commands from the proxy server application by the onboard electronic distribution system to form a received set of commands; program code, stored on the computer readable media, for processing the received set of commands by the onboard electronic distribution system to form a processed set of commands; and program code, stored on the computer readable media, for forwarding a set of software aircraft parts to a set of target data processing systems on the aircraft using the processed set of commands if the set processed of commands are a set of uplink commands.
D15. The computer program product of claim D14, wherein program code, stored on the computer readable media, for processing the received set of commands by the onboard electronic distribution system to form the processed set of commands comprises: program code, stored on the computer readable media, for identifying a command type for a command in the set of commands to form an identified command; program code, stored on the computer readable media, for requesting a corresponding software aircraft part in the set of software aircraft parts if the command is an uplink command for the corresponding software aircraft part to form a requested software aircraft part; and program code, stored on the computer readable media, for receiving the requested software aircraft part.
D16. The computer program product of claim D14, wherein the distributed set of commands is sent in a set of crates, wherein each crate in the set of crates is signed with a digital signature.
D17. The computer program product of claim D16, wherein program code, stored on the computer readable media, for processing the received set of commands by the onboard electronic distribution system to form the processed set of commands includes: program code, stored on the computer readable media, for validating the digital signature for the each crate in the set of crates.
D18. The computer program product of claim D15, wherein program code, stored on the computer readable media, for processing the received set of commands by the onboard electronic distribution system to form the processed set of commands further comprises: program code, stored on the computer readable media, for requesting downlink data from the onboard electronic system if the identified command is a downlink command.
D19. The computer program product of claim D18 further comprising: program code, stored on the computer readable media, for retrieving, by the onboard electronics distribution system, the data from a selected data processing system on the aircraft to form retrieved data; program code, stored on the computer readable media, for placing, by the onboard electronic distribution system, the retrieved data in a crate to form the downlink data; program code, stored on the computer readable media, for sending the downlink data from the onboard electronic distribution system to the proxy server over the connection to form received downlink data; and program code, stored on the computer readable media, for sending the received downlink data to the library.
D20. The computer program product of claim D15, wherein program code, stored on the computer readable media, for processing the received set of commands by the onboard electronic distribution system to form the processed set of commands comprises: program code, stored on the computer readable media, for identifying a data processing system to form a target data processing system if the identified command is a delete command; and program code, stored on the computer readable media, for sending the identified command to the target data processing system to deleted a resource on the target data processing system.

A method, apparatus, and program code for processing commands in a network. A process creates a set of commands for an aircraft. The commands are in queues in a library in the network. Responsive to an event, the stored set of commands is sent to a proxy server application executing on the network data processing system. A connection is established between the proxy server application and an onboard electronic distribution system on an aircraft data processing system on the aircraft. The commands are requested by the onboard electronic distribution system. The distributed commands are received from the proxy server application by the onboard electronic distribution system. The received commands are processed by the onboard electronic distribution system and a set of software aircraft parts is forwarded to a set of target data processing systems on the aircraft using the processed set of commands if the commands are uplink commands.

### SOFTWARE MAINTENANCE TOOL

Embodiments may be claimed as follows:
E1. A computer implemented method for managing software aircraft parts, the computer implemented method comprising: establishing a connection between a portable data processing system and a source through a ground network to form an established connection; retrieving a set of uplink commands from the source through the established connection; retrieving a set of software aircraft parts corresponding to the set of uplink commands from the source through the established connection to form a set of retrieved software aircraft parts; storing the set of retrieved software aircraft parts in a portable data processing system to form a set of stored software aircraft parts; disconnecting the portable data processing system with the set of stored software aircraft parts from the ground network; connecting the portable data processing system with the set of stored software aircraft parts to an aircraft network in an aircraft; issuing an uplink command from the set of uplink commands to the aircraft network through an on ground component in the portable data processing system; and sending a stored software aircraft part corresponding to the uplink command to the aircraft network through the on ground component.
E2. The computer implemented method of claim E1 further comprising: receiving a set of downlink files from the aircraft network to form a set of received downlink files.
E3. The computer implemented method of claim E1 further comprising: identifying whether each software aircraft part in the plurality of software aircraft parts is successfully sent to the aircraft network to from a status; and sending the status to the source in response to a subsequent connection being established with the ground network.
E4. The computer implemented method of claim E1, wherein the sending step comprises: sending the stored software aircraft part to an onboard electronic distribution system on the aircraft network through the on ground component.
E5. The computer implemented method of claim E1 further comprising: controlling operation of the portable data processing system through a set of graphical user interfaces.
E6. The computer implemented method of claim E5 further comprising: creating the uplink command to send the stored software aircraft part on the portable data processing system to the aircraft network through a graphical user interface in the set of graphical user interfaces.
E7. The computer implemented method of claim E1 further comprising: receiving a software aircraft part from a portable media to form a received software aircraft part; and storing the received software aircraft part in the portable data processing system to form the stored software aircraft part.
E8. The computer implemented method of claim E7 further comprising: creating the uplink command to through the graphical user interface to send the stored software aircraft part to the aircraft network.
E9. The computer implemented method of claim E1 further comprising: storing the set of uplink command in the portable data processing system.
E10. The computer implemented method of claim E1, wherein step of retrieving the set of software aircraft parts corresponding to the uplink commands from the source through the established connection to form the set of retrieved software aircraft parts comprises: retrieving the set of software aircraft parts corresponding to the uplink commands in a set of crates from the source through the established connection to form the set of retrieved software aircraft parts.
E11. The computer implemented method of claim E1, wherein the source is selected from one of a library and a proxy server application.
E12. An apparatus comprising: a database capable of storing a set of commands; a file system capable of storing a set of software aircraft parts; a library service capable of communicating with a source selected from one of a library and a proxy server application; an on ground component capable of a direct connection with an aircraft network in an aircraft network; a manager, wherein the manager is capable of receiving the set of commands and the set of software aircraft parts from the source in a ground network through the library service, disconnecting from the source, and sending the set of commands and the set of software aircraft parts to the aircraft data processing system in the aircraft network through the on ground component; and a portable data processing system capable of establishing a communications link to the ground network and the aircraft network, wherein the library service, the on ground component, the database, and the file system are located on the portable data processing system.
E13. The apparatus of claim E12, wherein the manager comprises a plurality of views capable of presenting a graphical user interface used to initiate a transfer of the set of software aircraft parts to the aircraft data processing system.
E14. The apparatus of claim E13, wherein the plurality of views comprises at least one of an uplink command queue view, an uplink local inventory view, a downlinked files view, an events console view, and a retrieve from library view.
E15. The apparatus of claim E12 further comprising: the set of commands stored in the database; and the set of software aircraft parts stored in the file system.
E16. A computer program product comprising: computer recordable storage media; program code, stored on the computer recordable storage media, for establishing a connection between a portable data processing system and a source through a ground network to form an established connection; program code, stored on the computer recordable storage media, for retrieving a set of uplink commands from the source through the established connection; program code, stored on the computer recordable storage media, for retrieving a set of software aircraft parts corresponding to the set of uplink commands from the source through the established connection to form a set of retrieved software aircraft parts; program code, stored on the computer recordable storage media, for storing the set of retrieved software aircraft parts in a portable data processing system to form a set of stored software aircraft parts; program code, stored on the computer recordable storage media, for disconnecting the portable data processing system with the set of stored software aircraft parts from the ground network; program code, stored on the computer recordable storage media, for connecting the portable data processing system with the set of stored software aircraft parts to an aircraft network in an aircraft; program code, stored on the computer recordable storage media, for issuing an uplink command from the set of uplink commands to the aircraft network through an on ground component in the portable data processing system; and program code, stored on the computer recordable storage media, for sending a stored software aircraft part corresponding to the uplink command to the aircraft network through the on ground component.
E17. The computer program product of claim E16 further comprising: program code, stored on the computer recordable storage media, for receiving a set of downlink files from the aircraft network to form a set of received downlink files.
E18. The computer program product claim E16 further comprising: program code, stored on the computer recordable storage media, for identifying whether each software aircraft part in the plurality of software aircraft parts is successfully sent to the aircraft network to from a status; and program code, stored on the computer recordable storage media, for sending the status to the source in response to a subsequent connection being established with the ground network.
E19. The computer program product of claim E16, wherein the program code are stored the computer recordable storage media in a data processing system and wherein the program code were downloaded over a network from a remote data processing system.
E20. The computer program product of claim E16, wherein the program code are stored in the computer recordable storage media in a server data processing system and wherein the program code are downloaded over a network to a remote data processing system for use in another computer recordable medium with the remote data processing system.

A computer implemented method, apparatus, and computer program product for managing software aircraft parts. A connection is established between a portable data processing system and a source through a ground network. Uplink commands are retrieved from the source through the established connection. Software aircraft parts corresponding to the uplink commands are retrieved from the source through the established connection. The retrieved software aircraft parts are stored in a portable data processing system. The portable data processing system is disconnected from the ground network. The portable data processing system is connected to an aircraft network in an aircraft. An uplink command is issued from the uplink commands to the aircraft network through an on ground component in the portable data processing system. A stored software aircraft part corresponding to the uplink command is sent to the aircraft network through the on ground component.

### ONBOARD ELECTRONIC DISTRIBUTION SYSTEM

Embodiments may be claimed as follows:
F1. A computer implemented method for transferring information with an aircraft, the computer implemented method comprising: establishing a connection between an onboard electronic distribution system executing in an aircraft data processing system in the aircraft and an on ground component; responsive to a request for a command from the on ground component made through the connection, identifying the command for execution by the onboard electronic distribution system to form an identified command; sending the identified command to the onboard electronic distribution system from the on ground component; assigning a transaction identifier to the command; maintaining a status of a transaction associated with the command on the onboard electronic distribution system and the on ground component using the transaction identifier; initiating an uplink by the on ground component; sending a software aircraft part to the onboard electronic distribution system from the on ground component to perform the uplink; and storing a status of a transfer of the software aircraft part on ground component.
F2. The computer implemented method of claim F1 further comprising: responsive to another request to send a downlink file to the on ground component sent from the onboard electronic distribution system to the on ground component, determining whether to send the downlink file; responsive to a determination to send the downlink file to the on ground component, sending the downlink file to the on ground component.
F3. The computer implemented method of claim F1, wherein the step of sending the software aircraft part comprises: sending an unsent portion of the software aircraft part to the onboard electronic distribution system if the status indicates that an unsent part of the software aircraft part is present.
F4. The computer implemented method of claim F2, wherein the step of sending the downlink file to the on ground component comprises: sending an unsent portion of the downlink file to the on ground component; appending the unsent portion of the downlink file received by the on ground component to a partial downlink file corresponding to the downlink file.
F5. The computer implemented method of claim F4 further comprising: identifying the unsent portion of the downlink file using a corresponding status of transfer for the downlink file.
F6. The computer implemented method of claim F1 further comprising: storing the software aircraft part in a storage device in the aircraft data processing system on which the onboard electronic distribution is located.
F7. The computer implemented method of claim F2, wherein the downlink file comprises data generated by a line replaceable unit in the aircraft.
F8. The computer implemented method of claim F7, wherein the line replaceable unit is selected from one of a flight management system, an autopilot, an in flight entertainment system, a communications system, a navigation system, a flight controller, a flight recorder, and a collision avoidance system.
F9. The computer implemented method of claim F1, wherein the software aircraft part is for use in a line replaceable unit in the aircraft.
F10. A computer program product comprising: a computer readable media; program code, stored on the computer readable media, for establishing a connection between an onboard electronic distribution system executing in an aircraft data processing system in the aircraft and an on ground component; program code, stored on the computer readable media, responsive to a request for a command from the onboard electronic distribution system made through the connection, for identifying the command for execution by the onboard electronic distribution system to form an identified command; program code, stored on the computer readable media, for sending the identified command to the onboard electronic distribution system from the on ground component; program code, stored on the computer readable media, for assigning a transaction identifier to the command; program code, stored on the computer readable media, for maintaining a status of a transaction associated with the command on the onboard electronic distribution system and the on ground component using the transaction identifier; program code, stored on the computer readable media, for initiating an uplink by the onboard electronic distribution system; program code, stored on the computer readable media, for sending a software aircraft part to the onboard electronic distribution system from the on ground component to perform the uplink; and program code, stored on the computer readable media, for storing a status of a transfer of the software aircraft part.
F11. The computer program product of claim F10 further comprising: program code, stored on the computer readable media, responsive to another request to send a downlink file to the on ground component sent from the onboard electronic distribution system to the on ground component, for determining whether to send the downlink file; program code, stored on the computer readable media, responsive to a determination to send the downlink file to the on ground component, for sending the downlink file to the on ground component.
F12. The computer program product of claim F10, wherein the program code, stored on the computer readable media, for sending the software aircraft part to the onboard electronic distribution system from the on ground component to perform the uplink comprises: program code, stored on the computer readable media, for sending an unsent portion of the software aircraft part to the onboard electronic distribution system if the status indicates that an unsent part of the software aircraft part is present.
F13. The computer program product of claim F11, wherein the program code, stored on the computer readable media, for sending the downlink file to the on ground component comprises: program code, stored on the computer readable media, for sending an unsent portion of the downlink file to the on ground component; program code, stored on the computer readable media, for appending the unsent portion of the downlink file received by the on ground component to a partial downlink file corresponding to the downlink file.
F14. The computer program product of claim F13 further comprising: program code, stored on the computer readable media, for identifying the unsent portion of the downlink file using a corresponding status of transfer for the downlink file.
F15. The computer program product of claim F10 further comprising: program code, stored on the computer readable media, for storing the software aircraft part in a storage device in the aircraft data processing system on which the onboard electronic distribution is located.
F16. The computer program product of claim F11, wherein the downlink file comprises data generated by a line replaceable unit in the aircraft.
F17. An apparatus comprising: an on ground component; an onboard electronic distribution system capable of receiving a command from the on ground component; requesting a software aircraft part corresponding to an uplink command in response to receiving the uplink command from the on ground component receiving the software aircraft part from the on ground component in response to requesting the software aircraft part to form a received software aircraft part; and storing the software aircraft part; a data processing system, wherein the on ground component executes on the data processing system; and an aircraft data processing system, wherein the onboard electronic distribution system executes on the aircraft data processing system.
F18. The apparatus of claim F17, wherein the onboard electronic distribution system is capable of sending the request to the on ground component to send a downlink file to the on ground component and sending the downlink file to the on ground component in response to an indication that the on ground component is capable of receiving the downlink file.
F19. The apparatus of claim F17 further comprising: an aircraft network in an aircraft, wherein the aircraft data processing system is located in the aircraft network.
F20. The apparatus of claim F17 further comprising: a set of line replaceable units in the aircraft, wherein the software aircraft part is for use in one of a line replaceable unit in the set of line replaceable units in the aircraft.

A computer implemented method, apparatus, and computer program product for transferring information with an aircraft. A connection is established between an onboard electronic distribution system executing in an aircraft data processing system in the aircraft and an on ground component. Responsive to a request for a command from the on ground component, the command for execution is identified. The identified command is sent to the onboard electronic distribution system from an on ground component. A transaction identifier is assigned to the command. A transaction associated with the command is maintained on the onboard electronic distribution system and the on ground component using the transaction identifier. An uplink is initiated by the on ground component. A software aircraft part is sent to the onboard electronic distribution system from the on ground component to perform the uplink. A status of a transfer of the software aircraft part on ground component is stored.

### SOFTWARE AIRCRAFT PART LIBRARY

Embodiments may be claimed as follows:
G1. A computer implemented method for managing software aircraft parts, the computer implemented method comprising: receiving a software aircraft part at a library to form a received software aircraft part; storing the received software aircraft part in a storage in the library with a plurality of software aircraft parts; providing a user interface system to manipulate the plurality of software aircraft parts in the library; responsive to receiving a user input from the user interface system to uplink a selected software aircraft part from the plurality of software aircraft parts in the library to a target aircraft data processing system, creating a command to send the selected software aircraft part to an aircraft in which the target aircraft data processing system is located to form an uplink command; storing the uplink command in a queue in the storage in the library to form a stored uplink command; distributing the stored uplink command to a proxy server application in response to a request for commands from the proxy server application; and responsive to receiving a request for the selected software aircraft part from the proxy server application processing the stored uplink command, sending the selected software aircraft part to the proxy server application.
G2. The computer implemented method of claim G1, wherein the distributing step comprises: responsive to a presence of a connection to the proxy server application, identifying the uplink command for the proxy server application; creating a command data structure for the uplink command; sending the command data structure to the proxy server application, wherein the proxy server application begins processing the commands using the command data structure; and responsive to another request for the uplink command received after sending the command data structure, sending the uplink command to the proxy server application.
G3. The computer implemented method of claim G1 further comprising: distributing the stored uplink command to a software management tool in response to a request for the commands from the software management tool.
G4. The computer implemented method of claim G1 further comprising: storing the software aircraft part in a crate in a storage device.
G5. The computer implemented method of claim G4, wherein the software aircraft part is digitally signed and the crate is digitally signed.
G6. The computer implemented method of claim G1, wherein the software aircraft part is stored in a files system in the storage and wherein the queue is located in a database in the storage.
G7. The computer implemented method of claim G1 further comprising: deleting a set of aircraft parts from the plurality of software aircraft parts in response to another user input.
G8. The computer implemented method of claim G1 further comprising: receiving status information on uplinks of the software aircraft parts to form received status information; and storing the received status information.
G9. An apparatus comprising: a file system located on a storage device, wherein the file system stores a plurality of software aircraft parts; a database located on the storage device, wherein the database stores a plurality of commands used to manage the plurality of software aircraft parts; a management component capable of generating the plurality of commands; and a user interface system capable of receiving user input to operate the management component.
G10. The apparatus of claim G9, wherein the management component comprises a parts vault and a command dispatcher.
G11. The apparatus of claim G9, wherein the storage device is a set of hard disk drives.
G12. A computer comprising: a bus; a communications adapter connected to the bus; a memory connected to the bus, wherein computer usable program code is stored on the bus; and a processor unit connected to the bus, wherein the processor unit executes the computer usable program code to receive a software aircraft part at a library to form a received software aircraft part; store the received software aircraft part in a storage in the library with a plurality of software aircraft parts; provide a user interface system to manipulate the plurality of software aircraft parts in the library; create a command to send the selected software aircraft part to an aircraft in which the target aircraft data processing system is located to form an uplink command in response to receiving a user input from the user interface system to uplink a selected software aircraft part from the plurality of software aircraft parts in the library to a target aircraft data processing system; store the uplink command in a queue in the storage in the library to form a stored uplink command; distribute the stored uplink command to a proxy server application in response to a request for commands from the proxy server application; and send the selected software aircraft part to the proxy server application in response to receiving a request for the selected software aircraft part from the proxy server application processing the stored uplink command.
G13. The computer of claim G12, wherein in executing the computer usable program code to distribute the stored uplink command to the proxy server application in response to the request for commands from a proxy server application, the processor unit executes the compute usable program code to identify the uplink command for the proxy server application in response to a presence of a connection to the proxy server application; create a command data structure for the uplink command; send the command data structure to the proxy server application, wherein the proxy server application begins processing the commands using the command data structure; and send the uplink command to the proxy server application in response to another request for the uplink command received after sending the command data structure.
G14. The computer claim G12, wherein the processor unit further executes the computer usable program code to distribute the stored uplink command to a software management tool in response to a request for the commands from the software management tool.
G15. A computer program product comprising: a computer recordable storage media; program code, stored on the computer recordable storage media, for receiving a software aircraft part at a library to form a received software aircraft part; program code, stored on the computer recordable storage media, for storing the received software aircraft part in a storage in the library with a plurality of software aircraft parts; program code, stored on the computer recordable storage media, for providing a user interface system to manipulate the plurality of software aircraft parts in the library; program code, stored on the computer recordable storage media, responsive to receiving a user input from the user interface system to uplink a selected software aircraft part from the plurality of software aircraft parts in the library to a target aircraft data processing system, for creating a command to send the selected software aircraft part to an aircraft in which the target aircraft data processing system is located to form an uplink command; program code, stored on the computer recordable storage media, for storing the uplink command in a queue in the storage in the library to form a stored uplink command; program code, stored on the computer recordable storage media, for distributing the stored uplink command to a proxy server application in response to a request for commands from the proxy server application; and computer program code, stored on the computer recordable storage media, responsive to receiving a request for the selected software aircraft part from the proxy server application processing the stored uplink command, for sending the selected software aircraft part to the proxy server application.
G16. The computer program product of claim G15, wherein the computer program code, stored on the computer recordable storage media, for distributing the stored uplink command to a proxy server application in response to a request for commands from a proxy server application comprises: computer program code, stored on the computer recordable storage media, responsive to a presence of a connection to the proxy server application, for identifying the uplink command for the proxy server application; computer program code, stored on the computer recordable storage media, for creating a command data structure for the uplink command; computer program code, stored on the computer recordable storage media, for sending the command data structure to the proxy server application, wherein the proxy server application begins processing the commands using the command data structure; and computer program code, stored on the computer recordable storage media, responsive to another request for the uplink command received after sending the command data structure, for sending the uplink command to the proxy server application.
G17. The computer program product of claim G15 further comprising: computer program code, stored on the computer recordable storage media, for distributing the stored uplink command to a software management tool in response to a request for the commands from the software management tool.
G18. The computer program product of claim G15 further comprising: computer program code, stored on the computer recordable storage media, for storing the software aircraft part in a crate in the storage device.
G19. The computer program product of claim G18, wherein the software aircraft part is digitally signed and the crate is digitally signed.
G20. The computer program product of claim G15, wherein the software aircraft part is stored in a files system in the storage and wherein the queue is located in a database in the storage.
G21. The computer program product of claim G15 further comprising: computer program code, stored on the computer recordable storage media, for deleting a set of aircraft parts from the plurality of software aircraft parts in response to another user input.
G22. The computer program product of claim G15 further comprising: computer program code, stored on the computer recordable storage media, for receiving status information on uplinks of the software aircraft parts to form received status information; and computer program code, stored on the computer recordable storage media, for storing the received status information.

A computer implemented method, apparatus, and computer program product for managing software aircraft parts. A software aircraft part is received at a library. The received part is stored in the library with other software aircraft parts. A user interface is provided to manipulate the software aircraft parts. Responsive to receiving a user input from the user interface to uplink a selected software aircraft part to a target aircraft data processing system, a command is created to send the selected part to an aircraft in which the target aircraft data processing system is located. The uplink command is stored in a queue in the storage in the library. The uplink command is distributed to a proxy server application in response to a request for commands. Responsive to receiving a request from the proxy server application processing the stored uplink command, the selected part is sent to the proxy server application.

The description of the different advantageous embodiments has been presented for purposes of illustration and description, and is not intended to be exhaustive or limited to the embodiments in the form disclosed. Many modifications and variations will be apparent to those of ordinary skill in the art. Further, different advantageous embodiments may provide different advantages as compared to other advantageous embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A computer implemented method for transferring information with an aircraft, the computer implemented method comprising:
establishing a connection between an onboard electronic distribution system executing in an aircraft data processing system in the aircraft and an on ground component;
responsive to a request for a command from the on ground component made through the connection, identifying the command for execution by the onboard electronic distribution system to form an identified command;
sending the identified command to the onboard electronic distribution system from the on ground component;
assigning a transaction identifier to the command;
maintaining a status of a transaction associated with the command on the onboard electronic distribution system and the on ground component using the transaction identifier;
initiating an uplink by the on ground component;
sending a software aircraft part to the onboard electronic distribution system from the on ground component to perform the uplink; and
storing a status of a transfer of the software aircraft part on ground component.

2. The computer implemented method of claim 1 further comprising:
responsive to another request to send a downlink file to the on ground component sent from the onboard electronic distribution system to the on ground component, determining whether to send the downlink file; and
responsive to a determination to send the downlink file to the on ground component, sending the downlink file to the on ground component.

3. The computer implemented method of claim 1, wherein the step of sending the software aircraft part comprises:
sending an unsent portion of the software aircraft part to the onboard electronic distribution system if the status indicates that an unsent part of the software aircraft part is present.

4. The computer implemented method of claim 2, wherein the step of sending the downlink file to the on ground component comprises:
sending an unsent portion of the downlink file to the on ground component; and
appending the unsent portion of the downlink file received by the on ground component to a partial downlink file corresponding to the downlink file.

5. The computer implemented method of claim 4 further comprising:
identifying the unsent portion of the downlink file using a corresponding status of transfer for the downlink file.

6. The computer implemented method of claim 1 further comprising:
storing the software aircraft part in a storage device in the aircraft data processing system on which the onboard electronic distribution is located.

7. The computer implemented method of claim 2, wherein the downlink file comprises data generated by a line replaceable unit in the aircraft.

8. The computer implemented method of claim 1, wherein the software aircraft part is for use in a line replaceable unit in the aircraft.

9. A computer program product comprising:
a computer readable media;
program code, stored on the computer readable media, for establishing a connection between an onboard electronic distribution system executing in an aircraft data processing system in the aircraft and an on ground component;
program code, stored on the computer readable media, responsive to a request for a command from the onboard electronic distribution system made through the connection, for identifying the command for execution by the onboard electronic distribution system to form an identified command;
program code, stored on the computer readable media, for sending the identified command to the onboard electronic distribution system from the on ground component;
program code, stored on the computer readable media, for assigning a transaction identifier to the command;
program code, stored on the computer readable media, for maintaining a status of a transaction associated with the command on the onboard electronic distribution system and the on ground component using the transaction identifier;
program code, stored on the computer readable media, for initiating an uplink by the onboard electronic distribution system;
program code, stored on the computer readable media, for sending a software aircraft part to the onboard electronic distribution system from the on ground component to perform the uplink; and
program code, stored on the computer readable media, for storing a status of a transfer of the software aircraft part.

10. The computer program product of claim 9 further comprising:
program code, stored on the computer readable media, responsive to another request to send a downlink file to the on ground component sent from the onboard electronic distribution system to the on ground component, for determining whether to send the downlink file; and
program code, stored on the computer readable media, responsive to a determination to send the downlink file to the on ground component, for sending the downlink file to the on ground component.

11. The computer program product of claim 9, wherein the program code, stored on the computer readable media, for sending the software aircraft part to the onboard electronic distribution system from the on ground component to perform the uplink comprises:
program code, stored on the computer readable media, for sending an unsent portion of the software aircraft part to the onboard electronic distribution system if the status indicates that an unsent part of the software aircraft part is present.

12. The computer program product of claim 10, wherein the program code, stored on the computer readable media, for sending the downlink file to the on ground component comprises:
program code, stored on the computer readable media, for sending an unsent portion of the downlink file to the on ground component; and
program code, stored on the computer readable media, for appending the unsent portion of the downlink file received by the on ground component to a partial downlink file corresponding to the downlink file.

13. The computer program product of claim 12 further comprising:
program code, stored on the computer readable media, for identifying the unsent portion of the downlink file using a corresponding status of transfer for the downlink file.

14. The computer program product of claim 9 further comprising:
program code, stored on the computer readable media, for storing the software aircraft part in a storage device in the aircraft data processing system on which the onboard electronic distribution is located.

15. The computer program product of claim 10, wherein the downlink file comprises data generated by a line replaceable unit in the aircraft.
